# EUROPEAN PATENT APPLICATION

(11) **EP 4 832 497 A2**
(43) Date of publication of application: **28.10.2026**
(21) Application number: 26189761.5
(22) Date of filing: 04.03.2024
(51) Int. Cl.: H04N 19/91

(54) **SIGNALING PREDICTED BVD/MVD SUFFIXES**

(30) Priority: 03.03.2023 US 202363449961 P
(62) Document number(s) of the earlier application(s) in accordance with Art. 76 EPC: 24716980.8 / 4 677 847
(71) Applicant: Ofinno, LLC, Reston, VA 20190 (US)
(72) Inventor: FILIPPOV, Alexey Konstantinovich, Reston, 20190 (US); RUFITSKIY, Vasily Alexeevich, Reston, 20190 (US); DINAN, Esmael Hejazi, Reston, 20190 (US)
(74) Representative: Westphal, Mussgnug & Partner, Patentanwälte mbB

(57) **Abstract**

A method includes obtaining, based on a first one or more symbols in a received bit stream, a prefix of a magnitude of a difference vector, the difference vector being a block vector difference or a motion vector difference. The method further includes determining, after obtaining the prefix and based on a status of a flag in the received bitstream, whether a suffix of the magnitude is derivable at a decoder without a second one or more symbols of a suffix of the magnitude being received in the bitstream, and whether, when the received bitstream includes the second one or more symbols, the second one or more symbols comprise at least one context-coded symbol. The method also includes obtaining the suffix of the difference vector in accordance with the determining and decoding a current block based on the difference vector.

## Description

### TECHNICAL FIELD

This application relates to the field of video coding / decoding.

### BRIEF DESCRIPTION OF THE DRAWINGS

Examples of several of the various embodiments of the present disclosure are described herein with reference to the drawings.
FIG. 1 illustrates an exemplary video coding/decoding system in which embodiments of the present disclosure may be implemented.
FIG. 2 illustrates an exemplary encoder in which embodiments of the present disclosure may be implemented.
FIG. 3 illustrates an exemplary decoder in which embodiments of the present disclosure may be implemented.
FIG. 4 illustrates an example quadtree partitioning of a coding tree block (CTB) in accordance with embodiments of the present disclosure.
FIG. 5 illustrates a corresponding quadtree of the example quadtree partitioning of the CTB in FIG. 4 in accordance with embodiments of the present disclosure.
FIG. 6 illustrates example binary and ternary tree partitions in accordance with embodiments of the present disclosure.
FIG. 7 illustrates an example quadtree + multi-type tree partitioning of a CTB in accordance with embodiments of the present disclosure.
FIG. 8 illustrates a corresponding quadtree + multi-type tree of the example quadtree + multi-type tree partitioning of the CTB in FIG. 7 in accordance with embodiments of the present disclosure.
FIG. 9 illustrates an example set of reference samples determined for intra prediction of a current block being encoded or decoded in accordance with embodiments of the present disclosure.
FIG. 10A illustrates the 35 intra prediction modes supported by HEVC in accordance with embodiments of the present disclosure.
FIG. 10B illustrates the 67 intra prediction modes supported by HEVC in accordance with embodiments of the present disclosure.
FIG. 11 illustrates the current block and reference samples from FIG. 9 in a two-dimensional *x*, *y* plane in accordance with embodiments of the present disclosure.
FIG. 12 illustrates an example angular mode prediction of the current block from FIG. 9 in accordance with embodiments of the present disclosure.
FIG. 13A illustrates an example of inter prediction performed for a current block in a current picture being encoded in accordance with embodiments of the present disclosure.
FIG. 13B illustrates an example horizontal component and vertical component of a motion vector in accordance with embodiments of the present disclosure.
FIG. 14 illustrates an example of bi-prediction, performed for a current block in accordance with embodiments of the present disclosure.
FIG. 15A illustrates an example location of five spatial candidate neighboring blocks relative to a current block being coded in accordance with embodiments of the present disclosure.
FIG. 15B illustrates an example location of two temporal, co-located blocks relative to a current block being coded in accordance with embodiments of the present disclosure.
FIG. 16 illustrates an example of IBC applied for screen content in accordance with embodiments of the present disclosure.
FIG. 17 illustrates an example implementation of a context-based adaptive binary arithmetic coding (CABAC) encoder in accordance with embodiments of the present disclosure.
FIG. 18A illustrates an example of IBC in accordance with embodiments of the present disclosure.
FIG. 18B illustrates example BVD candidates used to entropy encode a magnitude symbol of a BVD in accordance with embodiments of the present disclosure.
FIG. 18C illustrates an example of entropy encoding an indication of whether a value of a magnitude symbol of a BVD matches a value of the magnitude symbol of a BVD candidate used as a predictor of the BVD in accordance with embodiments of the present disclosure.
FIG. 18D illustrates an example of entropy decoding an indication of whether a value of a magnitude symbol of a BVD matches a value of the magnitude symbol of a BVD candidate used as a predictor of the BVD and using the indication to determine a magnitude symbol of the BVD in accordance with embodiments of the present disclosure.
FIG. 19A illustrates an example where the method for coding a BVD as described in FIG. 18 is applied to a sign symbol of the BVD in accordance with embodiments of the present disclosure.
FIG. 19B illustrates an example where the method for coding a BVD as described in FIG. 18 is applied to a sign symbol of the BVD in accordance with embodiments of the present disclosure.
FIG. 19C illustrates an example where the method for coding a BVD as described in FIG. 18 is applied to a sign symbol of the BVD in accordance with embodiments of the present disclosure.
FIG. 19D illustrates an example of entropy decoding an indication of whether a value of a sign symbol of a BVD matches a value of the sign symbol of a BVD candidate used as a predictor of the BVD and using the indication to determine a sign symbol of the BVD in accordance with embodiments of the present disclosure.
FIG. 20A and FIG. 20B illustrate example representations of a BVD.
FIG. 21 illustrates a representation of a BVD in accordance with embodiments of this disclosure.
FIG. 22A illustrates a flowchart for decoding a BVD, such as, for example, the BVD as in FIG. 21, in accordance with embodiments of this disclosure.
FIG. 22B illustrates a flowchart for encoding a BVD, such as, for example, the BVD as in FIG. 21, in accordance with embodiments of this disclosure.
FIG. 22C illustrates a flowchart of an aspect of the encoding method of FIG. 22B.
FIG. 23A and FIG. 23B illustrate another representation of a BVD in accordance with embodiments of this disclosure.
FIG. 24A illustrates a flowchart for decoding a BVD, such as, for example, the BVD as in FIG. 23A and FIG. 23B, in accordance with embodiments of this disclosure.
FIG. 24B illustrates a flowchart for encoding a BVD, such as, for example, the BVD as in FIG. 23A and FIG. 23B, in accordance with embodiments of this disclosure.
FIG. 24C illustrates a flowchart of an aspect of the encoding method of FIG. 24B.
FIG. 25A and FIG. 25B illustrate another representation of a BVD in accordance with embodiments of this disclosure.
FIG. 26A illustrates a flowchart for decoding a BVD, such as, for example, the BVD as in FIG. 25A and FIG. 25B, in accordance with embodiments of this disclosure.
FIG. 26B illustrates a flowchart for encoding a BVD, such as, for example, the BVD as in FIG. 25A and FIG. 25B, in accordance with embodiments of this disclosure.
FIG. 27A illustrates a flowchart of a method of decoding a BVD in accordance with embodiments of this disclosure.
FIG. 27B illustrates a flowchart of a method of encoding a BVD in accordance with embodiments of this disclosure.
FIG. 28 illustrates a block diagram of an example computer system in which embodiments of the present disclosure may be implemented.

### DETAILED DESCRIPTION

In the following description, numerous specific details are set forth in order to provide a thorough understanding of the disclosure. However, it will be apparent to those skilled in the art that the disclosure, including structures, systems, and methods, may be practiced without these specific details. The description and representation herein are the common means used by those experienced or skilled in the art to most effectively convey the substance of their work to others skilled in the art. In other instances, well-known methods, procedures, components, and circuitry have not been described in detail to avoid unnecessarily obscuring aspects of the disclosure.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in a figure. A process may correspond to a method, a function, a procedure, a subroutine, a subprogram, etc. When a process corresponds to a function, its termination can correspond to a return of the function to the calling function or the main function.

The term "computer-readable medium" includes, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

Furthermore, embodiments may be implemented by hardware, software, firmware, middleware, microcode, hardware description languages, or any combination thereof. When implemented in software, firmware, middleware or microcode, the program code or code segments to perform the necessary tasks (e.g., a computer-program product) may be stored in a computer-readable or machine-readable medium. A processor(s) may perform the necessary tasks.

Representing a video sequence in digital form may require a large number of bits. The data size of a video sequence in digital form may be too large for storage and/or transmission in many applications. Video encoding may be used to compress the size of a video sequence to provide for more efficient storage and/or transmission. Video decoding may be used to decompress a compressed video sequence for display and/or other forms of consumption.

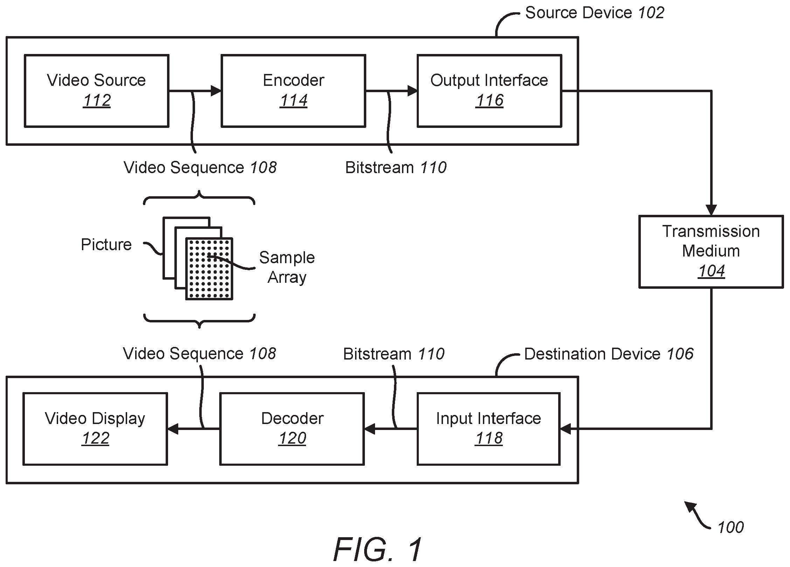

FIG. 1 illustrates an exemplary video coding/decoding system 100 in which embodiments of the present disclosure may be implemented. Video coding/decoding system 100 comprises a source device 102, a transmission medium 104, and a destination device 106. Source device 102 encodes a video sequence 108 into a bitstream 110 for more efficient storage and/or transmission. Source device 102 may store and/or transmit bitstream 110 to destination device 106 via transmission medium 104. Destination device 106 decodes bitstream 110 to display video sequence 108. Destination device 106 may receive bitstream 110 from source device 102 via transmission medium 104. Source device 102 and destination device 106 may be any one of a number of different devices, including a desktop computer, laptop computer, tablet computer, smart phone, wearable device, television, camera, video gaming console, set-top box, or video streaming device.

To encode video sequence 108 into bitstream 110, source device 102 may comprise a video source 112, an encoder 114, and an output interface 116. Video source 112 may provide or generate video sequence 108 from a capture of a natural scene and/or a synthetically generated scene. A synthetically generated scene may be a scene comprising computer generated graphics or screen content. Video source 112 may comprise a video capture device (e.g., a video camera), a video archive comprising previously captured natural scenes and/or synthetically generated scenes, a video feed interface to receive captured natural scenes and/or synthetically generated scenes from a video content provider, and/or a processor to generate synthetic scenes.

A shown in FIG. 1, a video sequence, such as video sequence 108, may comprise a series of pictures (also referred to as frames). A video sequence may achieve the impression of motion when a constant or variable time is used to successively present pictures of the video sequence. A picture may comprise one or more sample arrays of intensity values. The intensity values may be taken at a series of regularly spaced locations within a picture. A color picture typically comprises a luminance sample array and two chrominance sample arrays. The luminance sample array may comprise intensity values representing the brightness (or luma component, Y) of a picture. The chrominance sample arrays may comprise intensity values that respectively represent the blue and red components of a picture (or chroma components, Cb and Cr) separate from the brightness. Other color picture sample arrays are possible based on different color schemes (e.g., an RGB color scheme). For color pictures, a pixel may refer to all three intensity values for a given location in the three sample arrays used to represent color pictures. A monochrome picture comprises a single, luminance sample array. For monochrome pictures, a pixel may refer to the intensity value at a given location in the single, luminance sample array used to represent monochrome pictures.

Encoder 114 may encode video sequence 108 into bitstream 110. To encode video sequence 108, encoder 114 may apply one or more prediction techniques to reduce redundant information in video sequence 108. Redundant information is information that may be predicted at a decoder and therefore may not be needed to be transmitted to the decoder for accurate decoding of the video sequence. For example, encoder 114 may apply spatial prediction (e.g., intra-frame or intra prediction), temporal prediction (e.g., inter-frame prediction or inter prediction), inter-layer prediction, and/or other prediction techniques to reduce redundant information in video sequence 108. Before applying the one or more prediction techniques, encoder 114 may partition pictures of video sequence 108 into rectangular regions referred to as blocks. Encoder 114 may then encode a block using one or more of the prediction techniques.

For temporal prediction, encoder 114 may search for a block similar to the block being encoded in another picture (also referred to as a reference picture) of video sequence 108. The block determined during the search (also referred to as a prediction block) may then be used to predict the block being encoded. For spatial prediction, encoder 114 may form a prediction block based on data from reconstructed neighboring samples of the block to be encoded within the same picture of video sequence 108. A reconstructed sample refers to a sample that was encoded and then decoded. Encoder 114 may determine a prediction error (also referred to as a residual) based on the difference between a block being encoded and a prediction block. The prediction error may represent non-redundant information that may be transmitted to a decoder for accurate decoding of a video sequence.

Encoder 114 may apply a transform to the prediction error (e.g. a discrete cosine transform (DCT)) to generate transform coefficients. Encoder 114 may form bitstream 110 based on the transform coefficients and other information used to determine prediction blocks (e.g., prediction types, motion vectors, and prediction modes). In some examples, encoder 114 may perform one or more of quantization and entropy coding of the transform coefficients and/or the other information used to determine prediction blocks before forming bitstream 110 to further reduce the number of bits needed to store and/or transmit video sequence 108.

Output interface 116 may be configured to write and/or store bitstream 110 onto transmission medium 104 for transmission to destination device 106. In addition or alternatively, output interface 116 may be configured to transmit, upload, and/or stream bitstream 110 to destination device 106 via transmission medium 104. Output interface 116 may comprise a wired and/or wireless transmitter configured to transmit, upload, and/or stream bitstream 110 according to one or more proprietary and/or standardized communication protocols, such as Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, and Wireless Application Protocol (WAP) standards.

Transmission medium 104 may comprise a wireless, wired, and/or computer readable medium. For example, transmission medium 104 may comprise one or more wires, cables, air interfaces, optical discs, flash memory, and/or magnetic memory. In addition or alternatively, transmission medium 104 may comprise one more networks (e.g., the Internet) or file servers configured to store and/or transmit encoded video data.

To decode bitstream 110 into video sequence 108 for display, destination device 106 may comprise an input interface 118, a decoder 120, and a video display 122. Input interface 118 may be configured to read bitstream 110 stored on transmission medium 104 by source device 102. In addition or alternatively, input interface 118 may be configured to receive, download, and/or stream bitstream 110 from source device 102 via transmission medium 104. Input interface 118 may comprise a wired and/or wireless receiver configured to receive, download, and/or stream bitstream 110 according to one or more proprietary and/or standardized communication protocols, such as those mentioned above.

Decoder 120 may decode video sequence 108 from encoded bitstream 110. To decode video sequence 108, decoder 120 may generate prediction blocks for pictures of video sequence 108 in a similar manner as encoder 114 and determine prediction errors for the blocks. Decoder 120 may generate the prediction blocks using prediction types, prediction modes, and/or motion vectors received in bitstream 110 and determine the prediction errors using transform coefficients also received in bitstream 110. Decoder 120 may determine the prediction errors by weighting transform basis functions using the transform coefficients. Decoder 120 may combine the prediction blocks and prediction errors to decode video sequence 108. In some examples, decoder 120 may decode a video sequence that approximates video sequence 108 due to, for example, lossy compression of video sequence 108 by encoder 114 and/or errors introduced into encoded bitstream 110 during transmission to destination device 106.

Video display 122 may display video sequence 108 to a user. Video display 122 may comprise a cathode rate tube (CRT) display, liquid crystal display (LCD), a plasma display, light emitting diode (LED) display, or any other display device suitable for displaying video sequence 108.

It should be noted that video encoding/decoding system 100 is presented by way of example and not limitation. In the example of FIG. 1, video encoding/decoding system 100 may have other components and/or arrangements. For example, video source 112 may be external to source device 102. Similarly, video display 122 may be external to destination device 106 or omitted altogether where video sequence is intended for consumption by a machine and/or storage device. In another example, source device 102 may further comprise a video decoder and destination device 106 may comprise a video encoder. In such an example, source device 102 may be configured to further receive an encoded bit stream from destination device 106 to support two-way video transmission between the devices.

In the example of FIG. 1, encoder 114 and decoder 120 may operate according to any one of a number of proprietary or industry video coding standards. For example, encoder 114 and decoder 120 may operate according to one or more of International Telecommunications Union Telecommunication Standardization Sector (ITU-T) H.263, ITU-T H.264 and Moving Picture Expert Group (MPEG)-4 Visual (also known as Advanced Video Coding (AVC)), ITU-T H.265 and MPEG-H Part 2 (also known as High Efficiency Video Coding (HEVC), ITU-T H.265 and MPEG-I Part 3 (also known as Versatile Video Coding (VVC)), the WebM VP8 and VP9 codecs, and AOMedia Video 1 (AV1).

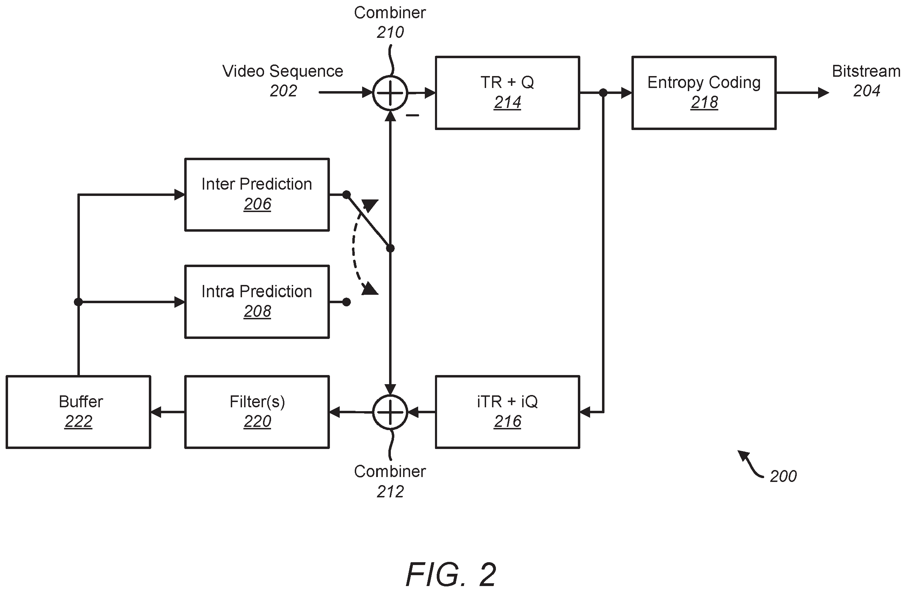

FIG. 2 illustrates an exemplary encoder 200 in which embodiments of the present disclosure may be implemented. Encoder 200 encodes a video sequence 202 into a bitstream 204 for more efficient storage and/or transmission. Encoder 200 may be implemented in video coding/decoding system 100 in FIG. 1 or in any one of a number of different devices, including a desktop computer, laptop computer, tablet computer, smart phone, wearable device, television, camera, video gaming console, set-top box, or video streaming device. Encoder 200 comprises an inter prediction unit 206, an intra prediction unit 208, combiners 210 and 212, a transform and quantization unit (TR + Q) unit 214, an inverse transform and quantization unit (iTR + iQ) 216, entropy coding unit 218, one or more filters 220, and a buffer 222.

Encoder 200 may partition the pictures of video sequence 202 into blocks and encode video sequence 202 on a block-by-block basis. Encoder 200 may perform a prediction technique on a block being encoded using either inter prediction unit 206 or intra prediction unit 208. Inter prediction unit 206 may perform inter prediction by searching for a block similar to the block being encoded in another, reconstructed picture (also referred to as a reference picture) of video sequence 202. A reconstructed picture refers to a picture that was encoded and then decoded. The block determined during the search (also referred to as a prediction block) may then be used to predict the block being encoded to remove redundant information. Inter prediction unit 206 may exploit temporal redundancy or similarities in scene content from picture to picture in video sequence 202 to determine the prediction block. For example, scene content between pictures of video sequence 202 may be similar except for differences due to motion or affine transformation of the screen content over time.

Intra prediction unit 208 may perform intra prediction by forming a prediction block based on data from reconstructed neighboring samples of the block to be encoded within the same picture of video sequence 202. A reconstructed sample refers to a sample that was encoded and then decoded. Intra prediction unit 208 may exploit spatial redundancy or similarities in scene content within a picture of video sequence 202 to determine the prediction block. For example, the texture of a region of scene content in a picture may be similar to the texture in the immediate surrounding area of the region of the scene content in the same picture.

After prediction, combiner 210 may determine a prediction error (also referred to as a residual) based on the difference between the block being encoded and the prediction block. The prediction error may represent non-redundant information that may be transmitted to a decoder for accurate decoding of a video sequence.

Transform and quantization unit 214 may transform and quantize the prediction error. Transform and quantization unit 214 may transform the prediction error into transform coefficients by applying, for example, a DCT to reduce correlated information in the prediction error. Transform and quantization unit 214 may quantize the coefficients by mapping data of the transform coefficients to a predefined set of representative values. Transform and quantization unit 214 may quantize the coefficients to reduce irrelevant information in bitstream 204. Irrelevant information is information that may be removed from the coefficients without producing visible and/or perceptible distortion in video sequence 202 after decoding.

Entropy coding unit 218 may apply one or more entropy coding methods to the quantized transform coefficients to further reduce the bit rate. For example, entropy coding unit 218 may apply context adaptive variable length coding (CAVLC), context adaptive binary arithmetic coding (CABAC), and syntax-based context-based binary arithmetic coding (SBAC). The entropy coded coefficients are packed to form bitstream 204.

Inverse transform and quantization unit 216 may inverse quantize and inverse transform the quantized transform coefficients to determine a reconstructed prediction error. Combiner 212 may combine the reconstructed prediction error with the prediction block to form a reconstructed block. Filter(s) 220 may filter the reconstructed block using, for example, a deblocking filter and/or a sample-adaptive offset (SAO) filter. Buffer 222 may store the reconstructed block for prediction of one or more other blocks in the same and/or different picture of video sequence 202.

Although not shown in FIG. 2, encoder 200 further comprises an encoder control unit configured to control one or more of the units of encoder 200 shown in FIG. 2. The encoder control unit may control the one or more units of encoder 200 such that bitstream 204 is generated in conformance with the requirements of any one of a number of proprietary or industry video coding standards. For example, The encoder control unit may control the one or more units of encoder 200 such that bitstream 204 is generated in conformance with one or more of ITU-T H.263, AVC, HEVC, VVC, VP8, VP9, and AV1 video coding standards.

Within the constraints of a proprietary or industry video coding standard, the encoder control unit may attempt to minimize or reduce the bitrate of bitstream 204 and maximize or increase the reconstructed video quality. For example, the encoder control unit may attempt to minimize or reduce the bitrate of bitstream 204 given a level that the reconstructed video quality may not fall below, or attempt to maximize or increase the reconstructed video quality given a level that the bit rate of bitstream 204 may not exceed. The encoder control unit may determine/control one or more of: partitioning of the pictures of video sequence 202 into blocks, whether a block is inter predicted by inter prediction unit 206 or intra predicted by intra prediction unit 208, a motion vector for inter prediction of a block, an intra prediction mode among a plurality of intra prediction modes for intra prediction of a block, filtering performed by filter(s) 220, and one or more transform types and/or quantization parameters applied by transform and quantization unit 214. The encoder control unit may determine/control the above based on how the determination/control effects a rate-distortion measure for a block or picture being encoded. The encoder control unit may determine/control the above to reduce the rate-distortion measure for a block or picture being encoded.

After being determined, the prediction type used to encode a block (intra or inter prediction), prediction information of the block (intra prediction mode if intra predicted, motion vector, etc.), and transform and quantization parameters, may be sent to entropy coding unit 218 to be further compressed to reduce the bit rate. For example, entropy coding unit 218 may apply context adaptive variable length coding (CAVLC), context adaptive binary arithmetic coding (CABAC), and syntax-based context-based binary arithmetic coding (SBAC) to compress the prediction type used to encode a block (intra or inter prediction), prediction information of the block (intra prediction mode if intra predicted, motion vector, etc.), and transform and quantization parameters. The prediction type, prediction information, and transform and quantization parameters may be packed with the prediction error to form bitstream 204.

It should be noted that encoder 200 is presented by way of example and not limitation. In other examples, encoder 200 may have other components and/or arrangements. For example, one or more of the components shown in FIG. 2 may be optionally included in encoder 200, such as entropy coding unit 218 and filters(s) 220.

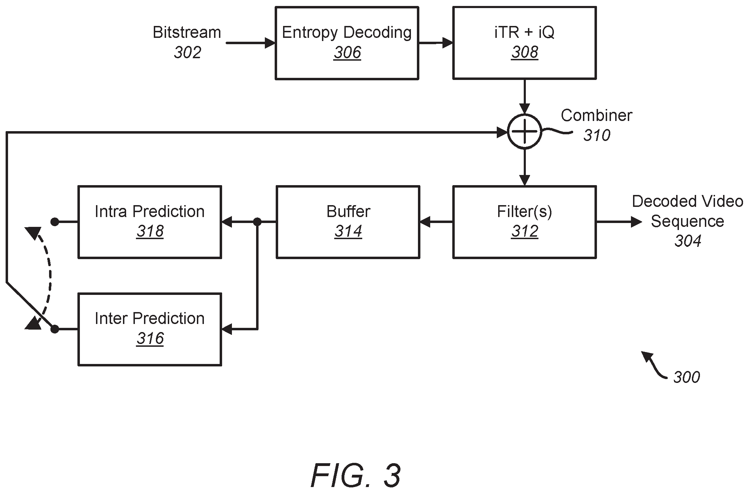

FIG. 3 illustrates an exemplary decoder 300 in which embodiments of the present disclosure may be implemented. Decoder 300 decodes an bitstream 302 into a decoded video sequence for display and/or some other form of consumption. Decoder 300 may be implemented in video coding/decoding system 100 in FIG. 1 or in any one of a number of different devices, including a desktop computer, laptop computer, tablet computer, smart phone, wearable device, television, camera, video gaming console, set-top box, or video streaming device. Decoder 300 comprises an entropy decoding unit 306, an inverse transform and quantization (iTR + iQ) unit 308, a combiner 310, one or more filters 312, a buffer 314, an inter prediction unit 316, and an intra prediction unit 318.

Although not shown in FIG. 3, decoder 300 further comprises a decoder control unit configured to control one or more of the units of decoder 300 shown in FIG. 3. The decoder control unit may control the one or more units of decoder 300 such that bitstream 302 is decoded in conformance with the requirements of any one of a number of proprietary or industry video coding standards. For example, The decoder control unit may control the one or more units of decoder 300 such that bitstream 302 is decoded in conformance with one or more of ITU-T H.263, AVC, HEVC, VVC, VP8, VP9, and AV1 video coding standards.

The decoder control unit may determine/control one or more of: whether a block is inter predicted by inter prediction unit 316 or intra predicted by intra prediction unit 318, a motion vector for inter prediction of a block, an intra prediction mode among a plurality of intra prediction modes for intra prediction of a block, filtering performed by filter(s) 312, and one or more inverse transform types and/or inverse quantization parameters to be applied by inverse transform and quantization unit 308. One or more of the control parameters used by the decoder control unit may be packed in bitstream 302.

Entropy decoding unit 306 may entropy decode the bitstream 302. For example, entropy decoding unit 306 may apply context adaptive variable length coding (CAVLC), context adaptive binary arithmetic coding (CABAC), and syntax-based context-based binary arithmetic coding (SBAC) to decompress the prediction type used to encode a block (intra or inter prediction), prediction information of the block (intra prediction mode if intra predicted, motion vector, etc.), and transform and quantization parameters. Inverse transform and quantization unit 308 may inverse quantize and inverse transform the quantized transform coefficients to determine a decoded prediction error. Combiner 310 may combine the decoded prediction error with a prediction block to form a decoded block. The prediction block may be generated by inter prediction unit 318 or inter prediction unit 316 as described above with respect to encoder 200 in FIG 2. Filter(s) 312 may filter the decoded block using, for example, a deblocking filter and/or a sample-adaptive offset (SAO) filter. Buffer 314 may store the decoded block for prediction of one or more other blocks in the same and/or different picture of the video sequence in bitstream 302. Decoded video sequence 304 may be output from filter(s) 312 as shown in FIG. 3.

It should be noted that decoder 300 is presented by way of example and not limitation. In other examples, decoder 300 may have other components and/or arrangements. For example, one or more of the components shown in FIG. 3 may be optionally included in decoder 300, such as entropy decoding unit 306 and filters(s) 312.

It should be further noted that, although not shown in FIGS. 2 and 3, each of encoder 200 and decoder 300 may further comprise an intra block copy unit in addition to inter prediction and intra prediction units. The intra block copy unit may perform similar to an inter prediction unit but predict blocks within the same picture. For example, the intra block copy unit may exploit repeated patterns that appear in screen content. Screen content may include, for example, computer generated text, graphics, and animation.

As mentioned above, video encoding and decoding may be performed on a block-by-block basis. The process of partitioning a picture into blocks may be adaptive based on the content of the picture. For example, larger block partitions may be used in areas of a picture with higher levels of homogeneity to improve coding efficiency.

In HEVC, a picture may be partitioned into non-overlapping square blocks, referred to as coding tree blocks (CTBs), comprising samples of a sample array. A CTB may have a size of 2*ⁿ*x2*ⁿ* samples, where *n* may be specified by a parameter of the encoding system. For example, *n* may be 4, 5, or 6. A CTB may be further partitioned by a recursive quadtree partitioning into coding blocks (CBs) of half vertical and half horizontal size. The CTB forms the root of the quadtree. A CB that is not split further as part of the recursive quadtree partitioning may be referred to as a leaf-CB of the quadtree and otherwise as a non-leaf CB of the quadtree. A CB may have a minimum size specified by a parameter of the encoding system. For example, a CB may have a minimum size of 4x4, 8x8, 16x16, 32x32, or 64x64 samples. For inter and intra prediction, a CB may be further partitioned into one or more prediction blocks (PBs) for performing inter and intra prediction. A PB may be a rectangular block of samples on which the same prediction type/mode may be applied. For transformations, a CB may be partitioned into one or more transform blocks (TBs). A TB may be a rectangular block of samples that may determine an applied transform size.

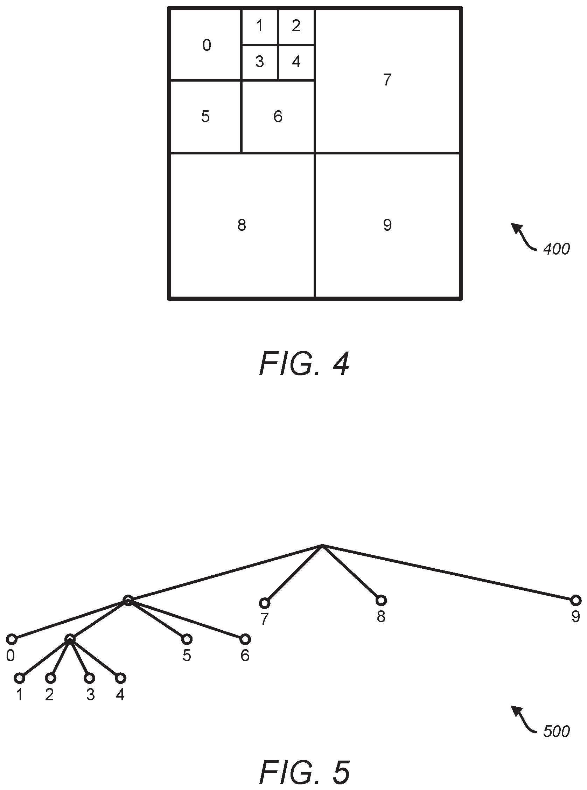

FIG. 4 illustrates an example quadtree partitioning of a CTB 400. FIG. 5 illustrates a corresponding quadtree 500 of the example quadtree partitioning of CTB 400 in FIG. 4. As shown in FIGS. 4 and 5, CTB 400 is first partitioned into four CBs of half vertical and half horizontal size. Three of the resulting CBs of the first level partitioning of CTB 400 are leaf-CBs. The three leaf CBs of the first level partitioning of CTB 400 are respectively labeled 7, 8, and 9 in FIGS. 4 and 5. The non-leaf CB of the first level partitioning of CTB 400 is partitioned into four sub-CBs of half vertical and half horizontal size. Three of the resulting sub-CBs of the second level partitioning of CTB 400 are leaf CBs. The three leaf CBs of the second level partitioning of CTB 400 are respectively labeled 0, 5, and 6 in FIGS. 4 and 5. Finally, the non-leaf CB of the second level partitioning of CTB 400 is partitioned into four leaf CBs of half vertical and half horizontal size. The four leaf CBs are respectively labeled 1, 2, 3, and 4 in FIGS. 4 and 5.

Altogether, CTB 400 is partitioned into 10 leaf CBs respectively labeled 0-9. The resulting quadtree partitioning of CTB 400 may be scanned using a z-scan (left-to-right, top-to-bottom) to form the sequence order for encoding/decoding the CB leaf nodes. The numeric label of each CB leaf node in FIGS. 4 and 5 may correspond to the sequence order for encoding/decoding, with CB leaf node 0 encoded/decoded first and CB leaf node 9 encoded/decoded last. Although not shown in FIGS. 4 and 5, it should be noted that each CB leaf node may comprise one or more PBs and TBs.

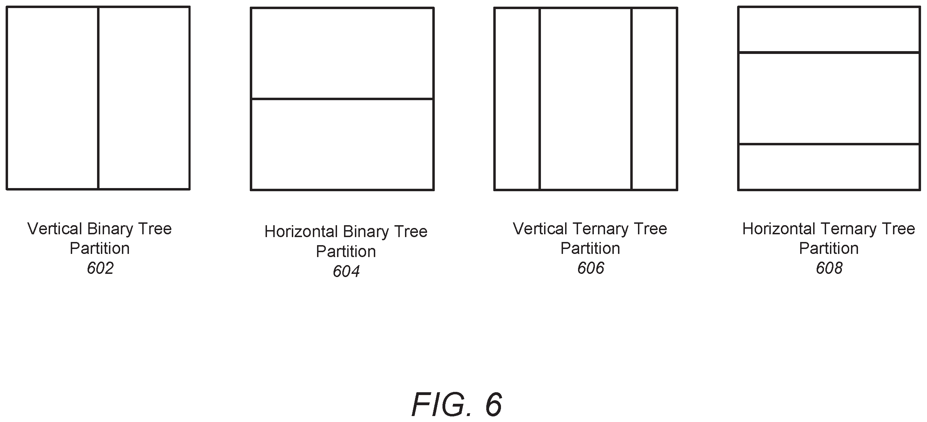

In VVC, a picture may be partitioned in a similar manner as in HEVC. A picture may be first partitioned into non-overlapping square CTBs. The CTBs may then be partitioned by a recursive quadtree partitioning into CBs of half vertical and half horizontal size. In VVC, a quadtree leaf node may be further partitioned by a binary tree or ternary tree partitioning into CBs of unequal sizes. FIG. 6 illustrates example binary and ternary tree partitions. A binary tree partition may divide a parent block in half in either the vertical direction 602 or horizontal direction 604. The resulting partitions may be half in size as compared to the parent block. A ternary tree partition may divide a parent block into three parts in either the vertical direction 606 or horizontal direction 608. The middle partition may be twice as large as the other two end partitions in a ternary tree partition.

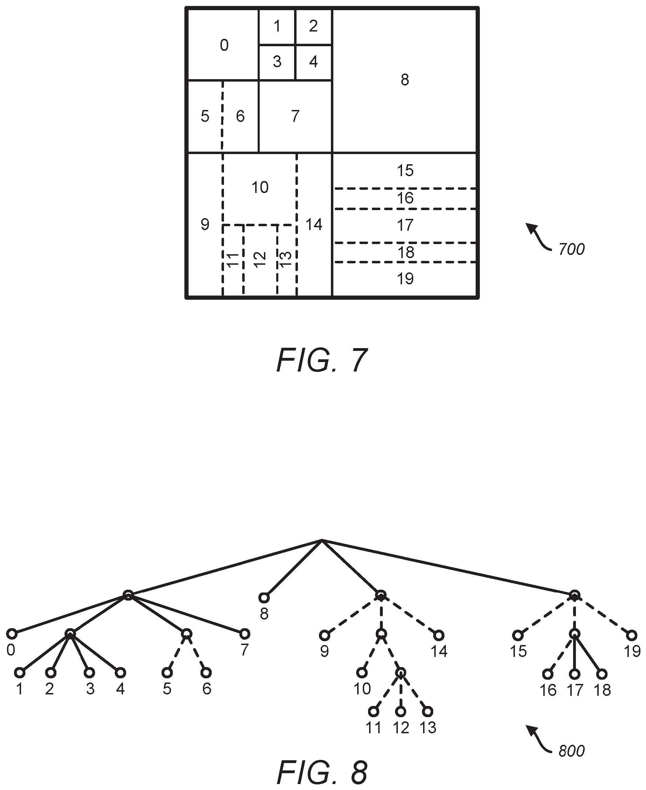

Because of the addition of binary and ternary tree partitioning, in VVC the block partitioning strategy may be referred to as quadtree + multi-type tree partitioning. FIG. 7 illustrates an example quadtree + multi-type tree partitioning of a CTB 700. FIG. 8 illustrates a corresponding quadtree + multi-type tree 800 of the example quadtree + multi-type tree partitioning of CTB 700 in FIG. 7. In both FIGS. 7 and 8, quadtree splits are shown in solid lines and multi-type tree splits are shown in dashed lines. For ease of explanation, CTB 700 is shown with the same quadtree partitioning as CTB 400 described in FIG. 4. Therefore, description of the quadtree partitioning of CTB 700 is omitted. The description of the additional multi-type tree partitions of CTB 700 is made relative to three leaf-CBs shown in FIG. 4 that have been further partitioned using one or more binary and ternary tree partitions. The three leaf-CBs in FIG. 4 that are shown in FIG. 7 as being further partitioned are leaf-CBs 5, 8, and 9.

Starting with leaf-CB 5 in FIG. 4, FIG. 7 shows this leaf-CB partitioned into two CBs based on a vertical binary tree partitioning. The two resulting CBs are leaf-CBs respectively labeled 5 and 6 in FIGS. 7 and 8. With respect to leaf-CB 8 in FIG. 4, FIG. 7 shows this leaf-CB partitioned into three CBs based on a vertical ternary tree partition. Two of the three resulting CBs are leaf-CBs respectively labeled 9 and 14 in FIGS. 7 and 8. The remaining, non-leaf CB is partitioned first into two CBs based on a horizontal binary tree partition, one of which is a leaf-CB labeled 10 and the other of which is further partitioned into three CBs based on a vertical ternary tree partition. The resulting three CBs are leaf-CBs respectively labeled 11, 12, and 13 in FIGS. 7 and 8. Finally, with respect to leaf-CB 9 in FIG. 4, FIG. 7 shows this leaf-CB partitioned into three CBs based on a horizontal ternary tree partition. Two of the three CBs are leaf-CBs respectively labeled 15 and 19 in FIGS. 7 and 8. The remaining, non-leaf CB is partitioned into three CBs based on another horizontal ternary tree partition. The resulting three CBs are all leaf-CBs respectively labeled 16, 17, and 18 in FIGS. 7 and 8.

Altogether, CTB 700 is partitioned into 20 leaf CBs respectively labeled 0-19. The resulting quadtree + multi-type tree partitioning of CTB 700 may be scanned using a z-scan (left-to-right, top-to-bottom) to form the sequence order for encoding/decoding the CB leaf nodes. The numeric label of each CB leaf node in FIGS. 7 and 8 may correspond to the sequence order for encoding/decoding, with CB leaf node 0 encoded/decoded first and CB leaf node 19 encoded/decoded last. Although not shown in FIGS. 7 and 8, it should be noted that each CB leaf node may comprise one or more PBs and TBs.

In addition to specifying various blocks (e.g., CTB, CB, PB, TB), HEVC and VVC further define various units. While blocks may comprise a rectangular area of samples in a sample array, units may comprise the collocated blocks of samples from the different sample arrays (e.g., luma and chroma sample arrays) that form a picture as well as syntax elements and prediction data of the blocks. A coding tree unit (CTU) may comprise the collocated CTBs of the different sample arrays and may form a complete entity in an encoded bit stream. A coding unit (CU) may comprise the collocated CBs of the different sample arrays and syntax structures used to code the samples of the CBs. A prediction unit (PU) may comprise the collocated PBs of the different sample arrays and syntax elements used to predict the PBs. A transform unit (TU) may comprise TBs of the different samples arrays and syntax elements used to transform the TBs.

It should be noted that the term block may be used to refer to any of a CTB, CB, PB, TB, CTU, CU, PU, or TU in the context of HEVC and VVC. It should be further noted that the term block may be used to refer to similar data structures in the context of other video coding standards. For example, the term block may refer to a macroblock in AVC, a macroblock or sub-block in VP8, a superblock or sub-block in VP9, or a superblock or sub-block in AV1.

In intra prediction, samples of a block to be encoded (also referred to as the current block) may be predicted from samples of the column immediately adjacent to the left-most column of the current block and samples of the row immediately adjacent to the top-most row of the current block. The samples from the immediately adjacent column and row may be jointly referred to as reference samples. Each sample of the current block may be predicted by projecting the position of the sample in the current block in a given direction (also referred to as an intra prediction mode) to a point along the reference samples. The sample may be predicted by interpolating between the two closest reference samples of the projection point if the projection does not fall directly on a reference sample. A prediction error (also referred to as a residual) may be determined for the current block based on differences between the predicted sample values and the original sample values of the current block.

At an encoder, this process of predicting samples and determining a prediction error based on a difference between the predicted samples and original samples may be performed for a plurality of different intra prediction modes, including non-directional intra prediction modes. The encoder may select one of the plurality of intra prediction modes and its corresponding prediction error to encode the current block. The encoder may send an indication of the selected prediction mode and its corresponding prediction error to a decoder for decoding of the current block. The decoder may decode the current block by predicting the samples of the current block using the intra prediction mode indicated by the encoder and combining the predicted samples with the prediction error.

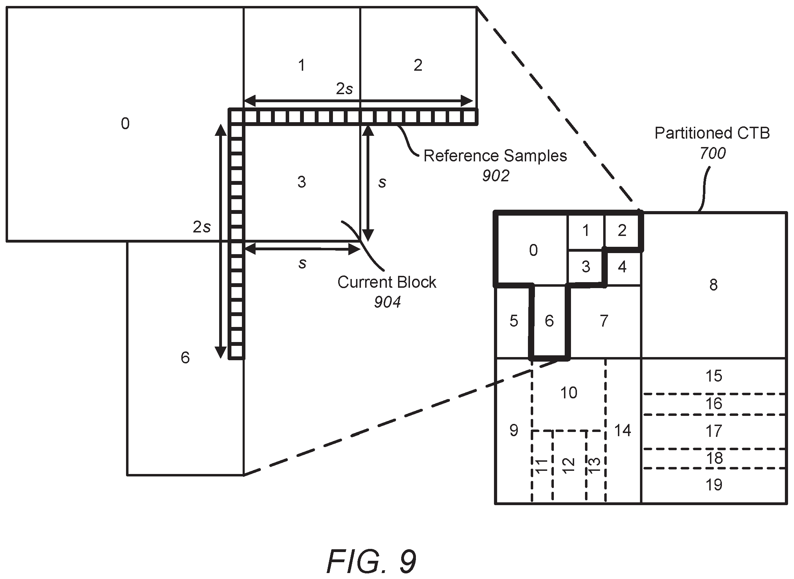

FIG. 9 illustrates an example set of reference samples 902 determined for intra prediction of a current block 904 being encoded or decoded. In FIG. 9, current block 904 corresponds to block 3 of partitioned CTB 700 in FIG. 7. As explained above, the numeric labels 0-19 of the blocks of partitioned CTB 700 may correspond to the sequence order for encoding/decoding the blocks and are used as such in the example of FIG. 9.

Given current block 904 is of *w* x *h* samples in size, reference samples 902 may extend over 2*w* samples of the row immediately adjacent to the top-most row of current block 904, 2*h* samples of the column immediately adjacent to the left-most column of current block 904, and the top left neighboring corner sample to current block 904. In the example of FIG. 9, current block 904 is square, so *w* = *h* = *s*. For constructing the set of reference samples 902, available samples from neighboring blocks of current block 904 may be used. Samples may not be available for constructing the set of reference samples 902 if, for example, the samples would lie outside the picture of the current block, the samples are part of a different slice of the current block (where the concept of slices are used), and/or the samples belong to blocks that have been inter coded and constrained intra prediction is indicated. When constrained intra prediction is indicated, intra prediction may not be dependent on inter predicted blocks.

In addition to the above, samples that may not be available for constructing the set of reference samples 902 include samples in blocks that have not already been encoded and reconstructed at an encoder or decoded at a decoder based on the sequence order for encoding/decoding. This restriction may allow identical prediction results to be determined at both the encoder and decoder. In FIG. 9, samples from neighboring blocks 0, 1, and 2 may be available to construct reference samples 902 given that these blocks are encoded and reconstructed at an encoder and decoded at a decoder prior to coding of current block 904. This assumes there are no other issues, such as those mentioned above, preventing the availability of samples from neighboring blocks 0, 1, and 2. However, the portion of reference samples 902 from neighboring block 6 may not be available due to the sequence order for encoding/decoding.

Unavailable ones of reference samples 902 may be filled with available ones of reference samples 902. For example, an unavailable reference sample may be filled with a nearest available reference sample determined by moving in a clock-wise direction through reference samples 902 from the position of the unavailable reference. If no reference samples are available, reference samples 902 may be filled with the mid-value of the dynamic range of the picture being coded.

It should be noted that reference samples 902 may be filtered based on the size of current block 904 being coded and an applied intra prediction mode. It should be further noted that FIG. 9 illustrates only one exemplary determination of reference samples for intra prediction of a block. In some proprietary and industry video coding standards, reference samples may be determined in a different manner than discussed above. For example, multiple reference lines may be used in other instances, such as used in VVC.

After reference samples 902 are determined and optionally filtered, samples of current block 904 may be intra predicted based on reference samples 902. Most encoders/decoders support a plurality of intra prediction modes in accordance with one or more video coding standards. For example, HEVC supports 35 intra prediction modes, including a planar mode, a DC mode, and 33 angular modes. VVC supports 67 intra prediction modes, including a planar mode, a DC mode, and 65 angular modes. Planar and DC modes may be used to predict smooth and gradually changing regions of a picture. Angular modes may be used to predict directional structures in regions of a picture.

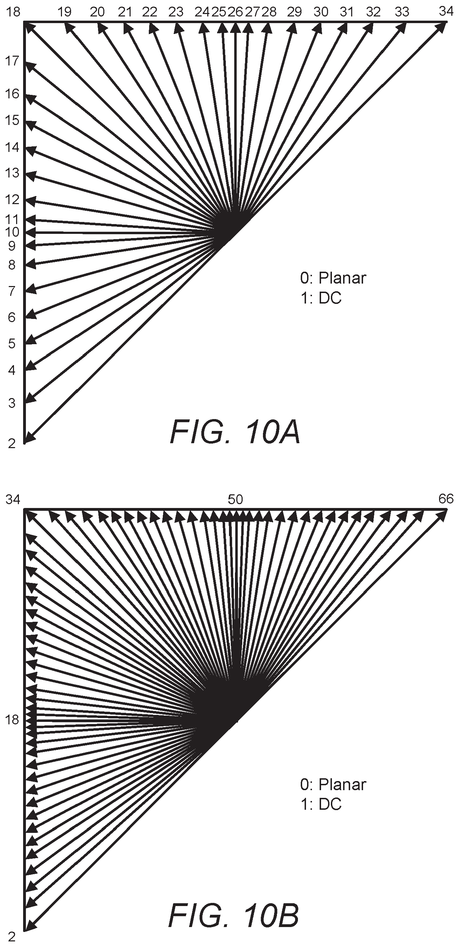

FIG. 10A illustrates the 35 intra prediction modes supported by HEVC. The 35 intra prediction modes are identified by indices 0 to 34. Prediction mode 0 corresponds to planar mode. Prediction mode 1 corresponds to DC mode. Prediction modes 2-34 correspond to angular modes. Prediction modes 2-18 may be referred to as horizontal prediction modes because the principal source of prediction is in the horizontal direction. Prediction modes 19-34 may be referred to as vertical prediction modes because the principal source of prediction is in the vertical direction.

FIG. 10B illustrates the 67 intra prediction modes supported by VVC. The 67 intra prediction modes are identified by indices 0 to 66. Prediction mode 0 corresponds to planar mode. Prediction mode 1 corresponds to DC mode. Prediction modes 2-66 correspond to angular modes. Prediction modes 2-34 may be referred to as horizontal prediction modes because the principal source of prediction is in the horizontal direction. Prediction modes 35-66 may be referred to as vertical prediction modes because the principal source of prediction is in the vertical direction. Because blocks in VVC may be non-square, some of the intra prediction modes illustrated in FIG. 10B may be adaptively replaced by wide-angle directions.

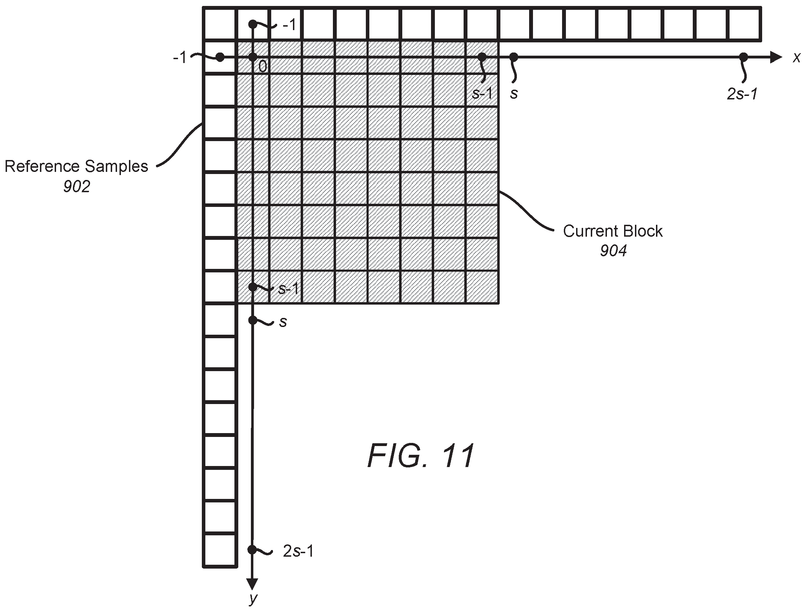

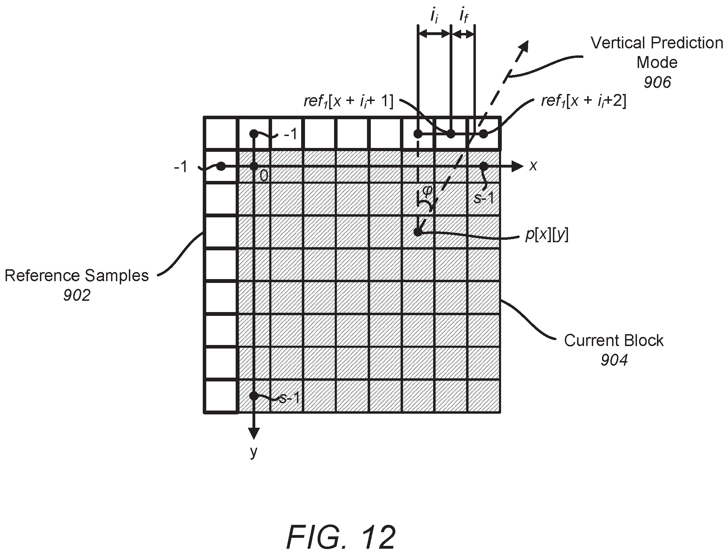

To further describe the application of intra prediction modes to determine a prediction of a current block, reference is made to FIGS. 11 and 12. In FIG. 11, current block 904 and reference samples 902 from FIG. 9 are shown in a two-dimensional *x*, *y* plane, where a sample may be referenced as . In order to simplify the prediction process, reference samples 902 may be placed in two, one-dimensional arrays. Reference samples 902 above current block 904 may be placed in the one-dimensional array *ref₁*[*x*]: ${ref}_{1} \left[x\right] = p \left[-1+x\right] \left[-1\right] , \left(x\geq 0\right)$ (1) Reference samples 902 to the left of current block 904 may be placed in the one-dimensional array *ref₂*[*x*]: ${ref}_{2} \left[y\right] = p \left[-1\right] \left[-1+y\right] , \left(y\geq 0\right)$ (2)

For planar mode, a sample at location in current block 904 may be predicted by calculating the mean of two interpolated values. The first of the two interpolated values may be based on a horizontal linear interpolation at location in current block 904. The second of the two interpolated values may be based on a vertical linear interpolation at location in current block 904. The predicted sample in current block 904 may be calculated as $p \left[x\right] \left[y\right] = \frac{1}{2 ⋅ s} \left(h\left[x\right]\left[y\right]+v\left[x\right]\left[y\right]+s\right)$ (3) where $h \left[x\right] \left[y\right] = \left(s-x-1\right) ⋅ {ref}_{2} \left[y\right] + \left(x+1\right) ⋅ {ref}_{1} \left[s\right]$ (4) may be the horizonal linear interpolation at location [*x*][*y*] in current block 904 and $v \left[x\right] \left[y\right] = \left(s-y-1\right) ⋅ {ref}_{1} \left[x\right] + \left(y+1\right) ⋅ {ref}_{2} \left[s\right]$ (5) may be the vertical linear interpolation at location [*x*][*y*] in current block 904.

For DC mode, a sample at location [*x*][*y*] in current block 904 may be predicted by the mean of the reference samples 902. The predicted value sample *p*[*x*][*y*] in current block 904 may be calculated as $p \left[x\right] \left[y\right] = \frac{1}{2 ⋅ s} \left({\sum }_{x = 0}^{s - 1} {ref}_{1} \left[x\right]+{\sum }_{y = 0}^{s - 1} {ref}_{2} \left[y\right]\right)$ (6)

For angular modes, a sample at location in current block 904 may be predicted by projecting the location in a direction specified by a given angular mode to a point on the horizontal or vertical line of samples comprising reference samples 902. The sample at location may be predicted by interpolating between the two closest reference samples of the projection point if the projection does not fall directly on a reference sample. The direction specified by the angular mode may be given by an angle *φ* defined relative to the y-axis for vertical prediction modes (e.g., modes 19-34 in HEVC and modes 35-66 in VVC) and relative to the x-axis for horizontal prediction modes (e.g., modes 2-18 in HEVC and modes 2-34 in VVC).

FIG. 12 illustrates a prediction of a sample at location [*x*][*y*] in current block 904 for a vertical prediction mode 906 given by an angle *φ.* For vertical prediction modes, the location [*x*][*y*] in current block 904 is projected to a point (referred to herein as the "projection point") on the horizontal line of reference samples *ref₁*[*x*]. Reference samples 902 are only partially shown in FIG. 12 for ease of illustration. Because the projection point falls at a fractional sample position between two reference samples in the example of FIG. 12, the predicted sample *p*[*x*][*y*] in current block 904 may be calculated by linearly interpolating between the two reference samples as follows $p \left[x\right] \left[y\right] = \left(1-{i}_{f}\right) ⋅ {ref}_{1} \left[x+{i}_{i}+1\right] + {i}_{f} ⋅ {ref}_{1} \left[x+{i}_{i}+2\right]$ (7) where *iᵢ* is the integer part of the horizontal displacement of the projection point relative to the location [*x*][*y*] and may calculated as a function of the tangent of the angle φ of the vertical prediction mode 906 as follows ${i}_{i} = \left⌊\left(y+1\right)⋅tan φ\right⌋ ,$ (8) and *i_{f}* is the fractional part of the horizontal displacement of the projection point relative to the location [*x*][*y*] and may be calculated as ${i}_{f} = \left(\left(y+1\right)⋅tanφ\right) - \left⌊\left(y+1\right)⋅tan φ\right⌋ .$ (9) where $\left⌊⋅\right⌋$ is the integer floor.

For horizontal prediction modes, the position [x][y] of a sample in current block 904 may be projected onto the vertical line of reference samples *ref₂*[*y*]*.* Sample prediction for horizontal prediction modes is given by: $p \left[x\right] \left[y\right] = \left(1-{i}_{f}\right) ⋅ {ref}_{2} \left[y+{i}_{i}+1\right] + {i}_{f} ⋅ {ref}_{2} \left[y+{i}_{i}+2\right]$ (10) where *iᵢ* is the integer part of the vertical displacement of the projection point relative to the location *[x] [y]* and may be calculated as a function of the tangent of the angle φ of the horizontal prediction mode as follows ${i}_{i} = \left⌊\left(x+1\right)⋅tan φ\right⌋ ,$ (11) and *i*_{f} is the fractional part of the vertical displacement of the projection point relative to the location [*x*][*y*] and may be calculated as ${i}_{f} = \left(\left(x+1\right)⋅tanφ\right) - \left⌊\left(x+1\right)⋅tan φ\right⌋ .$ (12) where $\left⌊⋅\right⌋$ is the integer floor.

The interpolation functions of (7) and (10) may be implemented by an encoder or decoder, such as encoder 200 in FIG. 2 or decoder 300 in FIG. 3, as a set of two-tap finite impulse response (FIR) filters. The coefficients of the two-tap FIR filters may be respectively given by (1-) and . In the above angular intra prediction examples, the predicted sample may be calculated with some predefined level of sample accuracy, such as 1/32 sample accuracy. For 1/32 sample accuracy, the set of two-tap FIR interpolation filters may comprise up to 32 different two-tap FIR interpolation filters - one for each of the 32 possible values of the fractional part of the projected displacement. In other examples, different levels of sample accuracy may be used.

In an embodiment, the two-tap interpolation FIR filter may be used for predicting chroma samples. For luma samples, a different interpolation technique may be used. For example, for luma samples a four-tap FIR filter may be used to determine a predicted value of a luma sample. For example, the four tap FIR filter may have coefficients determined based on , similar to the two-tap FIR filter. For 1/32 sample accuracy, a set of 32 different four-tap FIR filters may comprise up to 32 different four-tap FIR filters - one for each of the 32 possible values of the fractional part of the projected displacement. In other examples, different levels of sample accuracy may be used. The set of four-tap FIR filters may be stored in a look-up table (LUT) and referenced based on . The value of the predicted sample p[x][y], for vertical prediction modes, may be determined based on the four-tap FIR filter as follows: $p \left[x\right] \left[y\right] = {\sum }_{i = 0}^{3} fT \left[i\right] ∗ ref \left[x+iIdx+i\right]$ (13) where fT[i], i = 0...3, are the filter coefficients. The value of the predicted sample p[x][y], for horizontal prediction modes, may be determined based on the four-tap FIR filter as follows: $p \left[x\right] \left[y\right] = {\sum }_{i = 0}^{3} fT \left[i\right] ∗ ref \left[y+iIdx+i\right] .$ (14)

It should be noted that supplementary reference samples may be constructed for the case where the position [x][y] of a sample in current block 904 to be predicted is projected to a negative *x* coordinate, which happens with negative vertical prediction angles *φ*. The supplementary reference samples may be constructed by projecting the reference samples in *ref₂*[*y*] in the vertical line of reference samples 902 to the horizontal line of reference samples 902 using the negative vertical prediction angle *φ*. Supplemental reference samples may be similarly for the case where the position [x][y] of a sample in current block 904 to be predicted is projected to a negative *y* coordinate, which happens with negative horizontal prediction angles *φ*. The supplementary reference samples may be constructed by projecting the reference samples in *ref*₁[*x*] on the horizontal line of reference samples 902 to the vertical line of reference samples 902 using the negative horizontal prediction angle *φ*.

An encoder may predict the samples of a current block being encoded, such as current block 904, for a plurality of intra prediction modes as explained above. For example, the encoder may predict the samples of the current block for each of the 35 intra prediction modes in HEVC or 67 intra prediction modes in VVC. For each intra prediction mode applied, the encoder may determine a prediction error for the current block based on a difference (e.g., sum of squared differences (SSD), sum of absolute differences (SAD), or sum of absolute transformed differences (SATD)) between the prediction samples determined for the intra prediction mode and the original samples of the current block. The encoder may select one of the intra prediction modes to encode the current block based on the determined prediction errors. For example, the encoder may select an intra prediction mode that results in the smallest prediction error for the current block. In another example, the encoder may select the intra prediction mode to encode the current block based on a rate-distortion measure (e.g., Lagrangian rate-distortion cost) determined using the prediction errors. The encoder may send an indication of the selected intra prediction mode and its corresponding prediction error to a decoder for decoding of the current block.

Similar to an encoder, a decoder may predict the samples of a current block being decoded, such as current block 904, for an intra prediction modes as explained above. For example, the decoder may receive an indication of an angular intra prediction mode from an encoder for a block. The decoder may construct a set of reference samples and perform intra prediction based on the angular intra prediction mode indicated by the encoder for the block in a similar manner as discussed above for the encoder. The decoder would add the predicted values of the samples of the block to a residual of the block to reconstruct the block. In another embodiment, the decoder may not receive an indication of an angular intra prediction mode from an encoder for a block. Instead, the decoder may determine an intra prediction mode through other, decoder-side means.

Although the description above was primarily made with respect to intra prediction modes in HEVC and VVC, it will be understood that the techniques of the present disclosure described above and further below may be applied to other intra prediction modes, including those of other video coding standards like VP8, VP9, AV1, and the like.

As explained above, intra prediction may exploit correlations between spatially neighboring samples in the same picture of a video sequence to perform video compression. Inter prediction is another coding tool that may be used to exploit correlations in the time domain between blocks of samples in different pictures of the video sequence to perform video compression. In general, an object may be seen across multiple pictures of a video sequence. The object may move (e.g., by some translation and/or affine motion) or remain stationary across the multiple pictures. A current block of samples in a current picture being encoded may therefore have a corresponding block of samples in a previously decoded picture that accurately predicts the current block of samples. The corresponding block of samples may be displaced from the current block of samples due to movement of an object, represented in both blocks, across the respective pictures of the blocks. The previously decoded picture may be referred to as a reference picture and the corresponding block of samples in the reference picture may be referred to as a reference block or motion compensated prediction. An encoder may use a block matching technique to estimate the displacement (or motion) and determine the reference block in the reference picture.

Similar to intra prediction, once a prediction for a current block is determined and/or generated using inter prediction, an encoder may determine a difference between the current block and the prediction. The difference may be referred to as a prediction error or residual. The encoder may then store and/or signal in a bitstream the prediction error and other related prediction information for decoding or other forms of consumption. A decoder may decode the current block by predicting the samples of the current block using the prediction information and combining the predicted samples with the prediction error.

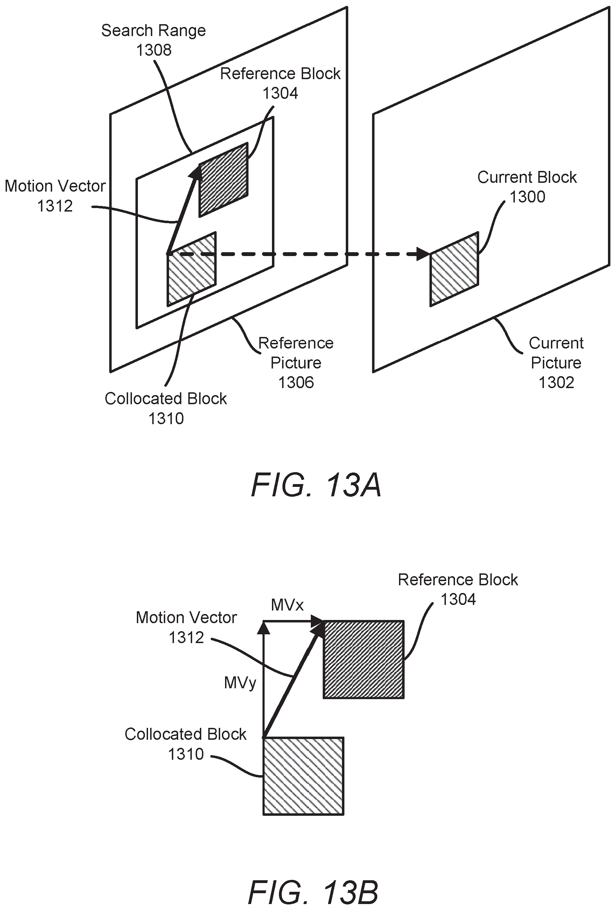

FIG. 13A illustrates an example of inter prediction performed for a current block 1300 in a current picture 1302 being encoded. An encoder, such as encoder 200 in FIG. 2, may perform inter prediction to determine and/or generate a reference block 1304 in a reference picture 1306 to predict current block 1300. Reference pictures, like reference picture 1306, are prior decoded pictures available at the encoder and decoder. Availability of a prior decoded picture may depend on whether the prior decoded picture is available in a decoded picture buffer at the time current block 1300 is being encoded or decoded. The encoder may, for example, search one or more reference pictures for a reference block that is similar to current block 1300. The encoder may determine a "best matching" reference block from the blocks tested during the searching process as reference block 1304. The encoder may determine that reference block 1304 is the best matching reference block based on one or more cost criterion, such as a rate-distortion criterion (e.g., Lagrangian rate-distortion cost). The one or more cost criterion may be based on, for example, a difference (e.g., sum of squared differences (SSD), sum of absolute differences (SAD), or sum of absolute transformed differences (SATD)) between the prediction samples of reference block 1304 and the original samples of current block 1300.

The encoder may search for reference block 1304 within a search range 1308. Search range 1308 may be positioned around the collocated position (or block) 1310 of current block 1300 in reference picture 1306. In some instances, search range 1308 may at least partially extend outside of reference picture 1306. When extending outside of reference picture 1306, constant boundary extension may be used such that the values of the samples in the row or column of reference picture 1306, immediately adjacent to the portion of search range 1308 extending outside of reference picture 1306, are used for the "sample" locations outside of reference picture 1306. All or a subset of potential positions within search range 1308 may be searched for reference block 1304. The encoder may utilize any one of a number of different search implementations to determine and/or generate reference block 1304. For example, the encoder may determine a set of a candidate search positions based on motion information of neighboring blocks to current block 1300.

One or more reference pictures may be searched by the encoder during inter prediction to determine and/or generate the best matching reference block. The reference pictures searched by the encoder may be included in one or more reference picture lists. For example, in HEVC and VVC, two reference picture lists may be used, a reference picture list 0 and a reference picture list 1. A reference picture list may include one or more pictures. Reference picture 1306 of reference block 1304 may be indicated by a reference index pointing into a reference picture list comprising reference picture 1306.

The displacement between reference block 1304 and current block 1300 may be interpreted as an estimate of the motion between reference block 1304 and current block 1300 across their respective pictures. The displacement may be represented by a motion vector 1312. For example, motion vector 1312 may be indicated by a horizontal component (MVₓ) and a vertical component (MV_{y}) relative to the position of current block 1300. FIG. 13B illustrates the horizontal component and vertical component of motion vector 1312. A motion vector, such as motion vector 1312, may have fractional or integer resolution. A motion vector with fractional resolution may point between two samples in a reference picture to provide a better estimation of the motion of current block 1300. For example, a motion vector may have 1/2, 1/4, 1/8, 1/16, or 1/32 fractional sample resolution. When a motion vector points to a non-integer sample value in the reference picture, interpolation between samples at integer positions may be used to generate the reference block and its corresponding samples at fractional positions. The interpolation may be performed by a filter with two or more taps.

Once reference block 1304 is determined and/or generated for current block 1300 using inter prediction, the encoder may determine a difference (e.g., a corresponding sample-by-sample difference) between reference block 1304 and current block 1300. The difference may be referred to as a prediction error or residual. The encoder may then store and/or signal in a bitstream the prediction error and the related motion information for decoding or other forms of consumption. The motion information may include motion vector 1312 and a reference index pointing into a reference picture list comprising reference picture 1306. In other instances, the motion information may include an indication of motion vector 1312 and an indication of the reference index pointing into the reference picture list comprising reference picture 1306. A decoder may decode current block 1300 by determining and/or generating reference block 1304, which forms the prediction of current block 1300, using the motion information and combining the prediction with the prediction error.

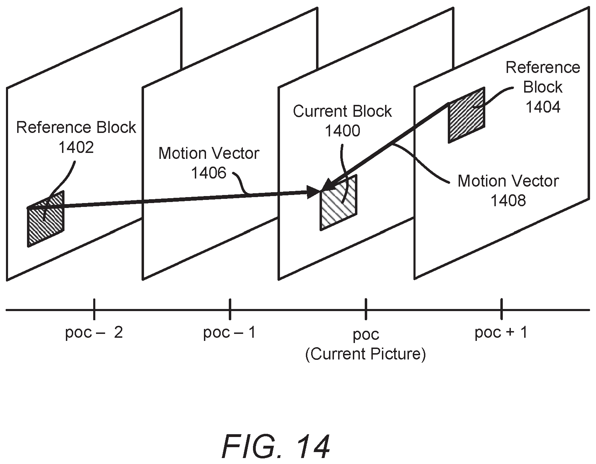

In FIG. 13A, inter prediction is performed using one reference picture 1306 as the source of the prediction for current block 1300. Because the prediction for current block 1300 comes from a single picture, this type of inter prediction is referred to as uni-prediction. FIG. 14 illustrates another type of inter prediction, referred to as bi-prediction, performed for a current block 1400. In bi-prediction, the source of the prediction for a current block 1400 comes from two pictures. Bi-prediction may be useful, for example, where the video sequence comprises fast motion, camera panning or zooming, or scene changes. Bi-prediction may also be useful to capture fade outs of one scene or fade outs from one scene to another, where two pictures are effectively displayed simultaneously with different levels of intensity.

Whether uni-prediction or both uni-prediction and bi-prediction are available for performing inter prediction may depend on a slice type of current block 1400. For P slices, only uni-prediction may be available for performing inter prediction. For B slices, either uni-prediction or bi-prediction may be used. When uni-prediction is performed, an encoder may determine and/or generate a reference block for predicting current block 1400 from reference picture list 0. When bi-prediction is performed, an encoder may determine and/or generate a first reference block for predicting current block 1400 from reference picture list 0 and determine and/or generate a second reference block for predicting current block 1400 from reference picture list 1.

In FIG. 14, inter-prediction is performed using bi-prediction, where two reference blocks 1402 and 1404 are used to predict current block 1400. Reference block 1402 may be in a reference picture of one of reference picture list 0 or 1, and reference block 1404 may be in a reference picture of the other one of reference picture list 0 or 1. As shown in FIG. 14, reference block 1402 is in a picture that precedes the current picture of current block 1400 in terms of picture order count (POC), and reference block 1402 is in a picture that proceeds the current picture of current block 1400 in terms of POC. In other examples, the reference pictures may both precede or procced the current picture in terms of POC. POC is the order in which pictures are output from, for example, a decoded picture buffer and is the order in which pictures are generally intended to be displayed. However, it should be noted that pictures that are output are not necessarily displayed but may undergo different processing or consumption, such as transcoding. In other examples, the two reference blocks determined and/or generated using bi-prediction may come from the same reference picture. In such an instance, the reference picture may be included in both reference picture list 0 and reference picture list 1.

A configurable weight and offset value may be applied to the one or more inter prediction reference blocks. An encoder may enable the use of weighted prediction using a flag in a picture parameter set (PPS) and signal the weighting and offset parameters in the slice segment header for the current block. Different weight and offset parameters may be signaled for luma and chroma components.

Once reference blocks 1402 and 1404 are determined and/or generated for current block 1400 using inter prediction, the encoder may determine a difference between current block 1400 and each of reference blocks 1402 and 1404. The differences may be referred to as prediction errors or residuals. The encoder may then store and/or signal in a bitstream the prediction errors and their respective related motion information for decoding or other forms of consumption. The motion information for reference block 1402 may include motion vector 1406 and the reference index pointing into the reference picture list comprising the reference picture of reference block 1402. In other instances, the motion information for reference block 1402 may include an indication of motion vector 1406 and an indication of the reference index pointing into the reference picture list comprising reference picture 1402. The motion information for reference block 1404 may include motion vector 1408 and the reference index pointing into the reference picture list comprising the reference picture of reference block 1404. In other instances, the motion information for reference block 1404 may include an indication of motion vector 1408 and an indication of the reference index pointing into the reference picture list comprising reference picture 1404. A decoder may decode current block 1400 by determining and/or generating reference blocks 1402 and 1404, which together form the prediction of current block 1400, using their respective motion information and combining the predictions with the prediction errors.

In HEVC, VVC, and other video compression schemes, motion information may be predictively coded before being stored or signaled in a bit stream. The motion information for a current block may be predictively coded based on the motion information of neighboring blocks of the current block. In general, the motion information of the neighboring blocks is often correlated with the motion information of the current block because the motion of an object represented in the current block is often the same or similar to the motion of objects in the neighboring blocks. Two of the motion information prediction techniques in HEVC and VVC include advanced motion vector prediction (AMVP) and inter prediction block merging.

An encoder, such as encoder 200 in FIG. 2, may code a motion vector using the AMVP tool as a difference between the motion vector of a current block being coded and a motion vector predictor (MVP). An encoder may select the MVP from a list of candidate MVPs. The candidate MVPs may come from previously decoded motion vectors of neighboring blocks in the current picture of the current block or blocks at or near the collocated position of the current block in other reference pictures. Both the encoder and decoder may generate or determine the list of candidate MVPs.

After the encoder selects an MVP from the list of candidate MVPs, the encoder may signal, in a bitstream, an indication of the selected MVP and a motion vector difference (MVD). The encoder may indicate the selected MVP in the bitstream by an index pointing into the list of candidate MVPs. The MVD may be calculated based on the difference between the motion vector of the current block and the selected MVP. For example, for a motion vector represented by a horizontal component (MVₓ) and a vertical displacement (MV_{y}) relative to the position of the current block being coded, the MVD may be represented by two components calculated as follows: ${MVD}_{x} = {MV}_{x} - {MVP}_{x}$ (15) ${MVD}_{y} = {MV}_{y} - {MVP}_{y}$ (16) where MVD*ₓ* and MVD*_{y}* respectively represent the horizontal and vertical components of the MVD, and MVP*ₓ* and MVP*_{y}* respectively represent the horizontal and vertical components of the MVP. A decoder, such as decoder 300 in FIG. 3, may decode the motion vector by adding the MVD to the MVP indicated in the bitstream. The decoder may then decode the current block by determining and/or generating the reference block, which forms the prediction of the current block, using the decoded motion vector and combining the prediction with the prediction error.

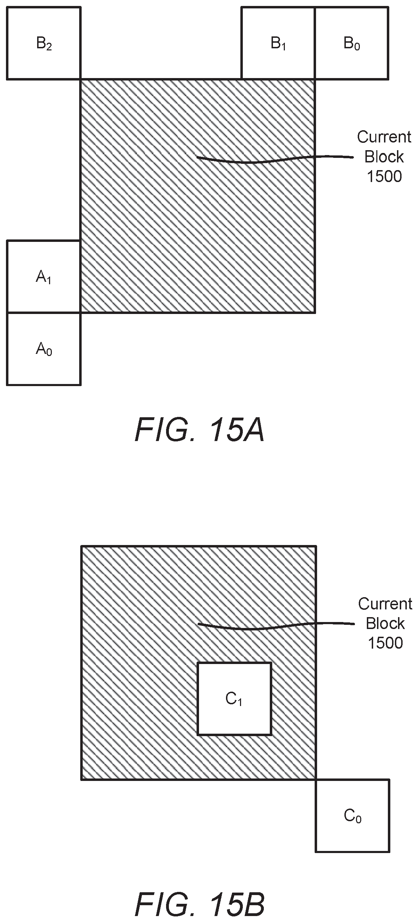

In HEVC and VVC, the list of candidate MVPs for AMVP may comprise two candidates referred to as candidates A and B. Candidates A and B may include up to two spatial candidate MVPs derived from five spatial neighboring blocks of the current block being coded, one temporal candidate MVP derived from two temporal, co-located blocks when both spatial candidate MVPs are not available or are identical, or zero motion vectors when the spatial, temporal, or both candidates are not available. FIG. 15A illustrates the location of the five spatial candidate neighboring blocks relative to a current block 1500 being encoded. The five spatial candidate neighboring blocks are respectively denoted A₀, A₁, B₀, B₁, and B₂. FIG. 15B illustrates the location of the two temporal, co-located blocks relative to current block 1500 being coded. The two temporal, co-located blocks are denoted C₀ and C₁ and are included in a reference picture that is different from the current picture of current block 1500.

An encoder, such as encoder 200 in FIG. 2, may code a motion vector using the inter prediction block merging tool also referred to as merge mode. Using merge mode, the encoder may reuse the same motion information of a neighboring block for inter prediction of a current block. Because the same motion information of a neighboring block is used, no MVD needs to be signaled and the signaling overhead for signaling the motion information of the current block may be small in size. Similar to AMVP, both the encoder and decoder may generate a candidate list of motion information from neighboring blocks of the current block. The encoder may then determine to use (or inherit) the motion information of one neighboring block's motion information in the candidate list for predicting the motion information of the current block being coded. The encoder may signal, in the bit stream, an indication of the determined motion information from the candidate list. For example, the encoder may signal an index pointing into the list of candidate motion information to indicate the determined motion information.

In HEVC and VVC, the list of candidate motion information for merge mode may comprise up to four spatial merge candidates that are derived from the five spatial neighboring blocks used in AMVP as shown in FIG. 15A, one temporal merge candidate derived from two temporal, co-located blocks used in AMVP as shown in FIG. 15B, and additional merge candidates including bi-predictive candidates and zero motion vector candidates.

It should be noted that inter prediction may be performed in other ways and variants than those described above. For example, motion information prediction techniques other than AMVP and merge mode are possible. In addition, although the description above was primarily made with respect to inter prediction modes in HEVC and VVC, it will be understood that the techniques of the present disclosure described above and further below may be applied to other inter prediction modes, including those of other video coding standards like VP8, VP9, AV1, and the like. In addition, history based motion vector prediction (HMVP), combined intra/inter prediction mode (CIIP), and merge mode with motion vector difference (MMVD) as described in VVC may also be performed and are within the scope of the present disclosure.

In inter prediction, a block matching technique may be applied to determine a reference block in a different picture than the current block being encoded. Block matching techniques have also been applied to determine a reference block in the same picture as a current block being encoded. However, it has been determined that for camera-captured videos, a reference block in the same picture as the current block determined using block matching may often not accurately predict the current block. For screen content video this is generally not the case. Screen content video may include, for example, computer generated text, graphics, and animation. Within screen content, there is often repeated patterns (e.g., repeated patterns of text and graphics) within the same picture. Therefore, a block matching technique applied to determine a reference block in the same picture as a current block being encoded may provide efficient compression for screen content video.

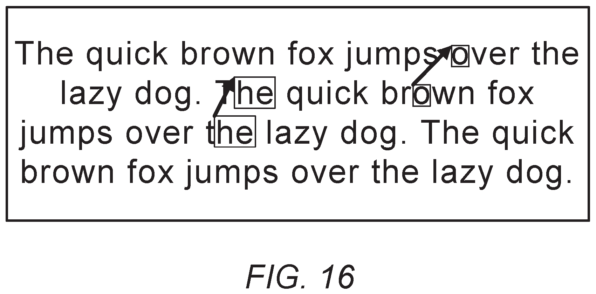

HEVC and VVC both include a prediction technique to exploit the correlation between blocks of samples within the same picture of screen content video. This technique is referred to as intra block (IBC) or current picture referencing (CPR). Similar to inter prediction, an encoder may apply a block matching technique to determine a displacement vector (referred to as a block vector (BV)) that indicates the relative displacement from the current block to a reference block (or intra block compensated prediction) that "best matches" the current block. The encoder may determine the best matching reference block from blocks tested during a searching process similar to inter prediction. The encoder may determine that a reference block is the best matching reference block based on one or more cost criterion. The one or more cost criterion may be, for example, a difference (e.g., sum of squared differences (SSD), sum of absolute differences (SAD), sum of absolute transformed differences (SATD), or difference determined based on a hash function) between the prediction samples of the reference block and the original samples of the current block. A reference block may correspond to prior decoded blocks of samples of the current picture. The reference block may comprise decoded blocks of samples of the current picture prior to being processed by in-loop filtering operations, like deblocking or SAO filtering. FIG. 16 illustrates an example of IBC applied for screen content. The rectangular portions with arrows beginning at their boundaries are current blocks being encoded and the rectangular portions that the arrows point to are the reference blocks for predicting the current blocks.

Once a reference block is determined and/or generated for a current block using IBC, the encoder may determine a difference (e.g., a corresponding sample-by-sample difference) between the reference block and the current block. The difference may be referred to as a prediction error or residual. The encoder may then store and/or signal in a bitstream the prediction error and the related prediction information for decoding or other forms of consumption. The prediction information may include a BV. In other instances, the prediction information may include an indication of the BV. A decoder, such as decoder 300 in FIG. 3, may decode the current block by determining and/or generating the reference block, which forms the prediction of the current block, using the prediction information and combining the prediction with the prediction error.

In HEVC, VVC, and other video compression schemes, a BV may be predictively coded before being stored or signaled in a bit stream. The BV for a current block may be predictively coded based on the BV of neighboring blocks of the current block. For example, an encoder may predictively code a BV using the merge mode as explained above for inter prediction or a similar technique as AMVP also explained above for inter prediction. The technique similar to AMVP may be referred to as BV prediction and difference coding.

For BV prediction and difference coding, an encoder, such as encoder 200 in FIG. 2, may code a BV as a difference between the BV of a current block being coded and a BV predictor (BVP). An encoder may select the BVP from a list of candidate BVPs. The candidate BVPs may come from previously decoded BVs of neighboring blocks of the current block in the current picture. Both the encoder and decoder may generate or determine the list of candidate BVPs.

After the encoder selects a BVP from the list of candidate BVPs, the encoder may signal, in a bitstream, an indication of the selected BVP and a BV difference (BVD). The encoder may indicate the selected BVP in the bitstream by an index pointing into the list of candidate BVPs. The BVD may be calculated based on the difference between the BV of the current block and the selected BVP. For example, for a BV represented by a horizontal component (BVₓ) and a vertical component (BV_{y}) relative to the position of the current block being coded, the BVD may represented by two components calculated as follows: ${BVD}_{x} = {BV}_{x} - {BVP}_{x}$ (17) ${BVD}_{y} = {BV}_{y} - {BVP}_{y}$ (18)
where BVD*ₓ* and BVD*_{y}* respectively represent the horizontal and vertical components of the BVD, and BVP*ₓ* and BVP*_{y}* respectively represent the horizontal and vertical components of the BVP. A decoder, such as decoder 300 in FIG. 3, may decode the BV by adding the BVD to the BVP indicated in the bitstream. The decoder may then decode the current block by determining and/or generating the reference block, which forms the prediction of the current block, using the decoded BV and combining the prediction with the prediction error.

In HEVC and VVC, the list of candidate BVPs may comprise two candidates referred to as candidates A and B. Candidates A and B may include up to two spatial candidate BVPs derived from five spatial neighboring blocks of the current block being encoded, or one or more of the last two coded BVs when spatial neighboring candidates are not available (e.g., because they are coded in intra or inter mode). The location of the five spatial candidate neighboring blocks relative to a current block being encoded using IBC are the same as those shown in FIG. 15A for inter prediction. The five spatial candidate neighboring blocks are respectively denoted A₀, A₁, B₀, B₁, and B₂.

As explained above with respect to FIGS. 2 and 3, entropy coding may be performed at the end of the video encoding process and at the beginning of the video decoding process. Entropy coding is a technique for compressing a sequence of symbols by representing symbols with greater probability of occurring using fewer bits than symbols with less probability of occurring. When the compressed sequence of symbols is represented in bits {0, 1}, Shannon's information theory provides that the optimal average code length for a symbol with probability p is -log₂*p*.

Arithmetic coding is one method of entropy coding. Arithmetic coding is based on recursive interval subdivision. To arithmetically encode a symbol that takes a value from an *m-ary* source alphabet, an initial coding interval may be divided into m disjoint subintervals. Each of the m disjoint subintervals may have a width proportional to the probability of the symbol having a different one of the values in the *m-ary* source alphabet. The probabilities of the symbol having the different values in the *m-ary* source alphabet may be referred to as a probability model for the symbol. The symbol is arithmetically encoded by choosing the subinterval corresponding to the actual value of the symbol as the new coding interval. By recursively applying this interval-subdivision scheme to each symbol *sᵢ* of a given sequence s = {*s₁, s₂,* ..., *s_{N}*), the encoder may determine a value in the range of the final coding interval, after the Nth interval subdivision, as the arithmetic code word for the sequence s. Each successive symbol of the sequence s that is encoded reduces the size of the coding interval in accordance with the probability model of the symbol. The more likely symbol values reduce the size of the coding interval by less than the unlikely symbol values and hence add fewer bits to the arithmetic code word for the sequence **s** in accordance with the general principle of entropy coding.

Arithmetic decoding is based on the same recursive interval subdivision. To arithmetically decode a symbol that takes a value from an *m-ary* source alphabet, an initial coding interval may be divided into *m* disjoint subintervals. Each of the *m* disjoint subintervals may have a width proportional to the probability of the symbol having a different one of the values in the *m-ary* source alphabet. The probabilities of the symbol having the different values in the *m-ary* source alphabet may be referred to as a probability model for the symbol as mentioned above. The symbol is arithmetically decoded from an arithmetic code word by determining the symbol value corresponding to the subinterval in which the arithmetic code word falls within. This subinterval then becomes the new coding interval. The decoder may sequentially decode each symbol *sᵢ* of a sequence **s** = {*s₁*, *s₂*, . . ., *s_{N}*) by recursively applying this interval-subdivision scheme *N* times and determining which subinterval the arithmetic code word falls within during each iteration.

For each symbol arithmetically coded, a different probability model may be used to subdivide the coding interval. For example, the probability model for a symbol may be determined by a fixed selection (e.g., based on a position of the symbol in a sequence of symbols) or by an adaptive selection from among two or more probability models (e.g., based on information related to the symbol). It is also possible for two or more symbols in a sequence of symbols to use a joint probability model. Selection of a probability model for a symbol is referred to as context modeling. Arithmetic coding that employs context modeling may be referred to more specifically as context-based arithmetic coding. In addition to probability model selection for a symbol, the selected probability model may be updated based on the actual coded value of the symbol. For example, the probability of the actual coded value of the symbol may be increased in the probability model while the probability of all other values may be decreased. Arithmetic coding that employs both context modeling and probability model adaptation may be referred to more specifically as context-based adaptive arithmetic coding.

The above description provides only one example of arithmetic coding. Other variations of arithmetic coding may be possible as would be appreciated by a person of ordinary skill in the art. For example, during arithmetic coding, a renormalization operation may be performed to ensure that the precision needed to represent the range and lower bound of a subinterval does not exceed the finite precision of registers used to store these values. In addition, other simplifications to the coding process may be made to decrease complexity, increase speed, and/or reduce power requirements of the implementation of the coding process in either hardware, software, or some combination of the two. For example, probabilities of symbols and lower bounds and ranges of subintervals may be approximated or quantized in such implementations.

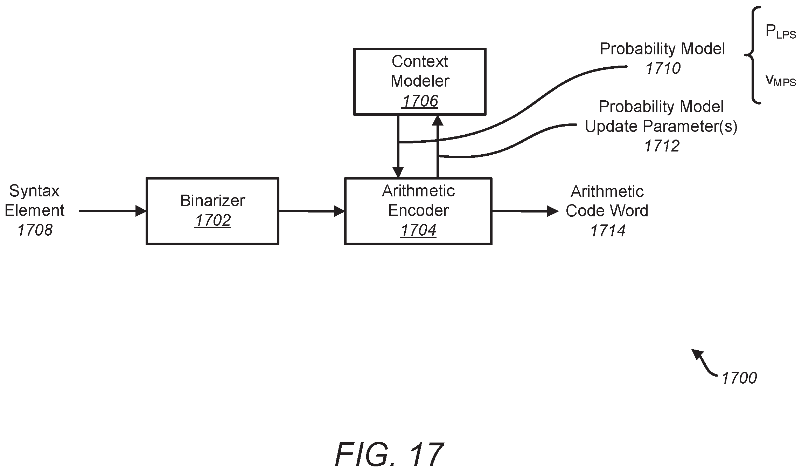

FIG. 17 illustrates an example implementation of a context-based adaptive binary arithmetic coding (CABAC) encoder 1700 in accordance with embodiments of the present disclosure. CABAC encoder 1700 may be implemented in a video encoder, such as video encoder 200 in FIG. 2, for entropy encoding syntax elements of a video sequence. As illustrated in FIG. 17, CABAC encoder 1700 includes a binarizer 1702, an arithmetic encoder 1704, and a context modeler 1706.

CABAC encoder 1700 may receive a syntax element 1708 for arithmetic encoding. Syntax elements, such as syntax element 1708, may be generated at a video encoder and may describe how a video signal may be reconstructed at a video decoder. For a coding unit (CU), the syntax elements may comprise an intra prediction mode based on the CU being intra predicted, motion data (e.g., MVD and MVP related data) based on the CU being inter predicted, or displacement data (e.g., BVD and BVP related data) based on the CU being predicted using IBC.

Binarizer 1702 may first map the value of syntax element 1708 to a sequence of binary symbols (also referred to as bins). Binarizer 1702 may define a unique mapping of values of syntax element 1708 to sequences of binary symbols. Binarization of syntax elements may help to improve probability modeling and implementation of arithmetic encoding. Binarizer 1702 may implement one or more binarization processes, such as unary, truncated unary, *k*-th order truncated Rice, *k-*th order exponential-Golomb (EGk), fixed-length, or some combination of two or more of these binarization processes. Binarizer 1702 may select a binarization process based on a type of syntax element 1708 and/or one or more syntax elements processed by CABAC encoder 1700 before syntax element 1708. Based on syntax element 1708 already being represented by a sequence of one or more binary symbols, binarizer 1702 may not process syntax element 1708. In another example, binarizer 1702 may not be used and syntax element 1708 represented by a sequence of one or more non-binary symbols may be directly encoded by CABAC encoder 1700.

After binarizer 1702 optionally maps the value of syntax element 1708 to a sequence of binary symbols, one or more of the binary symbols may be processed by arithmetic encoder 1704. Arithmetic encoder 1704 may process each of the one or more binary symbols in one of at least two modes: regular arithmetic encoding mode or bypass arithmetic encoding mode.

Arithmetic encoder 1704 may process binary symbols that do not have a uniform (or approximately uniform) probability distribution in regular arithmetic encoding mode (e.g., binary symbols that do not have a probability distribution of 0.5 for each of their two possible values). In regular arithmetic encoding mode, arithmetic encoder 1704 may perform arithmetic encoding as described above. For example, arithmetic encoder 1704 may subdivide a current coding interval into *m* disjoint subintervals. Each of the *m* disjoint subintervals may have a width proportional to the probability of the binary symbol having a different one of the values in an *m-ary* source alphabet. In the case of a binary symbol, *m* is equal to two and the current coding interval may be subdivided into two disjoint intervals that each have a width proportional to the probability of a different one of the two possible values {0, 1} for the binary symbol being encoded. The probabilities of the two possible values for the binary symbol may be indicated by a probability model 1710 for the binary symbol. Arithmetic encoder 1704 may then encode the binary symbol by choosing the subinterval corresponding to the actual value of the binary symbol as the new coding interval for the next binary symbol to be encoded.

Arithmetic encoder 1704 may receive probability model 1710 from context modeler 1706. Context modeler 1706 may determine probability model 1710 for the binary symbol by a fixed selection (e.g., based on a position of the binary symbol in the sequence of binary symbols representing syntax element 1708) or by an adaptive selection from among two or more probability models (e.g., based on information related to the binary symbol). As shown in FIG. 17, probability model 1710 may comprise two parameters: the probability P_{LPS} of the least probable symbol (LPS) and the value v_{MPS} of the most probable symbol (MPS). In other examples, probability model 1710 may comprise the probability P_{MPS} of the MPS in addition or alternatively to the probability P_{LPS} of the LPS. Similarly, in other examples, probability model 1710 may comprise the value v_{LPS} of the LPS in addition or alternatively to the value v_{MPS} of the MPS. After arithmetic encoder 1704 encodes the binary symbol, arithmetic encoder 1704 may provide one or more probability model update parameters 1712 to context modeler 1706. Context modeler 1706 may adapt probability model 1710 based on the one or more probability model update parameters 1712. For example, the one or more probability model update parameters 1712 may comprise the actual coded value of the binary symbol. Context modeler 1706 may update probability model 1710 by increasing P_{LPS} if the actual coded value of the binary symbol is not equal to v_{MPS} and by decreasing P_{LPS} otherwise.

Arithmetic encoder 1704 may process binary symbols that have (or are assumed to have) a uniform (or approximately uniform) probability distribution in bypass arithmetic encoding mode. Because binary symbols processed by arithmetic encoder 1704 in bypass arithmetic encoding mode have (or are assumed to have) a uniform (or approximately uniform) probability distribution, arithmetic encoder 1704 may bypass probability model determination and adaptation performed in regular arithmetic encoding mode when encoding these binary symbols to speed up the encoding process. In addition, subdivision of the current coding interval may be simplified given the uniform (or assumed uniform) probability distribution. For example, the current coding interval may be partitioned into two disjoint subintervals of equal width, which may be realized using a simple implementation that may further speed up the encoding process. Arithmetic encoder 1704 encodes the binary symbol by choosing the subinterval corresponding to the value of the binary symbol as the new coding interval for the next binary symbol to be encoded. The resulting increase in encoding speed for binary symbols encoded by arithmetic encoder 1704 in bypass arithmetic encoding mode is often important because CABAC encoding may have throughput limitations.

After processing a number of binary symbols (e.g., corresponding to one or more syntax elements), arithmetic encoder 1704 may determine a value in the range of the final coding interval as an arithmetic code word 1714 for the binary symbols. Arithmetic encoder 1704 may then output arithmetic code word 1714. For example, arithmetic encoder 1704 may output arithmetic code word 1714 to a bitstream that may be received and processed by a video decoder.

As explained above, HEVC and VVC both include a prediction technique to exploit the correlation between blocks of samples within the same picture. This technique is referred to as intra block (IBC). IBC is also included in the Enhanced Compression Model (ECM) software algorithm that is currently under coordinated exploration study by the Joint Video Exploration Team (JVET) of ITU-T Video Coding Experts Group (VCEG) and ISO/IEC MPEG as a potential enhanced video coding technology beyond the capabilities of VVC.

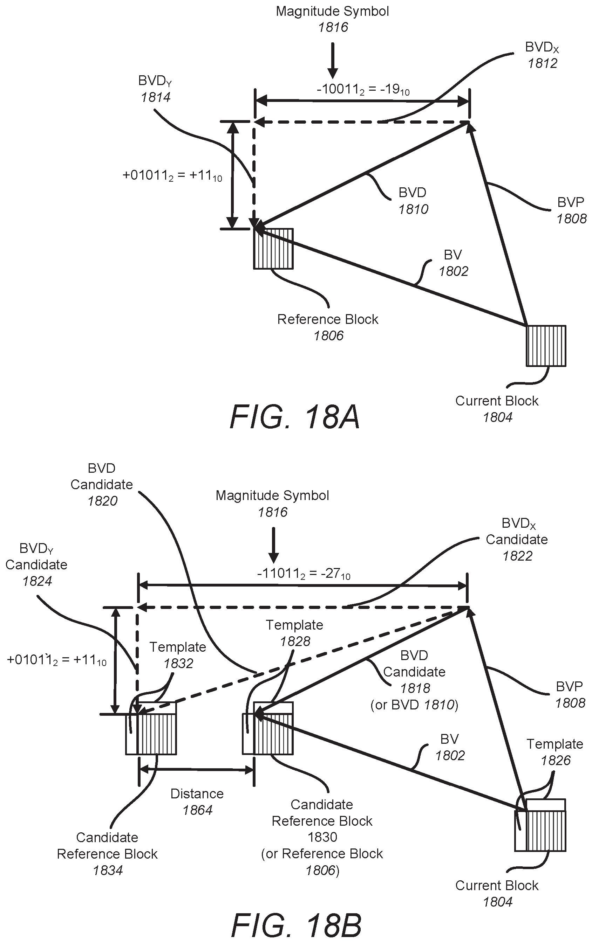

FIG. 18A illustrates an example of IBC in accordance with embodiments of the present disclosure. During IBC, an encoder may determine a block vector (BV) 1802 that indicates the displacement from a current block 1804 to a reference block (or intra block compensated prediction) 1806. The encoder may determine reference block 1806 from among one or more reference blocks tested during a searching process. For example, for each of the one or more reference blocks tested during a searching process, the encoder may determine a difference (e.g., sum of squared differences (SSD), sum of absolute differences (SAD), sum of absolute transformed differences (SATD), or difference determined based on a hash function) between the samples of the reference block and the samples of current block 1804. The encoder may determine reference block 1806 from among the one or more reference blocks based on reference block 1806 having the smallest difference from current block 1804 among the one or more reference blocks or based on some other criteria. Reference block 1806 and the one or more other reference blocks tested during the searching process may comprise decoded (or reconstructed) samples. The decoded (or reconstructed) samples may not have been processed by in-loop filtering operations, like deblocking or SAO filtering.

Once reference block 1806 is determined for current block 1804, the encoder may use reference block 1806 to predict current block 1804. For example, the encoder may determine or use a difference (e.g., a corresponding sample-by-sample difference) between reference block 1806 and current block 1804. The difference may be referred to as a prediction error or residual. The encoder may then signal the prediction error and the related prediction information in a bitstream. The prediction information may include BV 1802. In other instances, the prediction information may include an indication of BV 1802. A decoder, such as decoder 300 in FIG. 3, may receive the bitstream and decode current block 1804 by determining reference block 1806, which forms the prediction of current block 1804, using the prediction information and combining the prediction with the prediction error.

BV 1802 may be predictively encoded before being signaled in a bit stream. BV 1802 may be predictively encoded based on the BVs of neighboring blocks of current block 1804 or BVs of other blocks. For example, the encoder may predictively encode BV 1802 using the merge mode or AMVP as explained above. For AMVP, the encoder may encode BV 1802 as a difference between BV 1802 and a BV predictor (BVP) 1808 as shown in FIG. 18A. The encoder may select BVP 1808 from a list of candidate BVPs. The candidate BVPs may come from previously decoded BVs of neighboring blocks of current block 1804 or other sources. Both the encoder and decoder may generate or determine the list of candidate BVPs.

After the encoder selects BVP 1808 from the list of candidate BVPs, the encoder may signal, in a bitstream, an indication of BVP 1808 and a BV difference (BVD) 1810. The encoder may indicate BVP 1808 in the bitstream by an index, pointing into the list of candidate BVPs, or one or more flags. BVD 1810 may be calculated based on the difference between BV 1802 and BVP 1808. BVD 1810 may comprise a horizontal component (BVD*ₓ*) 1812 and a vertical component (BVD*_{y}*) 1814 that may be respectively determined in accordance with (17) and (18) above. The two components BVD*ₓ* 1812 and BVD*_{y}* 1814 each comprise a magnitude and sign. As shown in FIG. 18A, BVD*ₓ* 1812 has a magnitude of 10011 in fixed length binary (or 19 in base 10) and a negative sign (the positive horizontal direction points to the right in the example of FIG. 18A). As further shown in FIG. 18A, BVD*_{y}* 1814 has a magnitude of 01011 in fixed length binary (or 11 in base 10) and a positive sign (the positive vertical direction points down in the example of FIG. 18A). The encoder may indicate BVD 1810 in the bitstream via its two components BVD*ₓ* 1812 and BVD*_{y}* 1814.

The decoder may decode BV 1802 by adding BVD 1810 to BVP 1808. The decoder may then decode current block 1804 by determining reference block 1806, which forms the prediction of current block 1804, using BV 1802 and combining the prediction with the prediction error. The decoder may determine reference block 1806 by adding BV 1802 to the location of current block 1804, which may give the location of reference block 1806.

As explained above, the magnitude of BVD 1810 is encoded in bypass arithmetic encoding mode in existing technologies. Although the bypass arithmetic encoding mode may be used to speed up the arithmetic encoding process, compression of the magnitude symbols of BVD 1810 encoded in bypass arithmetic encoding mode is limited because their probability distributions are uniformly distributed (or at least assumed to be uniformly distributed). From information theory, a symbol cannot be compressed at a rate less than its entropy without loss of information, and a symbol with uniform probability distribution has maximum entropy. Thus, symbols encoded using the bypass arithmetic encoding mode generally require more bits to encode than symbols encoded using the regular arithmetic encoding mode.

Embodiments of the present disclosure may improve the compression efficiency of one or more magnitude symbols of BVD 1810 compared to existing technologies. For example, instead of directly entropy encoding a magnitude symbol of BVD 1810, the encoder may entropy encode an indication of whether a value of the magnitude symbol of BVD 1810 matches a value of the same magnitude symbol of a BVD candidate used as a predictor of BVD 1810. The indication of whether the value of the magnitude symbol of BVD 1810 matches the value of the magnitude symbol of the BVD predictor may have a non-uniform probability distribution and therefore provide improved compression efficiency. The encoder may select the BVD predictor from among a plurality of BVD candidates based on costs of the plurality of the BVD candidates. The BVD candidates may include a BVD candidate for each possible value of the magnitude symbol of BVD 1810. For example, a magnitude symbol of BVD 1810 represented in binary form has only two possible values. Therefore, the BVD candidates may include two BVD candidates for this representation (one for each possible value of the magnitude symbol in BVD 1810 being encoded): a first BVD candidate equal to BVD 1810 itself and a second BVD candidate equal to BVD 1810 but with the opposite (or other) value of the magnitude symbol of BVD 1810. The cost for each BVD candidate in the plurality of BVD candidates may be calculated based on a difference between a template of current block 1804 and a template of a candidate reference block. The candidate reference block may be displaced relative to the current block by a sum of the BVD candidate and BVP 1808.

To provide a more specific example, FIG. 18A indicates an example magnitude symbol 1816 of BVD 1810 to be entropy encoded. Magnitude symbol 1816 of BVD 1810 is the second most significant bit in the fixed length binary representation of horizontal component BVD*ₓ* 1812 of BVD 1810 and has a binary value of "0". As explained above, instead of directly entropy encoding magnitude symbol 1816 of BVD 1810, the encoder may entropy encode an indication of whether the value of magnitude symbol 1816 of BVD 1810 matches the value of the same magnitude symbol of a BVD candidate used as a predictor of BVD 1810. The encoder may select the BVD predictor from among a plurality of BVD candidates based on costs of the plurality of BVD candidates. The BVD candidates may include a BVD candidate for each of the two possible values {0, 1} of magnitude symbol 1816 of BVD 1810: a first BVD candidate 1818 equal to BVD 1810 itself and a second BVD candidate 1820 equal to BVD 1810 but with the opposite (or other) value of magnitude symbol 1816 of BVD 1810.

FIG. 18B illustrates both BVD candidates used to entropy encode magnitude symbol 1816 of BVD 1810. More specifically, FIG. 18B illustrates BVD candidate 1818 equal to BVD 1810 itself and BVD candidate 1820 equal to BVD 1810 but with the opposite (or other) value of magnitude symbol 1816 of BVD 1810. With the opposite (or other) value of magnitude symbol 1816 of BVD candidate 1818, BVD candidate 1820 has a horizontal component BVD*ₓ* 1822 with a magnitude of 11011 in fixed length binary (or 27 in base 10) and a negative sign. The vertical component BVD*_{y}* 1824 of BVD candidate 1820 has the same magnitude of 01011 in fixed length binary (or 11 in base 10) and positive sign as vertical component BVD*_{y}* 1814 of BVD candidate 1818 (or BVD 1810).

The cost for each BVD candidate in the plurality of BVD candidates may be calculated based on a difference between a template of current block 1804 and a template of a candidate reference block displaced relative to current block 1804 by a sum of the BVD candidate and BVP 1808. For example, the encoder may determine a cost for BVD candidate 1818 based on a difference between a template 1826 of current block 1804 and a template 1828 of a candidate reference block 1830 displaced relative to current block 1804 by a sum of BVD candidate 1818 and BVP 1808. The encoder may determine the difference between template 1826 and template 1828 based on a difference (e.g., sum of squared differences (SSD), sum of absolute differences (SAD), sum of absolute transformed differences (SATD), mean removal SAD, or mean removal SSD) between samples of template 1826 and samples of template 1828. The encoder may similarly determine a cost for BVD candidate 1820 based on a difference between template 1826 of current block 1804 and a template 1832 of a candidate reference block 1834 displaced relative to current block 1804 by a sum of BVD candidate 1820 and BVP 1808. The encoder may determine the difference between template 1826 and template 1832 based on a difference (e.g., SSD, SAD, SATD, mean removal SAD, or mean removal SSD) between samples of template 1826 and samples of template 1828. Templates 1826, 1828, and 1832 may comprise one or more samples to the left and/or above their respective blocks. For example, templates 1826, 1828, and 1832 may comprise samples from one or more columns to left of their respective block and/or from one or more rows above their respective block. FIG. 18B illustrates one example position and shape (L-shape rotated clockwise 90 degrees) of templates 1826, 1828, and 1832.

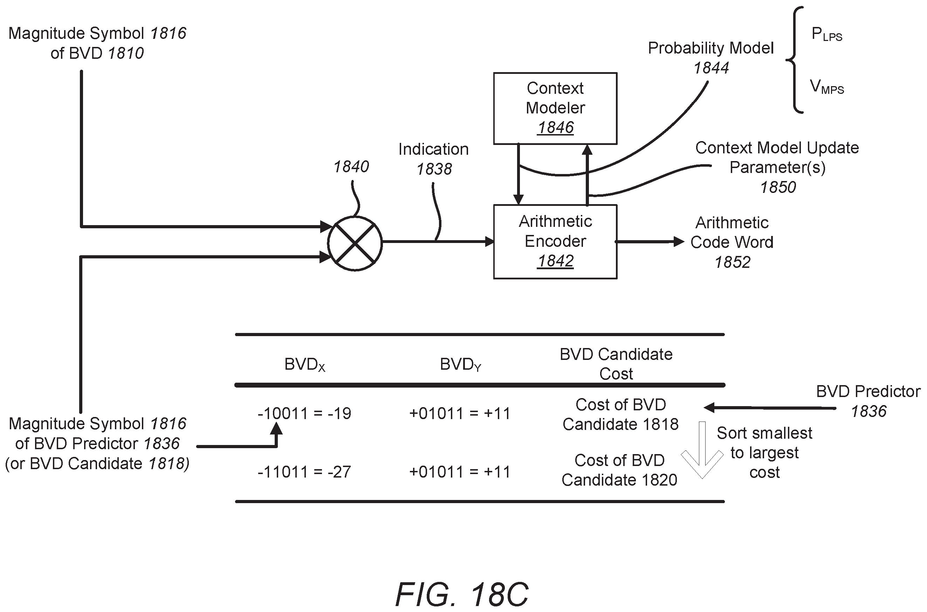

After determining the costs of each of the plurality of BVD candidates, the encoder may select one of the plurality of BVD candidates as a BVD predictor. For example, the encoder may select the BVD candidate with the smallest cost among the plurality of BVD candidates as the BVD predictor. FIG. 18C illustrates a table with the components (horizontal and vertical) and costs of each BVD candidate 1818 and 1820 in respective rows. In this example, BVD candidates 1818 and 1820 are assumed to be the only BVD candidates. In other example, more BVD candidates may be used. The rows of the table are sorted by the costs of BVD candidates 1818 and 1820, with the BVD candidate with the smallest cost on top. In this example, BVD candidate 1818 has the smallest cost among BVD candidates 1818 and 1820. The encoder may therefore select BVD candidate 1818 as the BVD predictor 1836 for BVD 1810.

After selecting BVD candidate 1818 as BVD predictor 1836, the encoder may entropy encode an indication 1838 of whether the value of magnitude symbol 1816 of BVD 1810 matches the value of magnitude symbol 1816 in BVD predictor 1836. Magnitude symbol 1816 of BVD predictor 1836 has a value of "0", which matches the value of magnitude symbol 1816 of BVD 1810. In this example, indication 1838 would indicate that the value of magnitude symbol 1816 of BVD 1810 matches the value of magnitude symbol 1816 of BVD predictor 1836. In one example, indication 1838 may be a single bit that has the value: "0" when the value of magnitude symbol 1816 of BVD 1810 matches the value of magnitude symbol 1816 of BVD predictor 1836; and "1" when the value of magnitude symbol 1816 of BVD 1810 does not match the value of magnitude symbol 1816 of BVD predictor 1836. Logic 1840 may be used to determine indication 1838. In one example, logic 1840 may implement a logical exclusive or (XOR) function. It should be noted that in other examples where magnitude symbol 1816 is non-binary, indication 1838 may indicate the first candidate among the plurality of candidates (e.g., as sorted based on their respective costs) that has a value of magnitude symbol 1816 that matches the value of magnitude symbols 1816 in BVD 1810.

In the example of FIG. 18C, the encoder may entropy encode indication 1838 using arithmetic encoder 1842. Based on the method of determining indication 1838 as described above, indication 1838 may have a non-uniform probability distribution. Therefore, arithmetic encoder 1842 may process indication 1838 in regular arithmetic encoding mode as described above. For example, arithmetic encoder 1842 may subdivide a current coding interval into *m* disjoint subintervals. Each of the *m* disjoint subintervals may have a width proportional to the probability of the symbol being encoded having a different one of the values in an *m-ary* source alphabet. In the case of indication 1838, which is binary, *m* is equal to two and the current coding interval may be subdivided into two disjoint intervals that each have a width proportional to the probability of a different one of the two possible values {0, 1} for indication 1838 being encoded. The probabilities of the two possible values for indication 1838 may be indicated by a probability model 1844 for indication 1838. Arithmetic encoder 1842 may then encode indication 1838 by choosing the subinterval corresponding to the actual value of indication 1838 as the new coding interval for the next binary symbol to be encoded.

Arithmetic encoder 1842 may receive probability model 1844 from context modeler 1846. Context modeler 1846 may determine probability model 1844 for indication 1838 by a fixed selection or an adaptive selection from among two or more probability models. For example, context modeler 1846 may determine probability model 1844 by a fixed selection or an adaptive selection from among two or more probability models based on a position of magnitude symbol 1816 in BVD*ₓ* 1812 of BVD 1810 or an index of (e.g., a value indicating) the position of magnitude symbol 1816 in BVD*ₓ* 1812 of BVD 1810. The position (or index of the position) of magnitude symbol 1816 in BVD*ₓ* 1812 of BVD 1810 provides an indication of the distance 1864 (illustrated in FIG. 18B) between the two candidate BVDs. The likelihood of the value of magnitude symbol 1816 of BVD predictor 1836 matching the value of magnitude symbol 1816 of BVD 1810 may be proportional to distance 1864. Thus, the position (or index of the position) of magnitude symbol 1816 in BVD*ₓ* 1812 of BVD 1810 may be helpful in selecting probability model 1844 for indication 1838.

For adaptive selection from among two or more probability models, context modeler 1846 may compare the position (or index of the position) of magnitude symbol 1816 in BVD*ₓ* 1812 of BVD 1810 to one or more thresholds. For example, context modeler 1846 may compare the position (or index of the position) of magnitude symbol 1816 in BVD*ₓ* 1812 of BVD 1810 to a first threshold. Based on the position (or index of the position) of magnitude symbol 1816 in BVD*ₓ* 1812 of BVD 1810 being less than the threshold, context modeler 1846 may select a first probability model for indication 1838. Based on the position (or index of the position) of magnitude symbol 1816 in BVD*ₓ* 1812 of BVD 1810 being greater than the threshold, context modeler 1846 may select a second probability model for indication 1838. In another example, based on the position (or index of the position) of magnitude symbol 1816 in BVD*ₓ* 1812 of BVD 1810 being greater than the threshold, context modeler 1846 may compare the position (or index of the position) of magnitude symbol 1816 in BVD*ₓ* 1812 of BVD 1810 to a second threshold. Based on the position (or index of the position) of magnitude symbol 1816 in BVD*ₓ* 1812 of BVD 1810 being less than the second threshold, context modeler 1846 may select a second probability model for indication 1838. Based on the position (or index of the position) of magnitude symbol 1816 in BVD*ₓ* 1812 of BVD 1810 being greater than the second threshold, context modeler 1846 may select a third probability model for indication 1838.

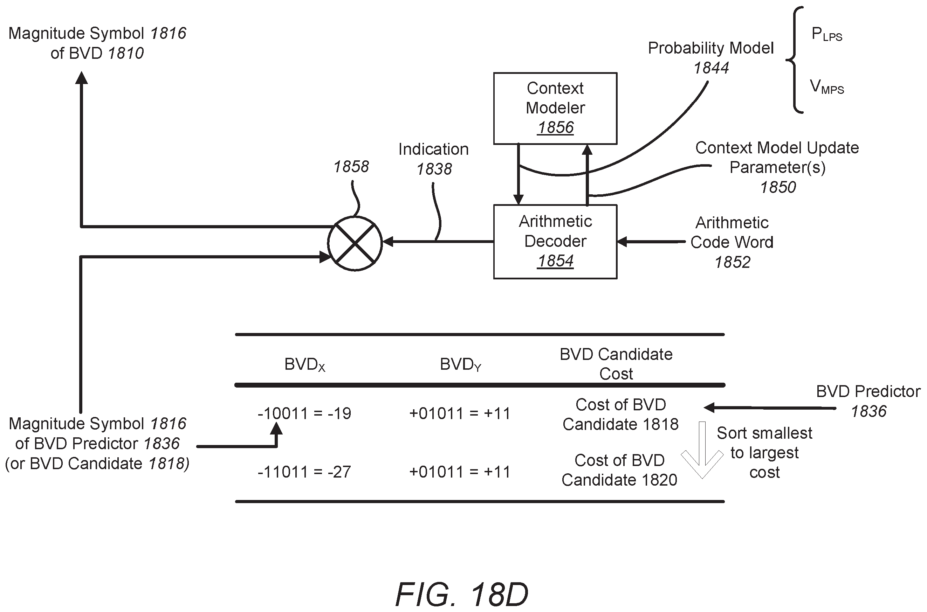

In another example, context modeler 1846 may determine probability model 1844 by a fixed selection or an adaptive selection from among two or more probability models based on the change in value of BVD 1810 (or BVD*ₓ* 1812 of BVD 1810) for an incremental change in value of magnitude symbol 1816 of BVD 1810. The change in value of BVD 1810 (or BVD*ₓ* 1812 of BVD 1810) for an incremental change in value of magnitude symbol 1816 of BVD 1810 may be determined as 2⁽ⁿ⁻¹⁾, where n is the bit position of magnitude symbol 1816 in BVD*ₓ* 1812 of BVD 1810. In the example of FIG. 18, n=4 and therefore the change in value of BVD 1810 (or BVD*ₓ* 1812 of BVD 1810) for an incremental change in value of magnitude symbol 1816 of BVD 1810 may be determined as 2⁽⁴⁻¹⁾ or 8. The change in value of BVD 1810 (or BVD*ₓ* 1812 of BVD 1810) for an incremental change in value of magnitude symbol 1816 of BVD 1810 provides an indication of the distance 1864 (illustrated in FIG. 18B) between the two candidate BVDs. As mentioned above, the likelihood of the value of magnitude symbol 1816 of BVD predictor 1836 matching the value of magnitude symbol 1816 of BVD 1810 may be proportional to distance 1864. Thus, the change in value of BVD 1810 (or BVD*ₓ* 1812 of BVD 1810) for an incremental change in value of magnitude symbol 1816 of BVD 1810 may be helpful in selecting probability model 1844 for indication 1838.

For adaptive selection from among two or more probability models, context modeler 1846 may compare the value of BVD 1810 (or BVD*ₓ* 1812 of BVD 1810) for an incremental change in value of magnitude symbol 1816 of BVD 1810 to one or more thresholds. For example, context modeler 1846 may compare the value of BVD 1810 (or BVD*ₓ* 1812 of BVD 1810) for an incremental change in value of magnitude symbol 1816 of BVD 1810 to a first threshold. Based on the value of BVD 1810 (or BVD*ₓ* 1812 of BVD 1810) for an incremental change in value of magnitude symbol 1816 of BVD 1810 being less than the threshold, context modeler 1846 may select a first probability model for indication 1838. Based on the value of BVD 1810 (or BVD*ₓ* 1812 of BVD 1810) for an incremental change in value of magnitude symbol 1816 of BVD 1810 being greater than the threshold, context modeler 1846 may select a second probability model for indication 1838. In another example, based on the value of BVD 1810 (or BVD*ₓ* 1812 of BVD 1810) for an incremental change in value of magnitude symbol 1816 of BVD 1810 being greater than the threshold, context modeler 1846 may compare the value of BVD 1810 (or BVD*ₓ* 1812 of BVD 1810) for an incremental change in value of magnitude symbol 1816 of BVD 1810 to a second threshold. Based on the value of BVD 1810 (or BVD*ₓ* 1812 of BVD 1810) for an incremental change in value of magnitude symbol 1816 of BVD 1810 being less than the second threshold, context modeler 1846 may select a second probability model for indication 1838. Based on the value of BVD 1810 (or BVD*ₓ* 1812 of BVD 1810) for an incremental change in value of magnitude symbol 1816 of BVD 1810 being greater than the second threshold, context modeler 1846 may select a third probability model for indication 1838.

As shown in FIG. 18C, probability model 1844 may comprise two parameters: the probability P_{LPS} of the least probable symbol (LPS) for indication 1838 and the value v_{MPS} of the most probable symbol (MPS) for indication 1838. In other examples, probability model 1844 may comprise the probability P_{MPS} of the MPS for indication 1838 in addition or alternatively to the probability P_{LPS} of the LPS for indication 1838. Similarly, in other examples, probability model 1844 may comprise the value v_{LPS} of the LPS for indication 1838 in addition or alternatively to the value v_{MPS} of the MPS for indication 1838. After arithmetic encoder 1842 encodes indication 1838, arithmetic encoder 1842 may provide one or more probability model update parameters 1850 to context modeler 1846. Context modeler 1846 may adapt probability model 1844 based on the one or more probability model update parameters 1850. For example, the one or more probability model update parameters 1850 may comprise the actual coded value of indication 1838. Context modeler 1846 may update probability model 1844 by increasing P_{LPS} for indication 1838 if the actual coded value of indication 1838 is not equal to v_{MPS} and by decreasing P_{LPS} for indication 1838 otherwise.

After processing a number of binary symbols (e.g., corresponding to one or more syntax elements), arithmetic encoder 1842 may determine a value in the range of the final coding interval as an arithmetic code word 1852 for the binary symbols. Arithmetic encoder 1842 may then output arithmetic code word 1852. For example, arithmetic encoder 1842 may output arithmetic code word 1852 to a bitstream that may be received and processed by a video decoder.

FIG. 18D illustrates an example of a decoder (e.g., decoder 300 in FIG. 3) that may receive arithmetic code word 1852, arithmetically decode indication 1838 from arithmetic code word 1852, and use indication 1838 to determine magnitude symbol 1816 of BVD 1810 in accordance with embodiments of the present disclosure.

The decoder may receive arithmetic code word 1852 in a bitstream. The decoder may provide arithmetic code word 1852 to an arithmetic decoder 1854. Based on the method of determining indication 1838 as described above, indication 1838 may have a non-uniform probability distribution. Therefore, arithmetic decoder 1854 may process indication 1838 in regular arithmetic decoding mode. For example, arithmetic decoder 1854 may perform recursive interval subdivision as explained above to decode symbols encoded by arithmetic code word 1852. For example, arithmetic decoder 1854 may arithmetically decode a symbol that takes a value from an *m-ary* source alphabet by dividing an initial coding interval into *m* disjoint subintervals. Each of the *m* disjoint subintervals may have a width proportional to the probability of the symbol having a different one of the values in the *m-ary* source alphabet. In the case of binary symbols like indication 1838, *m* is equal to two and the initial coding interval may be subdivided into two disjoint intervals that each have a width proportional to the probability of a different one of the two possible values {0, 1}. The probabilities of the symbol having the different values in the *m-ary* source alphabet may be referred to as a probability model for the symbol as mentioned above. The symbol is arithmetically decoded from arithmetic code word 1852 by determining the symbol value corresponding to the subinterval in which the arithmetic code word falls within. The decoder may sequentially decode each symbol *sᵢ* of a sequence **s** = {*s₁*, *s₂*, . . ., *s_{N}*) encoded by arithmetic code word 1852 by recursively applying this interval-subdivision scheme *N* times and determining which subinterval arithmetic code word 1852 falls within during each iteration.

When decoding the symbol corresponding to indication 1838, arithmetic decoder 1854 may receive probability model 1844 for indication 1838 from context modeler 1846. Context modeler 1856 may determine probability model 1844 for indication 1838 by a fixed selection or by an adaptive selection from among two or more probability models in the same manner as described above for context modeler 1846 in FIG. 18C.

As shown in FIG. 18D, after arithmetic decoder 1854 decodes indication 1838, arithmetic decoder 1854 may provide one or more probability model update parameters 1850 to context modeler 1856. Context modeler 1856 may adapt probability model 1844 based on the one or more probability model update parameters 1850. For example, the one or more probability model update parameters 1850 may comprise the actual decoded value of indication 1838. Context modeler 1856 may update probability model 1844 by increasing P_{LPS} for indication 1838 if the actual decoded value of indication 1838 is not equal to v_{MPS} and by decreasing P_{LPS} for indication 1838 otherwise.

After entropy decoding indication 1838, the decoder may determine the value of magnitude symbol 1816 of BVD 1810 based on the value of magnitude symbol 1816 of BVD predictor 1836 and the value of indication 1838. For example, the decoder may determine the value of magnitude symbol 1816 of BVD 1810 as being equal to the magnitude symbol of BVD predictor 1836 based on indication 1838 indicating that the value of magnitude symbol 1816 of BVD 1810 matches the value of magnitude symbol 1816 of BVD predictor 1836. Conversely, the decoder may determine the value of magnitude symbol 1816 of BVD 1810 as being not equal to (or equal to the opposite value of) magnitude symbol 1816 of BVD predictor 1836 based on indication 1838 indicating that the value of magnitude symbol 1816 of BVD 1810 does not match the value of magnitude symbol 1816 of BVD predictor 1836. Magnitude symbol 1816 of BVD predictor 1836 has a value of "0", which matches the value of magnitude symbol 1816 of BVD 1810. In this example, indication 1838 would indicate that the value of magnitude symbol 1816 of BVD 1810 matches the value of magnitude symbol 1816 of BVD predictor 1836. In one example, indication 1838 may be a single bit that has the value: "0" when the value of magnitude symbol 1816 of BVD 1810 matches the value of magnitude symbol 1816 of BVD predictor 1836; and "1" when the value of magnitude symbol 1816 of BVD 1810 does not match the value of magnitude symbol 1816 of BVD predictor 1836. Logic 1858 may be used to determine magnitude symbol 1816 of BVD 1810. In one example, logic 1858 may implement a logical XOR function. It should be noted that in other examples where magnitude symbol 1816 is non-binary, indication 1838 may indicate the first candidate among the plurality of candidates (e.g., as sorted based on their respective costs) that has a value of magnitude symbol 1816 that matches the value of magnitude symbols 1816 in BVD 1810.

The decoder may determine the value of magnitude symbol 1816 of BVD predictor 1836 in the same manner as the encoder described above. More specifically, the decoder may select BVD predictor 1836 from among a plurality of BVD candidates based on costs of the plurality of the BVD candidates. The BVD candidates may include a BVD candidate for each possible value of the magnitude symbol of BVD 1810. For example, a magnitude symbol of BVD 1810 represented in binary form has only two possible values. Therefore, the BVD candidates may include at least two BVD candidates for this representation (one for each possible value of the magnitude symbol in BVD 1810 being encoded): a first BVD candidate equal to BVD 1810 itself and a second BVD candidate equal to BVD 1810 but with the opposite (or other) value of the magnitude symbol of BVD 1810. The cost for each BVD candidate in the plurality of BVD candidates may be calculated as described above with respect to the encoder based on a difference between a template of current block 1804 and a template of a candidate reference block. The candidate reference block may be displaced relative to the current block by a sum of the BVD candidate and BVP 1808. The decoder may select the BVD candidate with the lost cost as BVD predictor 1836.

It should be noted that the approach discussed above with respect to FIG. 18 to entropy code an indication of whether a value of a magnitude symbol of a BVD matches a value of the magnitude symbol of a BVD candidate used as a predictor of the BVD may be applied to multiple magnitude symbols of the BVD. For example, the above approach may be further applied to one or more magnitude symbols of BVDₓ 1812 other than magnitude symbol 1816 and/or to one or more magnitude symbols of BVD*_{y}* 1814. For each additional magnitude symbol of BVDₓ 1812 and/or BVD*_{y}* 1814 that the approach discussed above with respect to FIG. 18 is applied, additional candidate BVPs may be determined. For example, applying the approach discussed above with respect to FIG. 18 to N magnitude symbols of BVDₓ 1812 and/or BVD*_{y}* 1814 (where N is an integer value), different BVP candidates may be determined - one for each possible combination of values for the N magnitude symbols of BVDₓ 1812 and/or BVD*_{y}* 1814. Cost values may be further determined for each of the BVP candidates and sorted to determine a BVD predictor for encoding each of the N magnitude symbols of BVDₓ 1812 and/or BVD*_{y}* 1814.

It should be further noted that the approach discussed above with respect to FIG. 18 to entropy code an indication of whether a value of a magnitude symbol of a BVD matches a value of the magnitude symbol of a BVD candidate used as a predictor of the BVD may be applied not only to one or more magnitude symbols of the BVD, but also to one or more sign symbols (e.g., the sign of the horizontal component and/or the sign of the vertical component) of the BVD. For example, the above approach may be further applied to one or more magnitude symbols of BVD 1810 and to one or more sign symbols of BVD 1810.

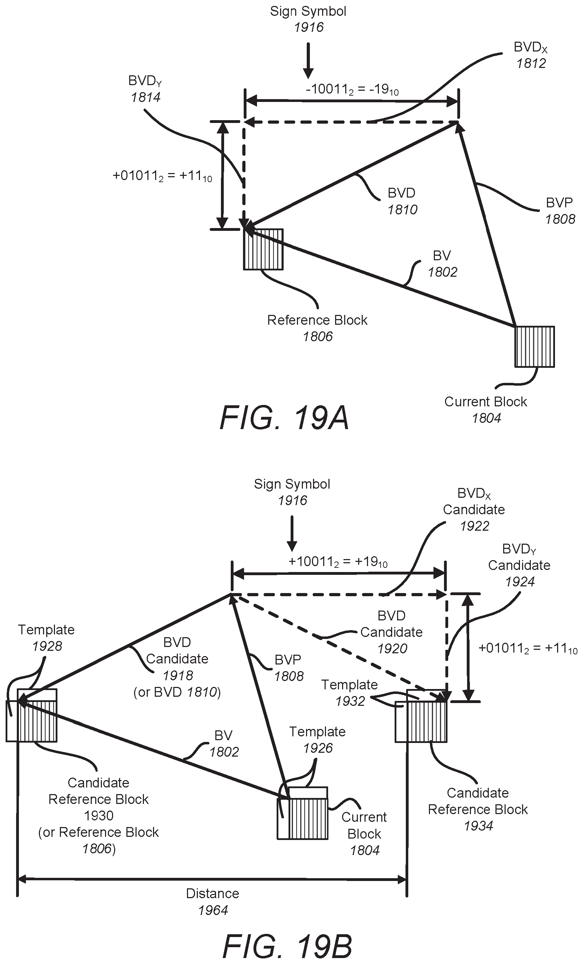

To provide a more specific example, FIG. 19A continues with and reproduces the example in FIG. 18A except that FIG. 19A further indicates an example sign symbol 1916 of BVD 1810 to be entropy encoded according to the approach discussed above with respect to FIG. 18. Sign symbol 1916 of BVD 1810 indicates the sign of horizontal component BVD*ₓ* 1812 of BVD 1810. In the example of FIG. 19A, the sign of BVD*ₓ* 1812 is negative (-). Sign symbol 1916 may indicate the sign of BVD*ₓ* 1812 using a binary symbol. For example, sign symbol 1916 may have a value of either binary "0" or "1" to indicate that the sign of BVD*ₓ* 1812 is negative (-) (a positive (+) sign may be indicated using the other binary symbol value not used to indicate the negative (-) sign).

Instead of directly entropy encoding sign symbol 1916 of BVD 1810, the encoder may entropy encode an indication of whether the value of sign symbol 1916 of BVD 1810 matches the value of the same sign symbol of a BVD candidate used as a predictor of BVD 1810. The encoder may select the BVD predictor from among a plurality of BVD candidates based on costs of the plurality of BVD candidates. The BVD candidates may at least include a BVD candidate for each of the two possible values of sign symbol 1916 of BVD 1810: a first BVD candidate 1918 equal to BVD 1810 itself and a second BVD candidate 1920 equal to BVD 1810 but with the opposite (or other) value of sign symbol 1916 of BVD 1810.

FIG. 19B illustrates both BVD candidates used to entropy encode sign symbol 1916 of BVD 1810. More specifically, FIG. 19B illustrates BVD candidate 1918 equal to BVD 1810 itself and BVD candidate 1920 equal to BVD 1810 but with the opposite (or other) value of sign symbol 1916 of BVD 1810. With the opposite (or other) value of sign symbol 1916 of BVD candidate 1918, BVD candidate 1920 has a horizontal component BVD*ₓ* 1922 with a magnitude of 10011 in fixed length binary (or 19 in base 10) and a positive (+) sign. The vertical component BVD*_{y}* 1924 of BVD candidate 1920 has the same magnitude of 01011 in fixed length binary (or 11 in base 10) and positive sign as vertical component BVD*_{y}* 1814 of BVD candidate 1918 (or BVD 1810).

The cost for each BVD candidate in the plurality of BVD candidates may be calculated based on a difference between a template of current block 1804 and a template of a candidate reference block displaced relative to current block 1804 by a sum of the BVD candidate and BVP 1808. For example, the encoder may determine a cost for BVD candidate 1918 based on a difference between a template 1926 of current block 1804 and a template 1928 of a candidate reference block 1930 displaced relative to current block 1804 by a sum of BVD candidate 1918 and BVP 1808. The encoder may determine the difference between template 1926 and template 1928 based on a difference (e.g., sum of squared differences (SSD), sum of absolute differences (SAD), sum of absolute transformed differences (SATD), mean removal SAD, or mean removal SSD) between samples of template 1926 and samples of template 1928. The encoder may similarly determine a cost for BVD candidate 1920 based on a difference between template 1926 of current block 1804 and a template 1932 of a candidate reference block 1934 displaced relative to current block 1804 by a sum of BVD candidate 1920 and BVP 1808. The encoder may determine the difference between template 1926 and template 1932 based on a difference (e.g., SSD, SAD, SATD, mean removal SAD, or mean removal SSD) between samples of template 1926 and samples of template 1928. Templates 1926, 1928, and 1932 may comprise one or more samples to the left and/or above their respective blocks. For example, templates 1926, 1928, and 1932 may comprise samples from one or more columns to left of their respective block and/or from one or more rows above their respective block. FIG. 19B illustrates one example position and shape (L-shape rotated clockwise 90 degrees) of templates 1926, 1928, and 1932.

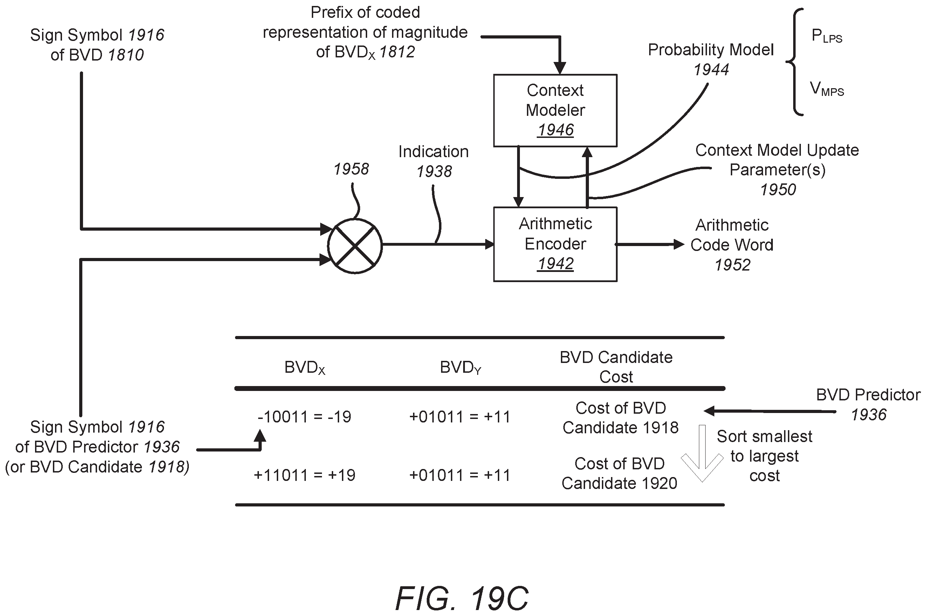

After determining the costs of each of the plurality of BVD candidates, the encoder may select one of the plurality of BVD candidates as a BVD predictor. For example, the encoder may select the BVD candidate with the smallest cost among the plurality of BVD candidates as the BVD predictor. FIG. 19C illustrates a table with the components (horizontal and vertical) and cost of each BVD candidate 1918 and 1920 in respective rows. In this example, BVD candidates 1918 and 1920 are assumed to be the only BVD candidates. In other examples, more BVD candidates may be used (e.g., BVD candidate 1820 from FIG. 18 may be further included in the plurality of BVD candidates where magnitude symbol 1816 is further being entropy encoded according to the method discussed in FIG. 18). The rows of the table are sorted by the costs of BVD candidates 1918 and 1920, with the BVD candidate with the smallest cost on top. In this example, BVD candidate 1918 has the smallest cost among BVD candidates 1918 and 1920. The encoder may therefore select BVD candidate 1918 as the BVD predictor 1936 for BVD 1810.

After selecting BVD candidate 1918 as BVD predictor 1936, the encoder may entropy encode an indication 1938 of whether the value of sign symbol 1916 of BVD 1810 matches the value of sign symbol 1916 of BVD predictor 1936. Sign symbol 1916 of BVD predictor 1936 has a value that indicates a negative sign, which matches the value of sign symbol 1916 of BVD 1810 that also indicates a negative sign. In this example, indication 1938 would indicate that the value of sign symbol 1916 of BVD 1810 matches the value of sign symbol 1916 of BVD predictor 1936. In one example, indication 1938 may be a single bit that has the value: "0" when the value of sign symbol 1916 of BVD 1810 matches the value of sign symbol 1916 of BVD predictor 1936; and "1" when the value of sign symbol 1916 of BVD 1810 does not match the value of sign symbol 1916 of BVD predictor 1936. Logic 1940 may be used to determine indication 1938. In one example, logic 1940 may implement a logical exclusive or (XOR) function.

In the example of FIG. 19C, the encoder may entropy encode indication 1938 using arithmetic encoder 1942. Based on the method of determining indication 1938 as described above, indication 1938 may have a non-uniform probability distribution. Therefore, arithmetic encoder 1942 may process indication 1938 in regular arithmetic encoding mode as described above. For example, arithmetic encoder 1942 may subdivide a current coding interval into *m* disjoint subintervals. Each of the *m* disjoint subintervals may have a width proportional to the probability of the symbol being encoded having a different one of the values in an *m-ary* source alphabet. In the case of indication 1938, which is binary, *m* is equal to two and the current coding interval may be subdivided into two disjoint intervals that each have a width proportional to the probability of a different one of the two possible values {0, 1} for indication 1938 being encoded. The probabilities of the two possible values for indication 1938 may be indicated by a probability model 1944 for indication 1938. Arithmetic encoder 1942 may then encode indication 1938 by choosing the subinterval corresponding to the actual value of indication 1938 as the new coding interval for the next binary symbol to be encoded.

Arithmetic encoder 1942 may receive probability model 1944 from context modeler 1946. Context modeler 1946 may determine probability model 1944 for indication 1938 by a fixed selection or an adaptive selection from among two or more probability models. For example, context modeler 1946 may determine probability model 1944 by a fixed selection or an adaptive selection from among two or more probability models based on the magnitude of the component of BVD 1810 to which sign symbol 1916 corresponds, which in the example of FIG. 19A is horizontal component BVD*ₓ* 1812 of BVD 1810. The magnitude of horizontal component BVD*ₓ* 1812 of BVD 1810 provides an indication of the distance 1964 (illustrated in FIG. 19B) between candidate reference blocks 1930 and 1934. Distance 1964 is specifically equal to two times the magnitude of horizontal component BVD*ₓ* 1812 of BVD 1810. The likelihood of the value of sign symbol 1916 of BVD 1810 matching the value of sign symbol 1916 of BVD predictor 1936 may be generally related to distance 1964. More specifically, the greater distance 1964 between candidate reference blocks 1930 and 1934 (and between their respective templates 1928 and 1932), the more likely it may be that the value of sign symbol 1916 of BVD 1810 matches the value of sign symbol 1916 of BVD predictor 1936. Thus, the magnitude of horizontal component BVD*ₓ* 1812 of BVD 1810 may be helpful in selecting probability model 1844 for indication 1838.

A problem may arise, however, if context modeler 1946 relies on the magnitude of horizontal component BVD*ₓ* 1812 of BVD 1810 to determine probability model 1944 for indication 1938. As discussed above, one or more of the magnitude symbols of horizontal component BVD*ₓ* 1812 of BVD 1810 may be entropy encoded according to the method of FIG. 18. For example, magnitude symbol 1816 of horizontal component BVD*ₓ* 1812 of BVD 1810 may be entropy encoded according to the method of FIG. 18 as discussed above. As a result, the value of magnitude symbol 1816 may not be available at the decoder after the arithmetic decoder parses the information related to magnitude symbol 1816 from the bitstream. Rather, only the indication 1838 indicating whether the value of magnitude symbol 1816 of horizontal component BVD*ₓ* 1812 of BVD 1810 matches the value of the same magnitude symbol of the horizontal component of the selected BVD predictor may be available after the arithmetic decoder parses the related information. The decoder may have to further perform the decoding process to determine the actual value of magnitude symbol 1816. For example, the decoder may have to determine the costs, using templates, of the plurality of BVD candidates for magnitude symbol 1816 as discussed above with respect to FIG. 18. This may create a parsing dependency or, in other words, a dependency between parsing of the bitstream (e.g., as performed by the arithmetic decoder) and the decoding process. The arithmetic decoder cannot parse indication 1938 for sign symbol 1916 from the bitstream until magnitude symbol 1816 (or any other magnitude symbol of horizontal component BVD*ₓ* 1812 of BVD 1810 entropy encoded according to the method of FIG. 18) is decoded. This may result in the arithmetic decoder, which is often a throughput bottleneck, to stall until the magnitude is decoded.

The parsing dependency may be resolved by binarizing the magnitude (e.g., horizontal and/or vertical component magnitude) of a BVD using a binarization scheme or code that includes a first part that indicates a range of values that the magnitude of the BVD falls within and a second part that indicates a precise value, within the range of values, of the magnitude of the BVD. There are a wide class of codes that include a first part that indicates a range of values and a second part that indicates a precise value within the range of values, such as Rice codes, Golomb codes (e.g., Golomb-Rice codes or Exponential Golomb codes), and fixed length codes. The encoder and decoder may respectively entropy encode and decode the first part that indicates the range of values that the magnitude of the BVD falls within in such a manner that does not require the decoding process (e.g., in bypass arithmetic coding mode) to determine the first part that indicates the range of values that the magnitude of the BVD falls within. Although not the precise value of the magnitude of the BVD, the first part that indicates the range of values that the magnitude of the BVD falls within may then be used to determine a probability model for entropy encoding an indication (e.g., indication 1938) of whether the value of a sign symbol of the BVD matches the value of a sign symbol of a BVD predictor. Because selection of the probability model does not use the second part that indicates a precise value, within the range of values, of the magnitude of the BVD, magnitude symbols of the second part may still be entropy encoded according to the method of FIG. 18 without creating a parsing dependency as described above.

For example, referring back to FIG. 19A, the magnitude of horizontal component BVD*ₓ* 1812 of BVD 1810 may be binarized using a Golomb-Rice code. Golomb-Rice codes have the structure discussed above, with a first part that that indicates a range of values and a second part that indicates a precise value within the range of values. In Golomb-Rice codes, the first part is referred to as the "prefix" and the second part is referred to as the "suffix". A Golomb-Rice code C_{gr *k*}(*v*) of order k includes a unary coded prefix and k suffix bits. The k suffix bits are a binary representation of an integer 0 ≤ *i* < 2*^{k}*. An example of a Golomb-Rice code for k = 4 is given in Table 1 below. In the table and the following explanation, x₀, *x₁,* ... , xₙ denote bits of the code word with *xₙ* {0, 1}.

**TABLE 1**

| ***v*** | **C_{gr4}(*v*)** |
|---|---|
| 0, ..., 15 | 1 *x*₃*, x₂, x*₁*, x*₀ |
| 16, ..., 31 | 0 1 *x*₃*, x₂, x*₁*, x*₀ |
| 32, ...,47 | 0 0 1 *x*₃*, x*₂*, x*₁*, x*₀ |
| . | . |
| . | . |
| . | . |

The number of prefix bits is denoted by *n*ₚ, the number of suffix bits is denoted by *n*ₛ. For the Golomb-Rice code, the number of suffix bits is *n*ₛ *= k.* When encoding a value v, the number of prefix bits is determined by: ${n}_{p} = 1 + \left|\frac{v}{{2}^{k}}\right| .$ (19) $\left⌊x\right⌋$ is the integer part of x. The suffix is the *nₛ*-bit representation of: ${v}_{s} = v - {2}^{k} \left({n}_{p}-1\right) .$ (20)

The Golomb-Rice codes discussed above use a suffix of fixed length. The length of the suffix may also be determined by the length of the prefix. Exponential Golomb codes (Exp-Golomb) use this approach and can further be used to binarize the magnitude of horizontal component BVD*ₓ* 1812 of BVD 1810. A kth-order Exp-Golomb code C_{eg *k*}(*v*) includes a unary prefix code and a suffix of variable length. The number of bits in the suffix *n*ₛ is determined by the value *n*ₚ as follows: ${n}_{s} = k + {n}_{p} - 1 .$ (21) The number of prefix bits *n*ₚ of *C*_{eg *k*}(*v*) is determined from the value v by: ${2}^{k} \left({2}^{{n}_{p} - 1}-1\right) \leq v \leq {2}^{k} \left({2}^{{n}_{p}}-1\right) .$ (22) The suffix is then the *n*ₛ-bit representation of: ${v}_{s} = v - {2}^{k} \left({2}^{{n}_{p}}-1\right) .$ (23) An example of Exp-Golomb codes for *k* = 1 is given in Table 2 below.

**TABLE 2**

| ***v*** | **C_{gr 4}(*v*)** |
|---|---|
| 0,1 | 1 *x*₀ |
| 2, . . ., 5 | 0 1 *x*₁, *x*₀ |
| 6, . . ., 14 | 0 0 1 *x*₂, *x*₁, *x*₀ |
| 14, . . ., 29 | 0 0 0 1 *x*₃, *x*₂, *x*₁, *x*₀ |
| . | . |
| . | . |
| . | . |

In the example of FIG. 19A, the magnitude of horizontal component BVD*ₓ* 1812 of BVD 1810 has a value of 19 in base 10, which may be represented by a Golomb-Rice code or an Exp-Golomb code. For example, the magnitude of horizontal component BVD*ₓ* 1812 of BVD 1810 may be represented by the Exp-Golomb code of order *k* = 4 with a prefix of "0001" and a suffix of "0101". The prefix "0001" indicates that the magnitude of the horizontal component BVD*ₓ* 1812 of BVD 1810 falls within the range of values 14 - 29, and the suffix "0101" indicates that the magnitude of the horizontal component BVD*ₓ* 1812 of BVD 1810 has the precise value of 19 within the range of values of 14 - 29. One or more of the magnitude bits of the suffix may be entropy encoded and decoded according to the method of FIG. 18 (e.g., similar to magnitude symbol 1816), while one or more of the bits of the prefix may be entropy encoded and decoded in such a manner that does not require the decoding process (e.g., in bypass arithmetic coding mode) to determine the value of the prefix. Because the prefix is entropy encoded and decoded in such a manner that does not require the decoding process, context modeler 1946 may determine probability model 1944 for indication 1938 based on the prefix (or range of values that the magnitude of horizontal component BVD*ₓ* 1812 falls within) without resulting in a parsing dependency. It is understood that context modeler 1946 may determine probability model 1944 for indication 1938 based on the prefix without resulting in a parsing dependency because context modeler 1946 makes such a determination without the suffix (or precise value within the range of values indicated by the prefix).

For adaptive selection from among two or more probability models, context modeler 1946 may compare a value in the range of values indicated by the prefix of the code used to represent the magnitude of horizontal component BVD*ₓ* 1812 (or value in the range of values that the magnitude of horizontal component BVD*ₓ* 1812 falls within) to a first threshold. Based on the value in the range of values indicated by the prefix being less than the first threshold, context modeler 1946 may select a first probability model for indication 1938. Based on the value in the range of values indicated by the prefix being greater than the first threshold, context modeler 1946 may select a second probability model for indication 1938. In another example, based on the value in the range of values indicated by the prefix being greater than the first threshold, context modeler 1946 may compare the value in the range of values indicated by the prefix to a second threshold. Based on the value in the range of values indicated by the prefix being less than the second threshold, context modeler 1946 may select a second probability model for indication 1938. Based on the value in the range of values indicated by the prefix being greater than the second threshold, context modeler 1946 may select a third probability model for indication 1938. The value in the range of values indicated by the prefix may be the lower bound of the range of values, the upper bound of the range of values, or a value that is greater than the lower bound of the range of values and less than an upper bound of the range of values. In another example, instead of using a value in the range of values indicated by the prefix directly in the above threshold comparison(s), another value determined based on the value in the range of values indicated by the prefix may be compared to the threshold(s). In another example, instead of using a value in the range of values indicated by the prefix in the above threshold comparison(s), the range of values itself may be used in the above threshold comparison(s).

As shown in FIG. 19C, probability model 1944 may comprise two parameters: the probability P_{LPS} of the least probable symbol (LPS) for indication 1938 and the value v_{MPS} of the most probable symbol (MPS) for indication 1938. In other examples, probability model 1944 may comprise the probability P_{MPS} of the MPS for indication 1938 in addition or alternatively to the probability P_{LPS} of the LPS for indication 1938. Similarly, in other examples, probability model 1944 may comprise the value v_{LPS} of the LPS for indication 1938 in addition or alternatively to the value v_{MPS} of the MPS for indication 1938. After arithmetic encoder 1942 encodes indication 1938, arithmetic encoder 1942 may provide one or more probability model update parameters 1950 to context modeler 1946. Context modeler 1946 may adapt probability model 1944 based on the one or more probability model update parameters 1950. For example, the one or more probability model update parameters 1950 may comprise the actual coded value of indication 1938. Context modeler 1946 may update probability model 1944 by increasing P_{LPS} for indication 1938 if the actual coded value of indication 1938 is not equal to v_{MPS} and by decreasing P_{LPS} for indication 1938 otherwise.

After processing a number of binary symbols (e.g., corresponding to one or more syntax elements), arithmetic encoder 1942 may determine a value in the range of the final coding interval as an arithmetic code word 1952 for the binary symbols. Arithmetic encoder 1942 may then output arithmetic code word 1952. For example, arithmetic encoder 1942 may output arithmetic code word 1952 to a bitstream that may be received and processed by a video decoder.

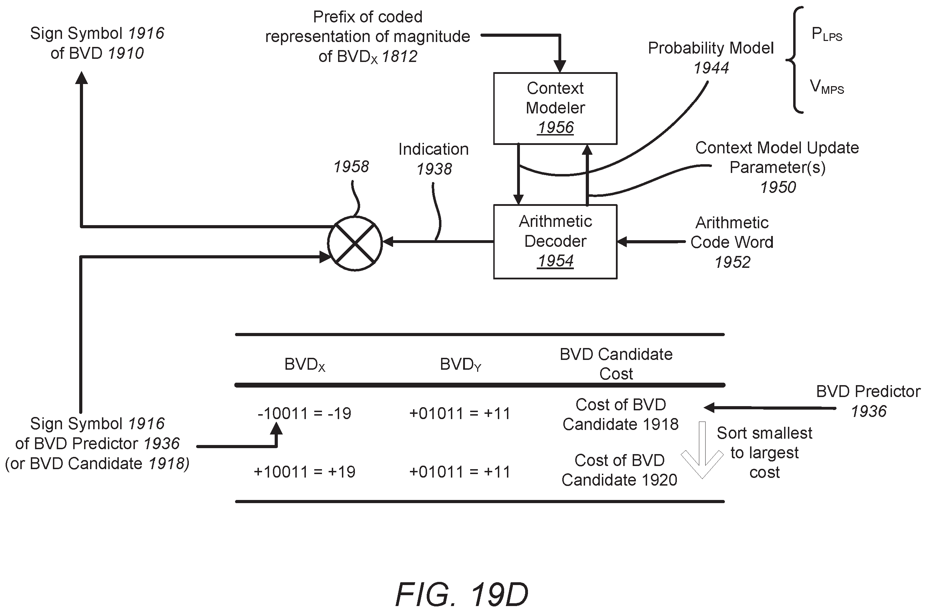

FIG. 19D illustrates an example of a decoder (e.g., decoder 300 in FIG. 3) that may receive arithmetic code word 1952, arithmetically decode indication 1938 from arithmetic code word 1952, and use indication 1938 to determine sign symbol 1916 of BVD 1810 in accordance with embodiments of the present disclosure.

The decoder may receive arithmetic code word 1952 in a bitstream. The decoder may provide arithmetic code word 1952 to an arithmetic decoder 1954. Based on the method of determining indication 1938 as described above, indication 1938 may have a non-uniform probability distribution. Therefore, arithmetic decoder 1954 may process indication 1938 in regular arithmetic decoding mode. For example, arithmetic decoder 1954 may perform recursive interval subdivision as explained above to decode symbols encoded by arithmetic code word 1952. For example, arithmetic decoder 1954 may arithmetically decode a symbol that takes a value from an *m-ary* source alphabet by dividing an initial coding interval into *m* disjoint subintervals. Each of the *m* disjoint subintervals may have a width proportional to the probability of the symbol having a different one of the values in the *m-ary* source alphabet. In the case of binary symbols like indication 1938, *m* is equal to two and the initial coding interval may be subdivided into two disjoint intervals that each have a width proportional to the probability of a different one of the two possible values {0, 1}. The probabilities of the symbol having the different values in the *m-ary* source alphabet may be referred to as a probability model for the symbol as mentioned above. The symbol is arithmetically decoded from arithmetic code word 1952 by determining the symbol value corresponding to the subinterval in which the arithmetic code word falls within. The decoder may sequentially decode each symbol *sᵢ* of a sequence **s** = {*s₁*, *s₂*, . . ., *s_{N}*) encoded by arithmetic code word 1952 by recursively applying this interval-subdivision scheme *N* times and determining which subinterval arithmetic code word 1952 falls within during each iteration.

When decoding the symbol corresponding to indication 1938, arithmetic decoder 1954 may receive probability model 1944 for indication 1938 from context modeler 1956. Context modeler 1956 may determine probability model 1944 for indication 1938 by a fixed selection or by an adaptive selection from among two or more probability models in the same manner as described above for context modeler 1946 in FIG. 19C.

As shown in FIG. 19D, after arithmetic decoder 1954 decodes indication 1938, arithmetic decoder 1954 may provide one or more probability model update parameters 1950 to context modeler 1956. Context modeler 1956 may adapt probability model 1944 based on the one or more probability model update parameters 1950. For example, the one or more probability model update parameters 1950 may comprise the actual decoded value of indication 1938. Context modeler 1956 may update probability model 1944 by increasing P_{LPS} for indication 1938 if the actual decoded value of indication 1938 is not equal to v_{MPS} and by decreasing P_{LPS} for indication 1938 otherwise.

After entropy decoding indication 1938, the decoder may determine the value of sign symbol 1916 of BVD 1810 based on the value of sign symbol 1916 of BVD predictor 1936 and the value of indication 1938. For example, the decoder may determine the value of sign symbol 1916 of BVD 1810 as being equal to the sign symbol of BVD predictor 1936 based on indication 1938 indicating that the value of sign symbol 1916 of BVD 1810 matches the value of sign symbol 1916 of BVD predictor 1936. Conversely, the decoder may determine the value of sign symbol 1916 of BVD 1810 as being not equal to (or equal to the opposite value of) sign symbol 1916 of BVD predictor 1936 based on indication 1938 indicating that the value of sign symbol 1916 of BVD 1810 does not match the value of sign symbol 1916 of BVD predictor 1936. Sign symbol 1916 of BVD predictor 1936 has a value that matches the value of sign symbol 1916 of BVD 1810. In this example, indication 1938 would indicate that the value of sign symbol 1916 of BVD 1810 matches the value of sign symbol 1916 of BVD predictor 1936. In one example, indication 1938 may be a single bit that has the value: "0" when the value of sign symbol 1916 of BVD 1810 matches the value of sign symbol 1916 of BVD predictor 1936; and "1" when the value of sign symbol 1916 of BVD 1810 does not match the value of sign symbol 1916 of BVD predictor 1936. Logic 1958 may be used to determine sign symbol 1916 of BVD 1810. In one example, logic 1958 may implement a logical XOR function.

The decoder may determine the value of sign symbol 1916 of BVD predictor 1936 in the same manner as the encoder described above. More specifically, the decoder may select BVD predictor 1936 from among a plurality of BVD candidates based on costs of the plurality of the BVD candidates. The BVD candidates may include a BVD candidate for each possible value of the sign symbol of BVD 1810. For example, a sign symbol of BVD 1810 represented in binary form has only two possible values. Therefore, the BVD candidates may include at least two BVD candidates for this representation (one for each possible value of the sign symbol in BVD 1810 being encoded): a first BVD candidate equal to BVD 1810 itself and a second BVD candidate equal to BVD 1810 but with the opposite (or other) value of the sign symbol of BVD 1810. The cost for each BVD candidate in the plurality of BVD candidates may be calculated as described above with respect to the encoder based on a difference between a template of current block 1804 and a template of a candidate reference block. The candidate reference block may be displaced relative to the current block by a sum of the BVD candidate and BVP 1808. The decoder may select the BVD candidate with the lost cost as BVD predictor 1936.

It should be noted that the approach discussed above with respect to FIG. 18 and FIGS. 19A-19D may be further applied to one or more magnitude symbols of an MVD used in inter prediction in addition or alternatively to one or more magnitude symbols of a BVD used in IBC. For inter prediction, the terms BV, BVP, BVD, and BVD candidate used in FIG. 18 and FIGS. 19A-19D may be replaced by the terms MV, MVP, MVD, and MVD as would be appreciated by a person of ordinary skill in the art based on the present disclosure.

It should be further noted that the approach discussed above with respect to FIG. 18 and FIGS. 19A-19D is applied to IBC and inter prediction based on a translational motion model for the prediction block. In other examples, the approach discussed above with respect to FIG. 18 and FIGS. 19A-19D may be applied to IBC and inter prediction based on an affine motion model for the prediction block.

It should be further noted that the prefix of a code representing the magnitude of a component of a BVD may further be used to select the context (or probability model) for one or more symbols of the suffix of the code. It should be further noted that one or more of the symbols in the suffix of a code representing the magnitude of a component of a BVD, that are not entropy encoded and decoded according to the method discussed above with respect to FIG. 18, may be used in conjunction with the prefix of the code to select the context (or probability model) for one or more symbols of the suffix of the code.

For adaptive selection from among two or more probability models, context modeler 1946 may compare a value in the range of values indicated by the prefix of the code used to represent the magnitude of horizontal component BVD*ₓ* 1812 (or value in the range of values that the magnitude of horizontal component BVD*ₓ* 1812 falls within) to a first threshold.

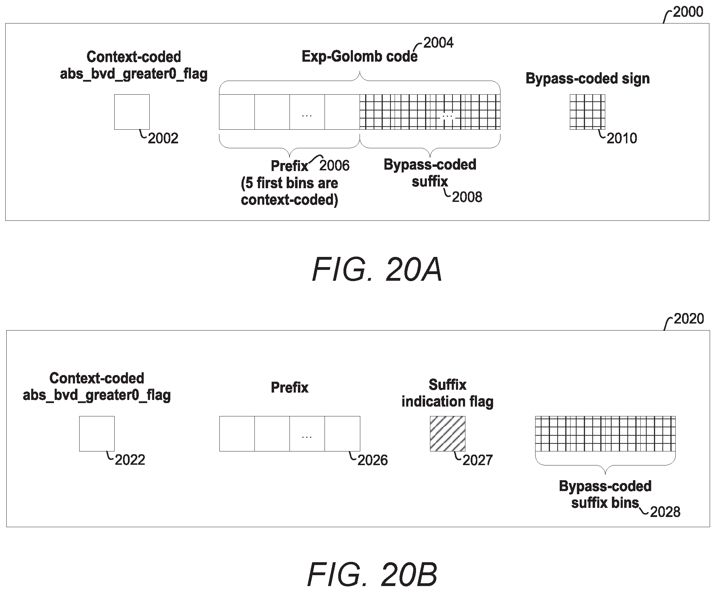

FIG. 20A illustrates an example representation of a BVD, more specifically, a magnitude and a sign of a BVD, according to some known video coding implementations. The BVD 2000 comprises, for example, in the bitstream from an encoder to a decoder, values representing its magnitude 2004 and sign 2010. As described above in relation to encoding of a BVD, the magnitude may be represented as an Exponential-Golomb code, and the prefix 2006 of the magnitude can be context-coded using a regular mode of a CABAC coder or the like to gain compression efficiencies in storing or transmitting the BVD. The following table illustrates how, for a given BVD value (i.e., for a given BVD magnitude), the corresponding prefix and suffix values can be specified in accordance with the Exponential-Golomb code.

**TABLE 3**

| BVD value | 0-1 | 2-5 | 6-13 | 14-29 | 30-61 | 62-125 | 126-253 |
|---|---|---|---|---|---|---|---|
| Prefix | 0 | 2 | 6 | 14 | 30 | 62 | 126 |
| Suffix bins | 1 | 2 | 3 | 4 | 5 | 6 | 7 |
| Suffix values | 0-1 | 0-3 | 0-7 | 0-15 | 0-31 | 0-63 | 0-127 |

In the known implementations mentioned above in relation to FIG. 20A, the suffix 2008 of the magnitude and the sign 2010 are encoded in the bypass-mode of the CABAC encoder and thus may not provide the compression efficiencies obtained for context-coded prefix 2006. A flag 2002 indicating whether the magnitude is greater than 0 (sometimes referred to herein as the "magnitude greater than 0 flag") is included in the BVD 2000. The decoder can use the magnitude greater than 0 flag to more efficiently parse the bit stream.

The description above in relation to FIGS. 18A-18D and FIGS. 19A-19D shows how, in some embodiments of this disclosure, the suffix, or both the suffix and the sign, of a BVD can be predictively encoded so that the suffix, or both the suffix and the sign, of the BVD can be entropy encoded using the regular mode of a CABAC coder, thereby improving compression efficiencies for BVD.

Some other encoding technologies propose to gain compression efficiencies when transmitting the BVD by not signaling the suffix to the decoder when the encoder determines that certain conditions are satisfied for the BVD. The basic idea behind some such proposed technologies is similar to the technology used in IBC Merge Mode with Block Vector Differences (MBVD). In one example of such proposed technology, when the encoder can determine that the BVD corresponds exactly to, or in some instances to a predetermined high degree, with a "best" BVD that can be found at the decoder by a searching a reference area, the encoder selects not to signal the suffix to the decoder. When the encoder determines not to signal the suffix to the decoder, the encoded BVD that is transmitted to the decoder in a bit stream includes the prefix and a suffix indication flag explicitly indicating to the decoder that the suffix is not included in the encoded BVD. The decoder is expected to derive the suffix by itself finding the same "best" BVD and determining the suffix based on that "best" BVD. FIG. 20B illustrates an example BVD 2020 that includes a suffix indication flag 2027 that indicates whether or not the encoded BVD 2020 includes the suffix. In the illustrated BVD 2020, the suffix 2028 is included and the value of the suffix indication flag 2027 may be set to a predetermined value that indicates the presence of the suffix. When the suffix 2028 is not included, then what is included in the encoded BVD 2020 would be the magnitude greater than 0 flag 2022 that indicates whether the magnitude is greater than 0, the prefix 2026, and the suffix indication flag 2027 set to a predetermined value that indicates that the suffix is not being signaled. Whereas in the encoding technology described in relation to FIG. 20A, the BVD prefix and suffix, which are part of Exponential-Golomb code, are signaled in the bit stream and the symbols of the prefix are context-coded, in the technology that relates to FIG. 20B, the BVD prefix is signaled in a similar manner as in the technology of FIG. 20A, and then a flag (e.g., the suffix indication flag or more generally "suffix flag", as referred to in this disclosure) is signaled indicating whether BVD suffix is present or is equal to zero. When the suffix indication flag 2027 indicates that the suffix is included in the encoded BVD, the suffix is bypass-encoded.

In some embodiments of this disclosure methods and systems for harmonizing techniques that selectively do not signal the suffix of the magnitude of a BVD, such as that, for example, described above in relation to FIG. 20B, with techniques, such as, for example, techniques described above in relation to FIGS. 18A-18D and FIGS. 19A-19D, that predictively encode at least some magnitude symbols of a BVD are described.

These and other features of the present disclosure are described further below.

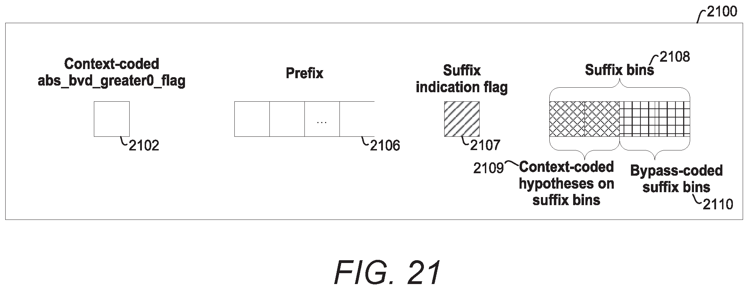

In a first implementation of the mentioned harmonization according to embodiments of this disclosure, a suffix flag is included with all encoded BVD. FIG. 21 illustrates a representation of a BVD 2100 in accordance with some embodiments of this disclosure. When the suffix is not present (i.e., not being signaled), the suffix indication flag 2107 is set to a first value that indicates that the suffix is not included. When the suffix 2108 is included (i.e., is being signaled) in the BVD 2100, the suffix indication flag 2107 is set to a second value indicating that the suffix is present. The suffix 2108 of the BVD 2100, as shown, has one or more of the magnitude symbols that are context-coded. The context-coded magnitude symbols 2109 are also referred to as predictively encoded symbols because, in some embodiments, as described above in relation to FIGS. 18 and 19A-19D, each of the context-coded symbols of the suffix contains an indication that indicates whether a prediction is correct.

The suffix 2108 of BVD 2100 comprises two magnitude symbols 2109 that are context-coded and two magnitude symbols 2110 that are bypass-coded. Embodiments of this disclosure do not limit the number of context-coded symbols or the number of bypass-coded symbols in a suffix 2108. The BVD 2100, when encoded, will include magnitude greater than 0 flag 2102, prefix 2106, suffix indication flag 2107, and suffix 2108.

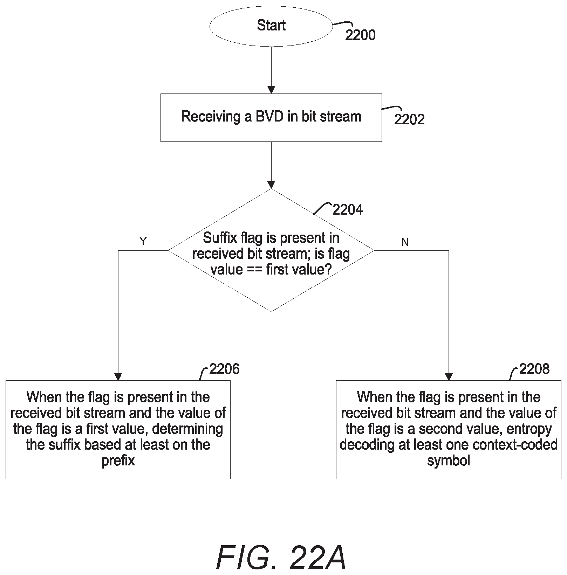

FIG. 22A illustrates a flowchart of a method 2200 for decoding a BVD in accordance with embodiments of the present disclosure. The method 2200 may be implemented by a decoder, such as decoder 300 in FIG.3.

The method 2200 begins at 2202. At 2202, the decoder receives an encoded BVD in a received bit stream. For example, BVD 2100 may be received in a bit stream at the decoder.

At 2204, it is determined whether the suffix flag (e.g., suffix indication flag 2107) is present in the bit stream for the BVD and has a first value. When the value of the suffix flag is a first value, it indicates that the suffix of the magnitude is not included in the encoded BVD. Alternatively, the suffix flag has a second value. The suffix flag having the second value indicates that the suffix is included in the encoded BVD.

If, at 2204, it is determined that the suffix flag has the first value, then the method proceeds to 2206 indicating that the suffix is not included in the encoded BVD and that the decoder is required to derive the suffix without it being signaled from the encoder.

In some embodiments, the suffix is determined by the decoder based at least on the value of the prefix that is included in the BVD. The reference area in which to search can be determined based on the prefix. It should be noted that the BVD is specified in two components BVD*ₓ* and BVD*_{y}*, corresponding to the magnitude in the x direction and in the y direction, respectively. Accordingly, the prefix specifies an x coordinate and a y coordinate for the reference area to be searched at the decoder. As shown in TABLE 3 above that illustrates how, for a given BVD value (i.e., for a given BVD magnitude), the corresponding prefix and suffix values can be specified in accordance with the Exponential-Golomb code, each prefix value has a corresponding range of suffix values. Thus, the reference area in which to search for a "best" BVD can be determined based on the x, y position specified by the prefix (i.e., by the x and y components of the prefix) and a range according to the range of the suffix for that prefix. In some embodiments, the decoder may use template matching search (e.g., based on the SAD cost between the template (one row above and one column left to the block) of each the current block and a reference block in the reference search area) in a range depending on the BVD prefix from the current prefix to the next prefix value. For example, if the BVD prefix is equal to 6, then the next prefix value is 14 (see TABLE 3 above that illustrates how, for a given BVD value (i.e., for a given BVD magnitude), the corresponding prefix and suffix values can be specified in accordance with the Exponential-Golomb code that is used for binarization), so the search range is from 6 to 14.

If, at 2204, it is determined that the suffix flag has a second value, then the method proceeds to 2208 indicating that the suffix is included in the BVD. The suffix may have at least one magnitude symbol that is predictively encoded. Each predictively encoded symbol encodes an indication of whether a value of the magnitude symbol of the BVD matches a value of the same magnitude symbol of a BVD candidate used as a predictor of the BVD. The suffix is determined in accordance with the predictively encoded one or more magnitude symbols and one or more bypass-coded magnitude symbols, if any. An example of decoding a predictively encoded suffix is described in relation to FIG. 18D above.

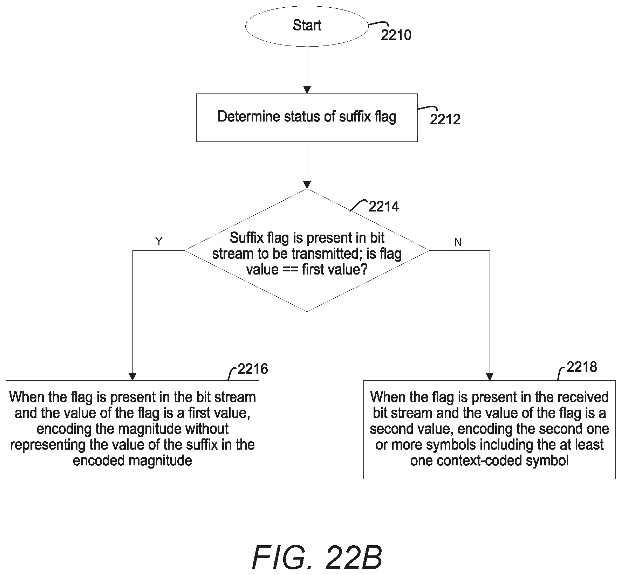

FIG. 22B illustrates a flowchart of a method 2210 for encoding a BVD in accordance with embodiments of the present disclosure. The method 2210 may be implemented by an encoder, such as encoder 200 in FIG.2.

The method 2210 begins at 2212. At 2212, the encoder determines an encoding mode that it is operating in, and sets the suffix flag according to the determined mode. In an embodiment, at 2212, the encoder may receive a BVD to be transmitted to a decoder, and the encoder may determine, for example, whether the BVD can be transmitted without signaling the suffix. In an example, the encoder may determine that the BVD exactly matches, or matches to a predetermined degree, a BVD that can be found by searching a reference area. In order to determine this, the encoder may simulate the search process that would be performed at the decoder for the current BVD. An example search process based on at least the prefix value was described above in relation to the decoder process of FIG. 22A.

If it is determined that the BVD can be transmitted without transmitting the suffix, then the suffix flag (e.g., suffix flag 2107) may be set to a first predetermined value (e.g., 0). Otherwise, the suffix flag is set to a second predetermined value (e.g., 1).

At 2214, according to the selected setting in the suffix flag, the method proceeds to either 2216 where encoding of the BVD is performed without signaling the suffix, or 2218 where encoding the BVD includes the suffix.

At 2216, encoding of the magnitude is performed without including, in the encoded BVD, a representation of the suffix. For example, the encoded BVD includes the magnitude flag 2102, the prefix 2104, and the suffix flag set to a first predetermined value.

At 2218, the encoded BVD includes the suffix and the suffix may include at least one context-coded symbol. Encoding of suffixes with context-coded symbols can be performed as described in relation to FIG. 18 and FIGS. 19A-19D.

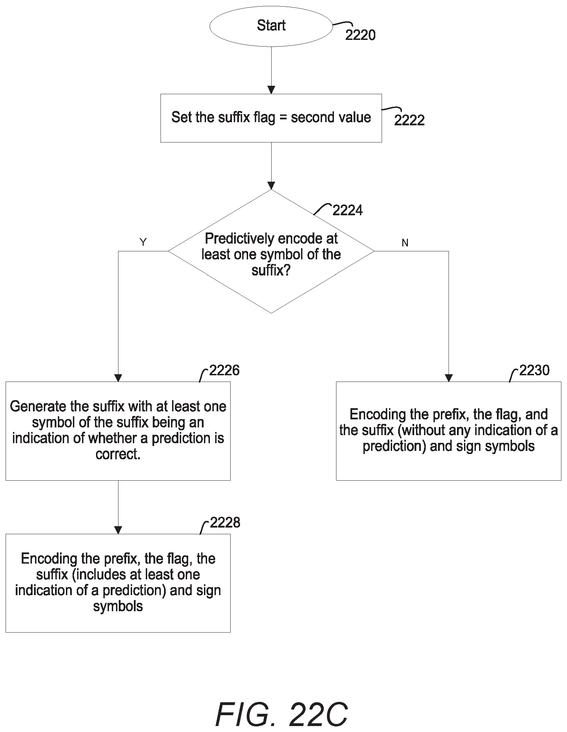

FIG. 22C illustrates a flowchart of an aspect of the encoding method 2210. The method 2220 may be implemented by an encoder, such as encoder 200 in FIG.2.

The method 2220 begins at 2222, when the encoder receive a BVD to be transmitted and it is determined, for example, at 2214, that the suffix flag is set to the second value that indicates that the suffix is being transmitted.

At 2224, it is determined whether at least one magnitude symbol of the suffix will be context-coded. This can be determined, for example, based on a predetermined context-coding budget. Some embodiments may require that the context-coding is limited to a specified maximum number of symbols in order control computational costs.

If it is determined that one or more magnitude symbols are to be context-coded, at 2226, one or more magnitude symbols from the most significant bins are encoded with an indication of whether a prediction is correct. The suffix is determined in accordance with the context-coded magnitude symbols and the bypass-coded magnitude symbols.

At 2228, the BVD is encoded, with the encoded BVD having a suffix comprising at least one context-coded magnitude symbol and possibly one or more bypass-coded magnitude symbols, the prefix, the suffix flag, and the magnitude greater than 0 flag.

If, at 2224, it is determined that no magnitude symbols are to be context-coded, at 2230, the BVD is encoded with the encoded BVD having the prefix and suffix of the magnitude value, the suffix flag, and magnitude greater than 0 flag. All suffix symbols are bypass-coded.

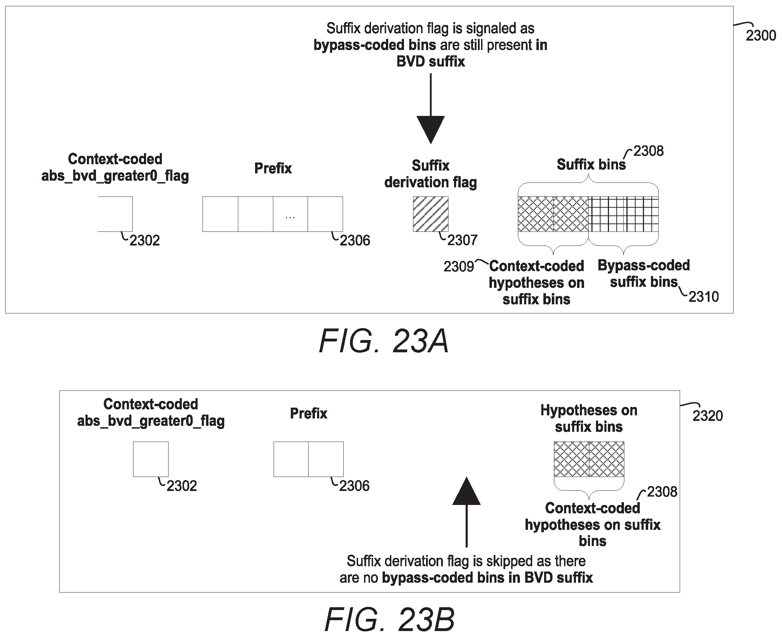

The first implementation of harmonization described above in relation to FIG. 21 and FIG. 22 incurs an overhead in including the suffix flag with each BVD. In a second implementation of harmonization, the suffix flag is not included when certain conditions are met. More specifically, whereas the suffix flag is included in the encoded BVD when the suffix is not being included in the encoded BVD, the suffix flag is excluded when a BVD's suffix includes no, or some number less than a predetermined threshold, bypass-coded symbols. Thus, in this technique, the suffix flag may be present with a first value indicating that the suffix is not being signaled in the BVD, may be present with a second value indicating that the suffix is being signaled in the BVD, or may be absent indicating that the suffix is present in the BVD and a number of bypass-coded suffix symbols are less than (or less than or equal) to a predefined threshold. FIG. 23A and FIG. 23B illustrate a representation of a BVD in accordance with embodiments of this disclosure.

FIG. 23A illustrates a BVD 2300 that includes the suffix flag 2307 (referred to in the figure as "suffix derivation flag"). The suffix 2308 is illustrated to have multiple context-coded magnitude symbols 2309 and multiple bypass-coded magnitude symbols 2310. The encoded BVD 2300 includes magnitude greater than 0 flag 2302 for the magnitude, the prefix 2304, the suffix 2308.

FIG. 23B illustrates BVD 2320 that does not include a suffix flag 2307 because there are no bypass coded magnitude symbols in 2320. In the illustrated example, the suffix flag is excluded from the BVD when the BVD does not include any suffix magnitude symbols that are bypass-coded. However, in some embodiments, the suffix flag may be included or excluded based on whether the number of bypass-coded magnitude symbols in the suffix is less than (or less than or equal to) a predetermined threshold value.

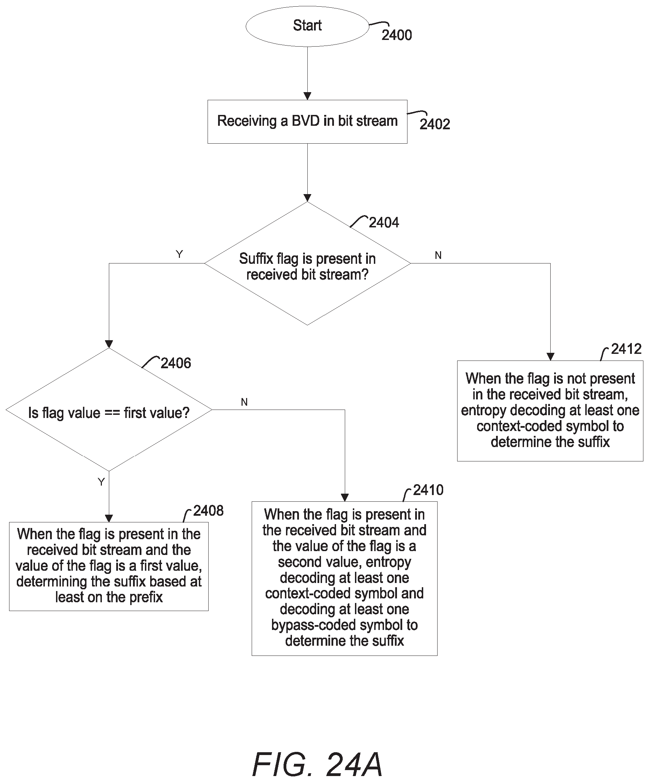

FIG. 24A illustrates a flowchart of a method 2400 for decoding a BVD, such as, for example, the BVD as in FIG. 23A and FIG. 23B, in accordance with embodiments of this disclosure. The method 2400 may be implemented by a decoder, such as decoder 300 in FIG.3.

The method 2400 begins at 2402. At 2402, the decoder receives an encoded BVD in a received bit stream. For example, BVD 2300 may be received in a bit stream at the decoder.

At 2404, it is determined whether the suffix flag (e.g., suffix indication flag 2307) is present in the bit stream for the BVD. If present, the method proceeds to 2406. If the suffix flag is not present, the method proceeds to 2412.

At 2406, it is determined whether the suffix flag has a first value (e.g., 0). When the value of the suffix flag is the first value, it indicates that the suffix of the magnitude is not included in the encoded BVD. Alternatively, the suffix flag has a second value (e.g., 1). The suffix flag having the second value indicates that the suffix is included in the encoded BVD.

If, at 2406, it is determined that the suffix flag has the first value, then the method proceeds to 2408 indicating that the suffix is not included in the encoded BVD and that the decoder is required to derive the suffix without it being signaled from the encoder. In some embodiments, the suffix is determined by the decoder based at least on the value of the prefix that is included in the BVD. The decoder may use a search process such as that described above (e.g., in relation to 2206) to determine the suffix.

If, at 2406, it is determined that the suffix flag has the second value, then the method proceeds to 2410 indicating that the suffix is included in the BVD. The suffix has at least one magnitude symbol that is predictively encoded. Each predictively encoded symbol encodes an indication of whether a value of the magnitude symbol of the BVD matches a value of the same magnitude symbol of a BVD candidate used as a predictor of the BVD. The suffix is determined in accordance with the predictively encoded one or more magnitude symbols and one or more bypass-coded magnitude symbols. Decoding a suffix that includes one or more context-coded symbols is described above, for example, in relation to FIG. 18 and FIGS. 19A-D.

If at 2404, it is determined that the suffix flag is not included, the method proceeds to 2412. At 2512, the suffix is included in the BVD and includes only context-coded magnitude symbols. In an embodiment each magnitude symbol encodes an indication of whether a value of the magnitude symbol of the BVD matches a value of the same magnitude symbol of a BVD candidate used as a predictor of the BVD. The suffix is determined in accordance with the predictively encoded one or more magnitude symbols.

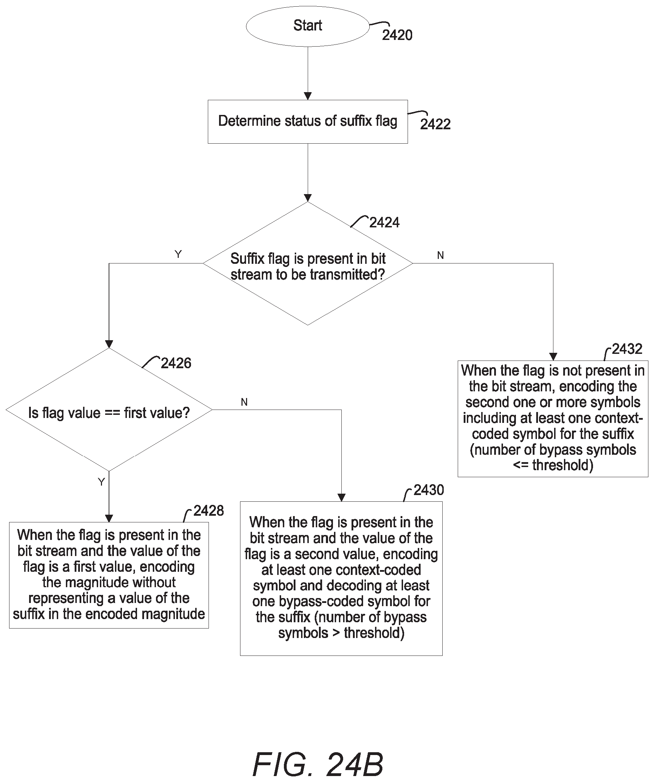

FIG. 24B illustrates a flowchart of a method 2420 for encoding a BVD, such as, for example, the BVD as in FIG. 23A and FIG. 23B, in accordance with embodiments of the present disclosure. The method 2420 may be implemented by an encoder, such as encoder 200 in FIG.2.

The method 2420 begins at 2422. At 2422, the encoder determines an encoding mode that it is operating in, and sets the suffix flag according to the determined mode. In an embodiment, at 2422, the encoder may receive a BVD to be transmitted to a decoder, and the encoder may determine, for example, whether the BVD can be transmitted without signaling the suffix.

If it is determined that the BVD can be transmitted without transmitting the suffix, then the suffix flag may be set to a first predetermined value (e.g., 0). Otherwise, the suffix flag is set to a second predetermined value (e.g., 1). The determination may be made as described, for example, in relation to 2212 above.

At 2424, in accordance with the status of the suffix flag, the method proceeds to 2426 is the suffix flag is to be included in the bit stream, or to 2432 if the suffix flag is not to be included in the bit stream.

At 2426, when the suffix flag is set to the first value the method proceeds to 2428, or to 2430 when the suffix flag is set to the second value. At 2428, the suffix flag has the first value and the encoding of the BVD is performed without signaling the suffix. At 2430, the suffix flag has the second value and the encoding the BVD includes the suffix in the encoded BVD. The suffix includes at least one context coded symbols.

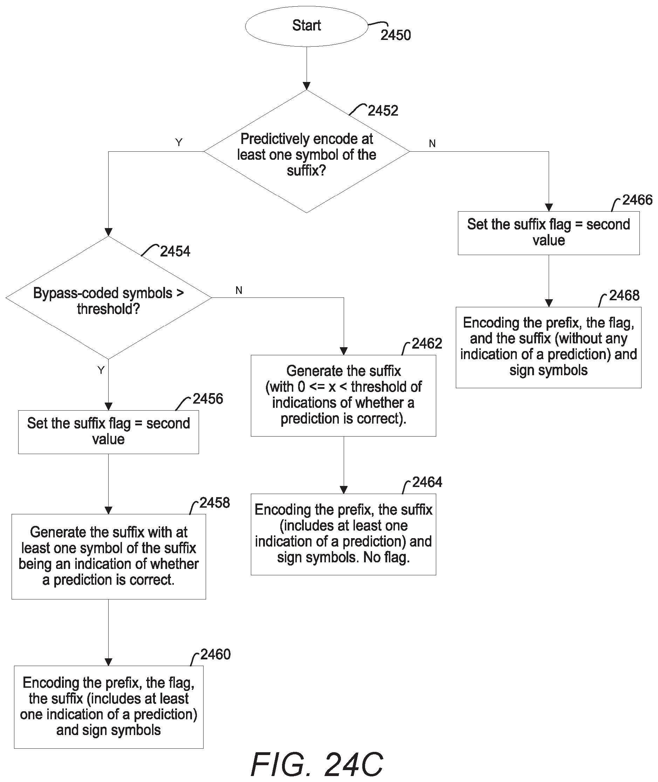

FIG. 24C illustrates a flowchart of a method 2450 for an aspect of the encoding method of FIG. 24B. For example, method 2450 can be used to predictively encode magnitude symbols of the suffix in accordance with a predefined threshold.

Method 2450 begins at 2452. At 2452, it is determined whether any suffix symbols will be context-coded. This decision may be based on a predetermined budget the encoder has allocated for context-encoding symbols. If any symbols are to be context-coded, the method proceeds to 2454. Otherwise, the method proceeds to 2466.

At 2454, it is determined whether the bypass coded symbols would exceed a predefined threshold. This may be determined based on the context-coding budget and the number of symbols in the suffix and a predefined threshold. If the threshold is exceeded, the method proceeds to 2456. Otherwise, the method proceeds to 2462.

The threshold helps in preventing the signaling overhead incurred by always including the suffix flag as described in relation to FIGS. 21 and 22A-22C. The threshold enables conditionally signaling the suffix flag.

The threshold is intended so that the suffix flag is signaled when the number (NBPCB) of bypass-coded symbols for the BVD magnitude suffix symbol prediction method exceeds a threshold (NTHRB): $NBPCB \geq NTHRB ,$ where NTHRB can take, for example, the following integer values: 1, 2, 3, 4, etc. Thus, when this condition is met, the suffix flag is omitted. Otherwise, this flag is signaled in the bit stream.

Another embodiment provides a conditional mechanism to signal the suffix flag in the bitstream using the length (LPREF) of the BVD prefix. In this embodiment, the suffix flag is signaled when the length (LPREF) of the BVD prefix exceeds a threshold (NTHRL): $LPREF \geq NTHRL ,$

where NTHRL can take, for example, the following integer values: 2, 3, 4, etc. Thus, when this condition is met, the suffix flag is signaled in the bit stream. Otherwise, this flag is omitted.

At 2456, the suffix flag is set to the second value indicating that the BVD includes the suffix (i.e., the suffix is being signaled). At 2458, the suffix is generated with at least one symbol being predictively encoded, and at least one symbol being bypass-coded. In some embodiments, a determined number of most significant bins, starting from the most significant bin, are context-coded. At 2460, the BVD is encoded including the magnitude greater than 0 flag, the prefix, the suffix flag, and the suffix. The suffix includes both context-coded symbols and bypass-coded symbols.

If, from 2454, the method proceeded to 2462, the method generates the suffix with at least one context-coded symbol. If the threshold is 0, then no bypass-coded symbols exist. Otherwise, some number less than or equal to the threshold is bypass-coded.

After the suffix is generated at 2462, at 2466, the encoded BVD is generated with the BVD including the magnitude greater than 0 flag, the prefix, and the suffix. Note that the suffix flag is not being signaled. The suffix includes either 0 or a number less than the threshold of bypass-coded symbols.

If, from 2452, the method proceeds to 2466, the suffix flag is set to the second value indicating that the suffix is being included in the BVD. Then, at 2468, the BVD is generated with the magnitude greater than 0 flag, the prefix, the suffix flag, and the suffix. Note that all suffix symbols are bypass-coded.

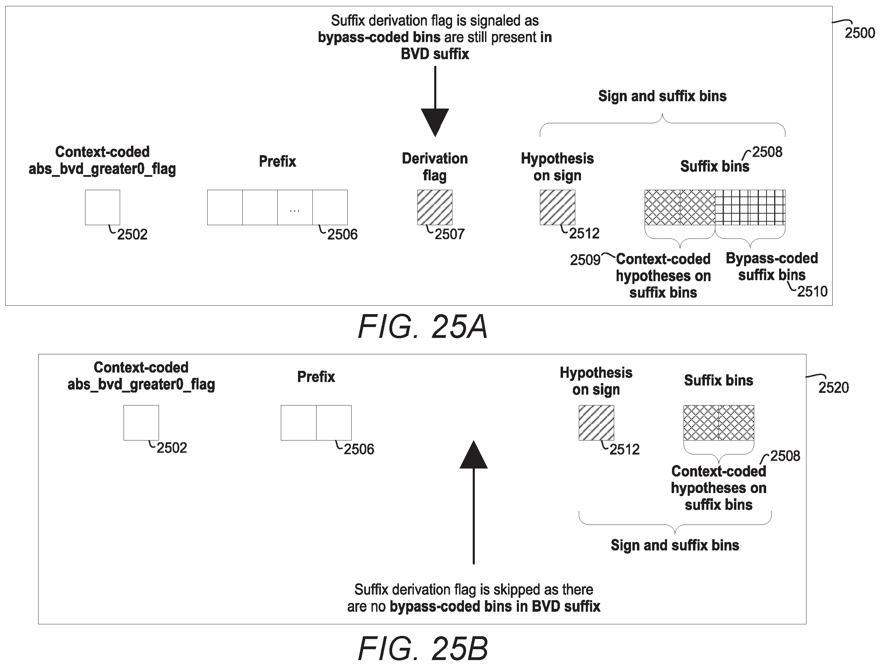

Another implementation of harmonization according to example embodiments is shown in FIGS. 25A-25B. This implementation is similar to that shown in relation to FIG. 23A and FIG. 23B, but illustrates another representation of a BVD in accordance with embodiments of this disclosure. A suffix flag 2507 (referred to as suffix derivation flag in the figure) is included, as in the example of FIG. 25A, when the number of bypass-coded magnitude symbols are below a predefined threshold. The suffix flag 2507 is included in BVD 2500 because BVD 2500 includes a number of bypass-coded magnitude symbols 2510 that is greater than the threshold (e.g., threshold = 0), whereas the suffix flag 2507 is not included in BVD 2520 in which the suffix 2508 does not include any bypass-coded symbols.

BVD 2500 and BVD 2520 also include their sign 2512. Thus, BVD 2500 includes the magnitude greater than 0 flag 2502, prefix 2504, sign 2512, and suffix. The suffix flag 2507 is included when either there are no suffix symbols included (e.g., suffix flag is set to the first predefined value), or the bypass-coded suffix symbols exceed a predefined threshold (e.g., suffix flag is set to the second predefined value). The suffix flag is not included (not signaled) in the BVD when the number of bypass-coded symbols in the suffix is equal to or less than the predefined threshold.

Embodiments using the BVD representations 2500 and 2520 may be used for two different uses of the status flag being set to the first value. As noted above, the status flag being equal to the first value (e.g., 0) indicates that the suffix is not being signaled in the encoded BVD. In some example embodiments, when the status flag is set to the first value, both a sign and a suffix value are derived as the result of searching within the search range with the template matching cost. Such a search was described above in relation to FIGS. 21, and 22A-22B. In this case in association with BVD 2500 or 2520, the search range is composed of, at least, 2 subranges defined by
- a prefix value as shown in TABLE 3 and
- a sign value that can take values of "+" and "-" which determine the positions of the at least 2 search subranges.

Alternatively, when the suffix flag value equals the first value, only a suffix value is derived as the result of searching within the search range with the minimal template matching cost, whereas a sign symbol is either bypass coded or predicted.

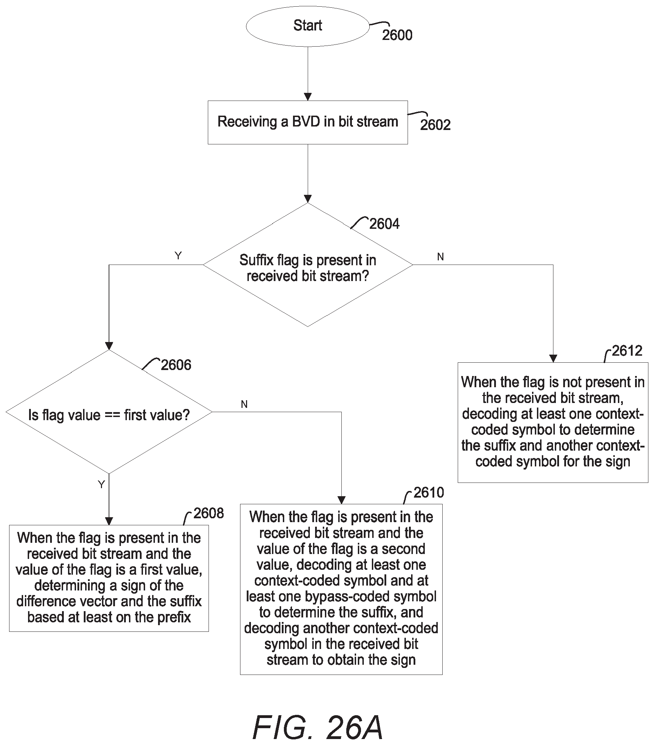

FIG. 26A illustrates a flowchart of a method 2600 for decoding a BVD, such as, for example, the BVD as in FIG. 25A and FIG. 25B, in accordance with embodiments of the present disclosure. The method 2600 may be implemented by a decoder, such as decoder 300 in FIG.3.

The method 2600 begins at 2602. At 2602, the decoder receives an encoded BVD in a received bit stream. For example, BVD 2500 may be received in a bit stream at the decoder.

At 2604, it is determined whether the suffix flag 2507 (e.g., suffix derivation flag in the drawing) is present in the bit stream for the BVD. If present, the method proceeds to 2606. If the suffix flag is not present, the method proceeds to 2612.

At 2606, it is determined whether the suffix flag has a first value. When the value of the suffix flag is the first value, it indicates that the suffix of the magnitude is not included in the encoded BVD. Alternatively, the suffix flag has a second value. The suffix flag having the second value indicates that the suffix is included in the encoded BVD.

If, at 2606, it is determined that the suffix flag has the first value, then the method proceeds to 2608 indicating that the suffix is not included in the encoded BVD and that the decoder is required to derive the suffix without it being signaled from the encoder.

In some embodiments, the suffix is determined by the decoder based at least on the value of the prefix that is included in the BVD. The decoder may use a search process such as that described above (e.g., in relation to 2206) to determine the suffix. Alternatively, in another embodiment, the search is intended to determine the suffix and also the sign. In this alternative embodiment, instead searching for the best template match in one reference area determined in accordance with the prefix (as described in relation to 2206), at least two disjoint reference areas are determined by considering the prefix value and the "+" or "-" sign values and the search is performed in all the at least two disjoint reference areas for the best matching template. When the search is performed in this manner, the best matching BVD determined will also identify the sign of the BVD in addition to its magnitude. Thus, in this alternative embodiment, when the suffix is not signaled, the sign may also may not be separately signaled. Both the suffix and the sign can be derived by the decoder based on the prefix of the BVD magnitude.

If, at 2606, it is determined that the suffix flag has a second value, then the method proceeds to 2610 indicating that the suffix is included in the BVD. The suffix has at least one magnitude symbol that is predictively encoded. Each predictively encoded symbol encodes an indication of whether a value of the magnitude symbol of the BVD matches a value of the same magnitude symbol of a BVD candidate used as a predictor of the BVD. The suffix is determined in accordance with the predictively encoded one or more magnitude symbols and one or more bypass-coded magnitude symbols.

If at 2604, it is determined that the suffix flag is not included, the method proceeds to 2612. At 2612, the suffix is included in the BVD and includes only context-coded magnitude symbols. In an embodiment each magnitude symbol encodes an indication of whether a value of the magnitude symbol of the BVD matches a value of the same magnitude symbol of a BVD candidate used as a predictor of the BVD. The suffix is determined in accordance with the predictively encoded one or more magnitude symbols.

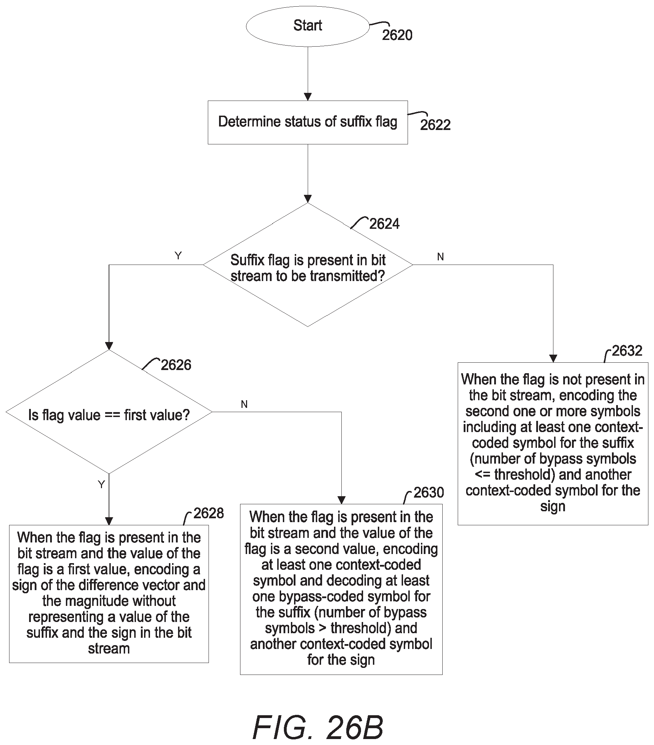

FIG. 26B illustrates a flowchart of a method 2620 for encoding a BVD, such as, for example, the BVD as in FIG. 25A and FIG. 25B, in accordance with embodiments of the present disclosure. The method 2620 may be implemented by an encoder, such as encoder 200 in FIG.2.

The method 2620 begins at 2622. At 2622, the encoder determines an encoding mode that it is operating in, and sets the suffix flag according to the determined mode. In an embodiment, at 2622, the encoder may receive a BVD to be transmitted to a decoder, and the encoder may determine, for example, whether the BVD can be transmitted without signaling the suffix. The determination may be made as described, for example, in relation to FIG. 26A above. If it is determined that the BVD can be transmitted without transmitting the suffix, then the suffix flag may be set to a first value (e.g., 0). Otherwise, the suffix flag is set to a second value (e.g., 1). If the suffix is to be transmitted, the encoder further determines whether, based on whether the number of bypass-coded symbols exceeds a predefined threshold, whether or not to transmit the suffix flag. The suffix flag is transmitted when the number of bypass-coded suffix symbols exceeds the predefined threshold, and is not transmitted otherwise.

At 2624, in accordance with the status of the suffix flag, the method proceeds to 2626 when the suffix flag is present in the bit stream, and to 2632 when the suffix flag is not included in the bit stream.

At 2626, when the suffix flag is set to a first value the method proceeds to 2628 or to 2630 when the suffix flag is set to the second value. Thus. according to the selected setting in the suffix flag, the method proceeds to either 2626 where encoding of the BVD is performed without signaling the suffix, or 2628 where encoding the BVD includes the suffix.

At 2628, the BVD is encoded without including, in the encoded BVD, a representation of the suffix. In some embodiments, as described above, in addition to the suffix, the sign of the BVD too can be derived by the decoder. In such embodiments, the encoded BVD may not include either of the sign or the suffix. Thus, the encoded BVD may have either the magnitude flag, the prefix, and the suffix flag set to the first value, or the magnitude flag, the prefix, the suffix flag and the sign.

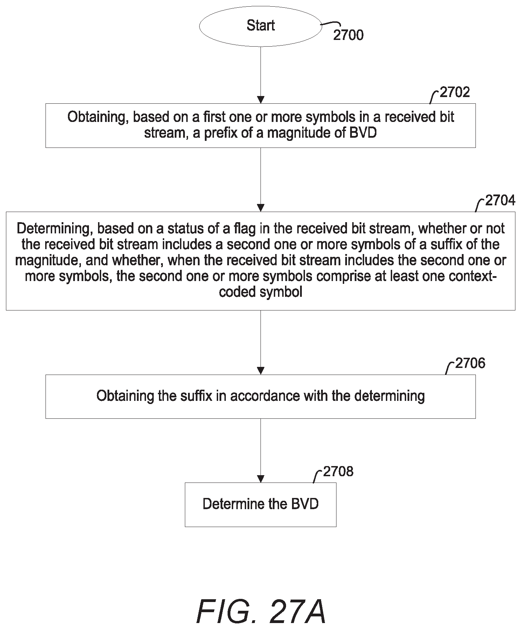

FIG. 27A illustrates a flowchart of a method 2700 of decoding a BVD in accordance with embodiments of this disclosure. Method 2700 can be performed by a decoder such as decoder 300 in FIG. 3.

Method 2700 starts at 2702 when the decoder has received a bit stream of an encoded BVD from an encoder, and the decoder has decoded the portions of the BVD. As described above, the BVD magnitude comprises a prefix and suffix determined in accordance with an Exponential-Golomb code. At 2702, the value of the prefix is determined based on a first one or more symbols of the BVD.

At 2704, based on a status of a suffix flag in the BVD, it is determined whether or not the received bit stream includes a second one or more symbols of a suffix of the BVD. When it is determined that the bit stream includes the second one or more symbols of the suffix, the encoder may further determine whether the second one or more symbols include at least one context-coded symbol. The status of the suffix flag may include its presence or absence in the bit stream and/or its value. As noted above, the suffix flag indicates the presence or absence of the suffix (i.e., whether the suffix is being signaled from the encoder to the decoder) and also indicates, at least in some embodiments, the presence of bypass-coded BVD symbols. That is, when the suffix flag indicates that the suffix is not being signaled, in some embodiments, neither the suffix value (e.g., magnitude) nor any representation of the suffix value is included in the encoded BVD on the bit stream. The suffix flag may be 1 or more bits.

At 2706, in accordance with the determination made at 2704, the suffix of the BVD is obtained. For example, one or the methods 2200, 2400 or 2600 can be used to determine the suffix.

In some embodiments, when the suffix flag is present in the received bit stream and the value of the suffix flag is a first value, the suffix is determined based at least on the prefix, and when the suffix flag is present in the received bit stream and the value of the suffix flag is a second value, at least one context-coded suffix symbol is entropy decoded in order to obtain the suffix.

In some embodiments, when the suffix flag is present in the received bit stream and the value of the suffix flag is the first value, the suffix is determined based at least on the prefix by searching in an area within a picture in which a current block is located for another block corresponding to the current block, where the area is determined according to at least a value of the prefix and a possible value of the suffix determined in accordance with the value of the prefix. The other block is selected based on a difference between the other block and the current block, and the suffix is determined based on the selected another block. The difference may be determined based on templates of the current block and another block.

In some embodiments, when the suffix flag is present in the received bit stream and the value of the suffix flag is a first value, the suffix is determined based at least on the prefix, and when the suffix flag is present in the received bit stream and the value of the suffix flag is a second value, or when the suffix flag is absent in the received bit stream, at least one context-coded suffix symbol is entropy decoded in order to obtain the suffix.

In some embodiments, when the suffix flag is present in the bit stream and the value of the suffix flag is the first value, the status of the suffix flag may be determined based on whether or not a value of the suffix is represented

in the bit stream to be transmitted by searching in an area within a picture in which a current block is located for another block corresponding to the current block, wherein the area is determined according to at least a value of the prefix and a possible value of the suffix determined in accordance with the value of the prefix. Another block is elected based on a difference between the another block and the current block, and, based at least on the selected another block, whether or not the value of the suffix is represented in the bit stream is determined. The difference may be determined based on respective templates of the current block and the another block.

In some embodiments, when the suffix flag is present in the bit stream and the value of the suffix flag is the second value, the second one or more symbols include at least one context-coded symbol and at least one bypass-coded symbol, and each context-coded symbol in the second one or more symbols corresponds to an indication of a prediction. Each indication may indicate whether a corresponding respective prediction is correct.

In some embodiments, when the suffix flag is present in the received bit stream and the value of the suffix flag is the second value, decoding of the second one or more symbols, including the at least one context-coded symbol and at least one bypass-coded symbol, is performed to obtain the suffix. When the suffix flag is absent in the received bit stream, decoding of the second one or more symbols is performed to obtain the suffix, where either the second one or more symbols include at least one context-coded symbol and a number of bypass-coded symbols is less than a predefined threshold or a number of symbols in the second one or more symbols is less than the predefined threshold.

In some embodiments, the suffix and the sign are determined. For example, in some embodiments, when the suffix flag is present in the received bit stream and the value of the suffix flag is the first value, a sign of the BVD and the suffix are determined based at least on the prefix. When the suffix flag is present in the received bit stream and the value of the suffix flag is the second value, or when the suffix flag is absent in the received bit stream, the second one or more symbols including at least one context-coded symbol are decoded to obtain the suffix and another context-coded symbol in the received bit stream is decoded to obtain the sign.

In some embodiments, when the suffix flag is present in the received bit stream and the value of the suffix flag is a first value, the suffix is determined based at least on the prefix, another symbol in the received bit stream is decoded to obtain a sign of the BVD vector. When the suffix flag is present in the received bit stream and the value of the suffix flag is a second value, or when the suffix flag is absent in the received bit stream, at least one context-coded symbol to is decoded to obtain the suffix and another context-coded symbol in the received bit stream is decoded to obtain a sign of the BVD.

At 2708, the BVD is decoded.

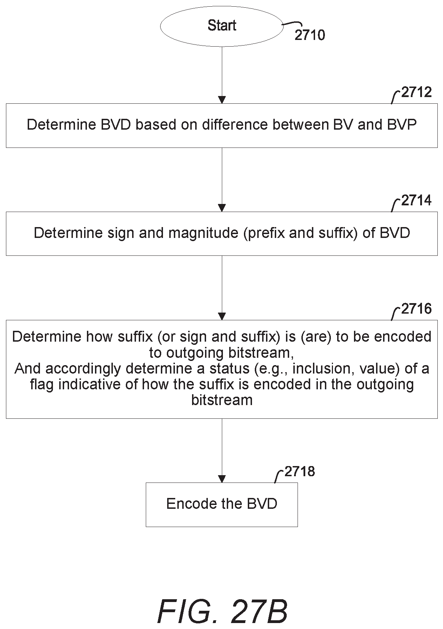

FIG. 27B illustrates a flowchart of a method of encoding a BVD in accordance with embodiments of this disclosure. Method 2710 can be performed by encoder such as encoder 200 in FIG. 2.

Method 2710 begins at 2712. At 2712, a BVD is determined based on a BV and a BVP.

At 2714, the magnitude of the BVD and the sign of the BVD are determined. The magnitude may be determined as a prefix and a suffix. As shown in TABLE 3, a range of values is indicated by the prefix representing the magnitude of the BVD, and the suffix indicates the precise value within the range of values of the magnitude of the BVD.

At 2716, it is determined how the suffix, or the sign and the suffix, is to be signaled to the decoder, and accordingly a status of a suffix flag is determined for the BVD. For example, one of methods 2210 (FIG. 22B), 2420 (FIG. 24B) and 2620 (FIG. 26B) may be used to make this determination.

In some embodiments, when the suffix flag is present in the bit stream and the value of the suffix flag is a first value, the magnitude is encoded without representing the value of the suffix in the encoded magnitude. When the suffix flag is present in the bit stream and the value of the suffix flag is a second value, the second one or more symbols including the at least one context-coded symbol are encoded to obtain the suffix.

In some embodiments, when the suffix flag is present in the bit stream and the value of the suffix flag is the first value, the status of the suffix flag is determined based on whether or not a value of the suffix is represented in the bit stream to be transmitted by searching an area within a picture in which a current block is located for another block corresponding to the current block, where the area is determined according to at least a value of the prefix and a possible value of the suffix determined in accordance with the value of the prefix. Another block is selected based on a difference between the other block and the current block, and based at least on the selected another block, it is determined whether or not the value of the suffix is represented in the bit stream. The difference may be determined based on respective templates of the current block and the other block.

In some embodiments, when the suffix flag is present in the bit stream and the value of the suffix flag is the second value, the second one or more symbols include at least one context-coded symbol and at least one bypass-coded symbol, and each context-coded symbol in the second one or more symbols corresponds to an indication of a prediction. Each indication may indicate whether a corresponding respective prediction is correct.

In some embodiments, when the suffix flag is present in the bit stream and the value of the suffix flag is a first value, the magnitude is encoded without representing a value of the suffix in the encoded magnitude. When the suffix flag is present in the bit stream and the value of the suffix flag is a second value, or when the suffix flag is absent in the bit stream, the second one or more symbols including the at least one context-coded symbol are encoded to determine the suffix.

In some embodiments, the suffix flag is present in the bit stream and the value of the suffix flag is the first value, and the status of the suffix flag is determined based on whether or not a value of the suffix is represented in the bit stream to be transmitted by a process including searching in an area within a picture in which a current block is located for another block corresponding to the current block, where the area is determined according to at least a value of the prefix and a possible value of the suffix determined in accordance with the value of the prefix. Another block is searched based on a difference between the other block and the current block, and, based at least on the selected another block, it is determined whether or not the value of the suffix is represented in the bit stream. The difference may be determined based on respective templates of the current block and the other block.

In some embodiments, when the suffix flag is present in the bit stream and the value of the suffix flag is the second value, the second one or more symbols, including the at least one context-coded symbol and at least one

bypass-coded symbol, are encoded to determine the suffix. When the suffix flag is absent in the bit stream, the second one or more symbols of the suffix is entropy encoded to obtain the suffix, where either the second one or more symbols include at least one context-coded symbol and a number of bypass-coded symbols is less than a predefined threshold or a number of symbols in the second one or more symbols is less than the predefined threshold.

In some embodiments, when the suffix flag is present in the bit stream and the value of the suffix flag is the second value, the second one or more symbols include at least one context-coded symbol and at least one bypass-coded symbol, each context-coded symbol in the second one or more symbols corresponds to an indication of a prediction. When the suffix flag is absent in the received bit stream, the second one or more symbols include at least one context-coded symbol, each context-coded symbol in the second one or more symbols corresponds to an indication of a prediction. Each indication may indicate whether a corresponding respective prediction is correct.

In some embodiments, when the suffix flag is present in the bit stream and the value of the suffix flag is the second value, the number of bypass-coded symbols in the second one or more symbols exceeds the predefined threshold. When the suffix flag is absent in the bit stream, the number of bypass-coded symbols in the second one or more symbols is less than or equal to the predefined threshold.

In some embodiments, when the suffix flag is present in the bit stream and the value of the suffix flag is the second value, a length of the prefix exceeds the predefined threshold. When the suffix flag is absent in the bit stream, the length of the prefix is less than or equal to the predefined threshold.

In some embodiments, when the suffix flag is present in the bit stream and the value of the suffix flag is a first value, a sign of the BVD and the magnitude are encoded without representing a value of the suffix and the sign in the bit stream. When the suffix flag is present in the bit stream and the value of the suffix flag is a second value, or when the suffix flag is absent in the bit stream, the second one or more symbols including the at least one context-coded symbol and another context-coded symbol representing the sign are encoded.

In some embodiments, when the suffix flag is present in the bit stream and the value of the suffix flag is the first value, the status of the suffix flag is determined based on whether or not a value of the suffix is represented in the bit stream to be transmitted by a process that includes searching in a plurality of areas within a picture in which a current block is located for another block corresponding to the current block, where the plurality of areas are determined according to at least a value of the prefix, a possible value of the suffix determined in accordance with the value of the prefix, and possible values of the sign. The other block is selected based on a difference between the other block and the current block, and based at least on the selected another block, it is determined whether or not the value of the suffix is represented in the bit stream. The difference may be determined based on respective templates of the current block and the other block.

In some embodiments, when the suffix flag is present in the bit stream and the value of the suffix flag is the second value, the second one or more symbols, including the at least one context-coded symbol and at least one bypass-coded symbol are encoded to obtain the suffix. When the suffix flag is absent in the bit stream, the second one or more symbols are encoded to obtain the suffix, where either the second one or more symbols include at least one context-coded symbol and a number of bypass-coded symbols is less than a predefined threshold or a number of symbols in the second one or more symbols is less than the predefined threshold.

In some embodiments, when the suffix flag is present in the bit stream and the value of the suffix flag is the second value, the second one or more symbols include at least one context-coded symbol and at least one bypass-coded symbol, each context-coded symbol in the second one or more symbols corresponds to an indication of a prediction, and the bit stream includes another context-coded symbol representing the sign. When the suffix flag is absent in the bit stream, the second one or more symbols include at least one context-coded symbol, each context-coded symbol in the second one or more symbols corresponds to an indication of a prediction, and the bit stream includes another context-coded symbol representing the sign. Each indication may indicate whether a corresponding respective prediction is correct.

In some embodiments, when the suffix flag is present in the bit stream and the value of the suffix flag is the second value, a number of bypass-coded symbols in the second one or more symbols exceeds the predefined threshold, and, when the suffix flag is absent in the bit stream, the number of bypass-coded symbols in the second one or more symbols is less than the predefined threshold. When the suffix flag is present in the bit stream and the value of the suffix flag is the second value, a length of the prefix exceeds the predefined threshold, and, when the suffix flag is absent in the bit stream, the length of the prefix is less than the predefined threshold.

In some embodiments, when the suffix flag is present in the bit stream and the value of the suffix flag is a first value, the magnitude is encoded without representing the suffix in the encoded magnitude, and another symbol in the bit stream is encoded to represent the sign, where the other symbol corresponds to the sign of the BVD. When the suffix flag is present in the bit stream and the value of the suffix flag is a first value, or when the suffix flag is absent in the bit stream, the second one or more symbols including the at least one context-coded symbol and another context-coded symbol representing the sign are encoded.

At 2718, the BVD is encoded based on the determination at 2716.

It should be further noted that the methods discussed above with respect to FIGS. 22A-C, 24A-C, 26A-B and 27A-B may be further applied to one or more magnitude symbols of another difference vector such as an MVD used in inter prediction in addition or alternatively to one or more magnitude symbols of a BVD used in IBC.

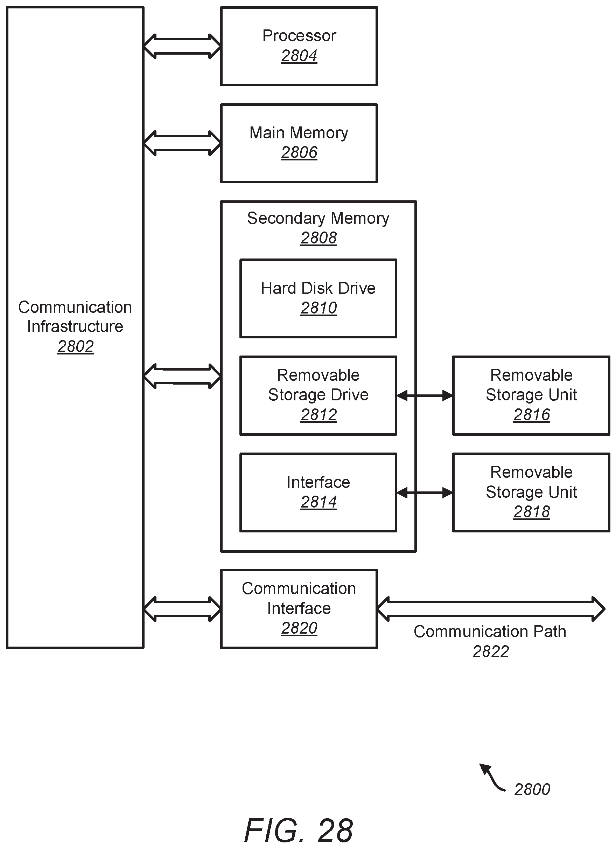

Embodiments of the present disclosure may be implemented in hardware using analog and/or digital circuits, in software, through the execution of instructions by one or more general purpose or special-purpose processors, or as a combination of hardware and software. Consequently, embodiments of the disclosure may be implemented in the environment of a computer system or other processing system. An example of such a computer system 2800 is shown in FIG. 28. Blocks depicted in the figures above, such as the blocks in FIGS. 1, 2, and 3, may execute on one or more computer systems 2800. Furthermore, each of the steps of the flowcharts depicted in this disclosure may be implemented on one or more computer systems 2800.

Computer system 2800 includes one or more processors, such as processor 2804. Processor 2804 may be, for example, a special purpose processor, general purpose processor, microprocessor, or digital signal processor. Processor 2804 may be connected to a communication infrastructure 2802 (for example, a bus or network). Computer system 2800 may also include a main memory 2806, such as random access memory (RAM), and may also include a secondary memory 2808.

Secondary memory 2808 may include, for example, a hard disk drive 2810 and/or a removable storage drive 2812, representing a magnetic tape drive, an optical disk drive, or the like. Removable storage drive 2812 may read from and/or write to a removable storage unit 2816 in a well-known manner. Removable storage unit 2816 represents a magnetic tape, optical disk, or the like, which is read by and written to by removable storage drive 2812. As will be appreciated by persons skilled in the relevant art(s), removable storage unit 2816 includes a computer usable storage medium having stored therein computer software and/or data.

In alternative implementations, secondary memory 2808 may include other similar means for allowing computer programs or other instructions to be loaded into computer system 2800. Such means may include, for example, a removable storage unit 2818 and an interface 2814. Examples of such means may include a program cartridge and cartridge interface (such as that found in video game devices), a removable memory chip (such as an EPROM or PROM) and associated socket, a thumb drive and USB port, and other removable storage units 2818 and interfaces 2814 which allow software and data to be transferred from removable storage unit 2818 to computer system 2800.

Computer system 2800 may also include a communications interface 2820. Communications interface 2820 allows software and data to be transferred between computer system 2800 and external devices. Examples of communications interface 2820 may include a modem, a network interface (such as an Ethernet card), a communications port, etc. Software and data transferred via communications interface 2820 are in the form of signals which may be electronic, electromagnetic, optical, or other signals capable of being received by communications interface 2820. These signals are provided to communications interface 2820 via a communications path 2822. Communications path 2822 carries signals and may be implemented using wire or cable, fiber optics, a phone line, a cellular phone link, an RF link, and other communications channels.

As used herein, the terms "computer program medium" and "computer readable medium" are used to refer to tangible storage media, such as removable storage units 2816 and 2818 or a hard disk installed in hard disk drive 2810. These computer program products are means for providing software to computer system 2800. Computer programs (also called computer control logic) may be stored in main memory 2806 and/or secondary memory 2808. Computer programs may also be received via communications interface 2820. Such computer programs, when executed, enable the computer system 2800 to implement the present disclosure as discussed herein. In particular, the computer programs, when executed, enable processor 2804 to implement the processes of the present disclosure, such as any of the methods described herein. Accordingly, such computer programs represent controllers of the computer system 2800.

In another embodiment, features of the disclosure may be implemented in hardware using, for example, hardware components such as application-specific integrated circuits (ASICs) and gate arrays. Implementation of a hardware state machine to perform the functions described herein will also be apparent to persons skilled in the art.

Various embodiments discussed above are summarized in the following section. It should be understood that the enumerated examples are not intended to be exhaustive, but rather serve as an illustrative summary.

Example 1: A method comprising:
obtaining, based on a first one or more symbols in a received bit stream, a prefix of a magnitude of a difference vector;
determining, based on a status of a flag in the received bit stream:
   whether or not the received bit stream includes a second one or more symbols of a suffix of the magnitude; and
   whether, when the received bit stream includes the second one or more symbols, the second one or more symbols comprise at least one context-coded symbol; and
obtaining the suffix based on the determining.

Example 2: The method of example 1, wherein the status includes a value of the flag, and the determining is further based on the value of the flag.

Example 3: The method of any of examples 1-2, wherein, when the flag is present in the received bit stream and the value of the flag is a first value, the suffix is not represented in the received bit stream.

Example 4: The method of any of examples 1-3, wherein the obtaining the suffix based on the determining comprises:
when the flag is present in the received bit stream and the value of the flag is a first value, determining the suffix based at least on the prefix; and
when the flag is present in the received bit stream and the value of the flag is a second value, entropy decoding the at least one context-coded symbol.

Example 5: The method of any of examples 1-4, wherein, when the flag is present in the received bit stream and the value of the flag is the first value, the determining the suffix based at least on the prefix comprises:
searching in an area within a picture in which a current block is located for another block corresponding to the current block, wherein the area is determined according to at least a value of the prefix and a possible value of the suffix determined based on the value of the prefix;
selecting the another block based on a difference between the another block and the current block; and
determining the suffix based on the selected another block.

Example 6: The method of any one of examples 1-5, wherein, when the flag is present in the received bit stream and the value of the flag is the second value, the obtaining the suffix based on the determining comprises:
decoding the second one or more symbols, including the at least one context-coded symbol and at least one bypass-coded symbol, to obtain the suffix.

Example 7: The method of any one of examples 1-6, wherein the decoding the second one or more symbols to obtain the suffix comprises:
when the flag is present in the received bit stream and the value of the flag is the second value, obtaining one or more predicted values corresponding to each context-coded symbol in the second one or more symbols and one or more values corresponding to each bypass-coded symbol in the second one or more symbols, and determining the suffix based on the one or more predicted values and the one or more values corresponding to each bypass-coded symbol in the second one or more symbols.

Example 8: The method of example 7, wherein each of the one or more predicted values is determined according to a respective indication included in the received bit stream and a respective prediction, wherein each respective indication indicates whether a corresponding respective prediction is correct.

Example 9: The method of any one of examples 1-2, wherein the determining is further based on a presence or absence of the flag in the received bit stream, and wherein the obtaining the suffix based on the determining comprises:
when the flag is present in the received bit stream and the value of the flag is a first value, determining the suffix based at least on the prefix; and
when the flag is present in the received bit stream and the value of the flag is a second value, or when the flag is absent in the received bit stream, entropy decoding the at least one context-coded symbol.

Example 10: The method of any one of examples 1-2, or 9, wherein, when the flag is present in the received bit stream and the value of the flag is the first value, the determining the suffix based at least on the prefix comprises:
searching in an area within the picture in which a current block is located for another block corresponding to the current block, wherein the area is determined according to at least a value of the prefix and a possible value of the suffix determined based on the value of the prefix;
selecting the another block based on a difference between the another block and the current block; and
determining the suffix based on the selected another block.

Example 11: The method of any one of examples 1-2, or 9-10, wherein, when the flag is present in the received bit stream and the value of the flag is the second value, or when the flag is absent in the received bit stream, the obtaining the suffix based on the determining comprises:
when the flag is present in the received bit stream and the value of the flag is the second value, decoding the second one or more symbols, including the at least one context-coded symbol and at least one bypass-coded symbol, to obtain the suffix; or
when the flag is absent in the received bit stream, decoding the second one or more symbols to obtain the suffix, wherein either the second one or more symbols include at least one context-coded symbol and a number of bypass-coded symbols is less than a predefined threshold or a number of symbols in the second one or more symbols is less than the predefined threshold.

Example 12: The method of any one of examples 1-2, or 9-11, wherein the decoding the second one or more symbols to obtain the suffix comprises:
when the flag is present in the received bit stream and the value of the flag is the second value, obtaining one or more predicted values corresponding to each context-coded symbol in the second one or more symbols and one or more values corresponding to each bypass-coded symbol in the second one or more symbols, and determining the suffix based on the one or more predicted values and the one or more values corresponding to each bypass-coded symbol of the second one or more symbols; or
when the flag is absent in the received bit stream, obtaining one or more predicted values corresponding to the at least one context-coded symbol in the second one or more symbols, and determining the suffix based at least on the one or more predicted values.

Example 13: The method of any one of examples 1-2, or 9-12, wherein each of the one or more predicted values is determined according to a respective indication included in the received bit stream and a respective prediction, wherein each respective indication indicates whether the corresponding respective prediction is correct.

Example 14: The method of any one of examples 1-2, or 9-13, wherein, when the flag is present in the received bit stream and the value of the flag is the second value, a number of bypass-coded symbols in the second one or more symbols exceeds the predefined threshold, and, when the flag is absent in the received bit stream, the number of bypass- coded symbols in the second one or more symbols is less than the predefined threshold.

Example 15: The method of any one of examples 1-2, or 11-14, wherein, when the flag is present in the received bit stream and the value of the flag is the second value, a length of the prefix exceeds the predefined threshold, and, when the flag is absent in the received bit stream, the length of the prefix is less than the predefined threshold.

Example 16: The method of any one of examples 1-2, wherein the determining is further based on a presence or absence of the flag in the received bit stream, the obtaining the suffix based on the determining comprises:
when the flag is present in the received bit stream and the value of the flag is a first value, determining a sign of the difference vector and the suffix based at least on the prefix; and
when the flag is present in the received bit stream and the value of the flag is a second value, or when the flag is absent in the received bit stream, decoding the second one or more symbols including the at least one context-coded symbol to obtain the suffix and decoding another context-coded symbol in the received bit stream to obtain the sign.

Example 17: The method of any one of examples 1-2, or 16, wherein, when the flag is present in the received bit stream and the value of the flag is the first value, the determining the suffix based at least on the prefix comprises:
searching in a plurality of areas within a picture in which a current block is located for another block corresponding to the current block, wherein the plurality of areas are determined according to at least a value of the prefix, a possible value of the suffix determined based on the value of the prefix, and possible values of the sign;
selecting the another block based on a difference between the another block and the current block; and
determining the sign and the suffix based on the selected another block.

Example 18: The method of any one of examples 1-2, or 16-17, wherein, when the flag is present in the received bit stream and the value of the flag is the second value, or when the flag is absent in the received bit stream, the decoding the suffix based on the determining comprises:
when the flag is present in the received bit stream and the value of the flag is the second value, decoding the second one or more symbols, including the at least one context-coded symbol and at least one bypass-coded symbol, to obtain the suffix; or
when the flag is absent in the received bit stream, decoding the second one or more symbols to obtain the suffix, wherein either the second one or more symbols include at least one context-coded symbol and a number of bypass-coded symbols is less than a predefined threshold or a number of symbols in the second one or more symbols is less than the predefined threshold.

Example 19: The method of any one of examples 1-2, or 16-18, wherein the decoding the second one or more symbols to obtain the suffix comprises:
when the flag is present in the received bit stream and the value of the flag is the second value, obtaining one or more predicted values corresponding to each context-coded symbol in the second one or more symbols and one or more values corresponding to each bypass-coded symbol in the second one or more symbols, and determining the suffix based on the one or more predicted values and the one or more values corresponding to each bypass-coded symbol in the second one or more symbols, and
obtaining another predicted value corresponding to the another context-coded symbol and determining the sign based on the another predicted value; or
when the flag is absent in the received bit stream, obtaining one or more predicted values corresponding to the at least one context-coded symbol in the second one or more symbols, and determining the suffix based at least on the one or more predicted values, and
obtaining another predicted value corresponding to the another context-coded symbol and determining the sign based on the another predicted value.

Example 20: The method of any one of examples 1-2, or 16-19, wherein each of the one or more predicted values and the another predicted value are determined according to a respective indication included in the received bit stream and a respective prediction, wherein each respective indication indicates whether the corresponding respective prediction is correct.

Example 21: The method of any one of examples 1-2, or 16-20, wherein, when the flag is present in the received bit stream and the value of the flag is the second value, a number of bypass-coded symbols in the second one or more symbols exceeds the predefined threshold, and, when the flag is absent in the received bit stream, the number of bypass- coded symbols in the second one or more symbols is less than or equal to the predefined threshold.

Example 22: The method of any one of examples 1-2, or 16-21, wherein, when the flag is present in the received bit stream and the value of the flag is the second value, a length of the prefix exceeds the predefined threshold, and, when the flag is absent in the received bit stream, the length of the prefix is less than or equal to the predefined threshold.

Example 23: The method of any one of example 2, wherein the determining is further based on a presence or absence of the flag in the received bit stream, and wherein the obtaining the suffix based on the determining comprises:
when the flag is present in the received bit stream and the value of the flag is a first value,
   determining the suffix based at least on the prefix, and
   decoding another symbol in the received bit stream to obtain a sign of the difference vector; and
when the flag is present in the received bit stream and the value of the flag is a second value, or when the flag is absent in the received bit stream,
   decoding the at least one context-coded symbol to obtain the suffix and decoding another context-coded symbol in the received bit stream to obtain a sign of the difference vector.

Example 24: A method comprising:
determining a prefix and a suffix of a magnitude of a difference vector, the prefix comprising a first one or more symbols and the suffix comprising a second one or more symbols;
determining a status of a flag based on:
   whether or not a value of the suffix is represented in a bit stream to be transmitted; and
   whether, when the value of the suffix is represented in the bit stream, the second one or more symbols in the bit stream comprise at least one context-coded symbol; and
encoding the magnitude based on the determining.

Example 25: The method of example 24, wherein the status includes a value of the flag.

Example 26: The method of any one of examples 24-25, wherein, when the flag is present in the bit stream and the value of the flag is a first value, the value of the suffix is not represented in the bit stream.

Example 27: The method of any one of examples 24-26, wherein the encoding the magnitude based on the determining comprises:
when the flag is present in the bit stream and the value of the flag is a first value, encoding the magnitude without representing the value of the suffix in the encoded magnitude; and
when the flag is present in the bit stream and the value of the flag is a second value, encoding the second one or more symbols including the at least one context-coded symbol.

Example 28: The method of any one of examples 24-27, wherein, when the flag is present in the bit stream and the value of the flag is the first value, the determining the status of the flag based on whether or not a value of the suffix is represented in the bit stream to be transmitted comprises:
searching in an area within a picture in which a current block is located for another block corresponding to the current block, wherein the area is determined according to at least a value of the prefix and a possible value of the suffix determined based on the value of the prefix;
selecting the another block based on a difference between the another block and the current block; and
determining, based at least on the selected another block, whether or not the value of the suffix is represented in the bit stream.

Example 29: The method of any one of examples 24-28, wherein, when the flag is present in the bit stream and the value of the flag is the second value, the encoding the magnitude based on the determining comprises:
encoding the second one or more symbols, including the at least one context-coded symbol and at least one bypass-coded symbol.

Example 30: The method of any one of examples 24-29, wherein the determining a status of the flag based on whether or not a value of the suffix is represented in the bit stream, and whether, when the value of the suffix is represented in the bit stream, the second one or more symbols in the bit stream comprise at least one context-coded symbol, comprises:
when the flag is present in the bit stream and the value of the flag is the second value, the second one or more symbols include at least one context-coded symbol and at least one bypass-coded symbol, each context-coded symbol in the second one or more symbols corresponds to an indication of a prediction.

Example 31: The method of any one of examples 24-25, wherein the determining is further based on a presence or absence of the flag in the bit stream, and the encoding the magnitude based on the determining comprises:
when the flag is present in the bit stream and the value of the flag is a first value, encoding the magnitude without representing a value of the suffix in the encoded magnitude; and
when the flag is present in the bit stream and the value of the flag is a second value, or when the flag is absent in the bit stream, encoding the second one or more symbols including the at least one context-coded symbol.

Example 32: The method of any one of examples 24-25, wherein the determining is further based on a presence or absence of the flag in the bit stream, the wherein the encoding the magnitude based on the determining comprises:
when the flag is present in the bit stream and the value of the flag is a first value, encoding a sign of the difference vector and the magnitude without representing a value of the suffix and the sign in the bit stream; and
when the flag is present in the bit stream and the value of the flag is a second value, or when the flag is absent in the bit stream, encoding the second one or more symbols including the at least one context-coded symbol and another context-coded symbol representing the sign.

Example 33: The method any one of examples 5, 10, 17, or 28 wherein the difference is determined based on respective templates of the current block and the another block.

Example 34: The method of nay one of example 6, 11, or 18 wherein the decoding of each context-coded symbol is performed in a regular mode in a context-adaptive binary arithmetic coding (CABAC) decoder and the decoding of each bypass- coded symbol is performed in a bypass mode in the CABAC decoder.

Example 35: The method of any one of examples 1-34, wherein the prefix and the suffix are defined based on an Exponential Golomb code value of the difference vector.

Example 36: The method of any one of examples 1-35, wherein the difference vector is a block vector difference (BVD).

Example 37: The method of any one of examples 1-36, wherein the difference vector is a motion vector difference (MVD).

Example 38: A decoder comprising:
one or more processors and
memory storing instructions that, when executed by the one or more processors, cause the decoder to perform the method of any one of examples 1-23 or 33-37.

Example 39: A encoder comprising:
one or more processors and
memory storing instructions that, when executed by the one or more processors, cause the encoder to perform the method of any one of examples 24-33 or 35-37.

Example 40: A non-transitory computer-readable medium comprising instructions that, when executed by one or more processors, cause the one or more processors to perform the method of any one of examples 1-37.

## Claims

1. A method comprising:
obtaining, based on a first one or more symbols in a received bitstream, a prefix of a magnitude of a difference vector, wherein the difference vector is a block vector difference or a motion vector difference;
determining, after obtaining the prefix and based on a status of a flag in the received bitstream:
whether a suffix of the magnitude is derivable at a decoder without a second one or more symbols of the suffix being received in the bitstream; and
whether, when the received bitstream includes the second one or more symbols, the second one or more symbols comprise at least one context-coded symbol; and
obtaining the suffix based on the determining; and
decoding a current block based on the difference vector.

2. The method of claim 1, wherein the obtaining the suffix based on the determining comprises:
when the flag is present in the received bitstream and the value of the flag is a first value, determining the suffix based at least on the prefix; and
when the flag is present in the received bitstream and the value of the flag is a second value, entropy decoding the at least one context-coded symbol.

3. The method of any of claims 1-2, wherein, when the flag is present in the received bitstream and the value of the flag is the first value, the determining the suffix based at least on the prefix comprises:
searching in an area within a picture in which a current block is located for a reference template matching a current template of the current block, wherein the area comprises a range determined according to a difference between a value of the prefix and a next value of a next prefix, wherein the value of the prefix indicates possible values of the suffix;
determining the suffix based on a position of the reference template.

4. The method of any one of claims 1-3, wherein, when the flag is present in the received bitstream and the value of the flag is the second value, the obtaining the suffix based on the determining comprises:
decoding the second one or more symbols, including the at least one context-coded symbol and at least one bypass-coded symbol, to obtain the suffix.

5. The method of any one of claims 1-4, wherein the decoding the second one or more symbols to obtain the suffix comprises:
when the flag is present in the received bitstream and the value of the flag is the second value, obtaining one or more predicted values corresponding to each context-coded symbol in the second one or more symbols and one or more values corresponding to each bypass-coded symbol in the second one or more symbols, and determining the suffix based on the one or more predicted values and the one or more values corresponding to each bypass-coded symbol in the second one or more symbols.

6. The method of claim 5, wherein each of the one or more predicted values is determined according to a respective indication included in the received bitstream and a respective prediction, wherein each respective indication indicates whether a corresponding respective prediction is correct.

7. The method of claim 1, wherein the determining is further based on a presence or absence of the flag in the received bitstream, and wherein the obtaining the suffix based on the determining comprises:
when the flag is present in the received bitstream and the value of the flag is a first value, determining the suffix based at least on the prefix; and
when the flag is present in the received bitstream and the value of the flag is a second value, or when the flag is absent in the received bitstream, entropy decoding the at least one context-coded symbol.

8. A method comprising:
determining a magnitude of a difference vector for encoding a current block, wherein the difference vector is a block vector difference or a motion vector difference;
determining a prefix and a suffix of the magnitude of the difference vector, the prefix comprising a first one or more symbols and the suffix comprising a second one or more symbols;
determining a status of a flag indicating whether a suffix of the magnitude is derivable at a decoder without a second one or more symbols of the suffix being represented in the bitstream, wherein when the value of the suffix is represented in the bit stream, the second one or more symbols in the bitstream comprise at least one context-coded symbol; and
encoding the magnitude based on the determining.

9. The method of claim 8, wherein the encoding the magnitude based on the determining comprises:
when the flag is present in the bitstream and the value of the flag is a first value, encoding the magnitude without representing the value of the suffix in the encoded magnitude; and
when the flag is present in the bitstream and the value of the flag is a second value, encoding the second one or more symbols including the at least one context-coded symbol.

10. The method of any one of claims 8-9, wherein, when the flag is present in the bitstream and the value of the flag is the first value, the determining the status of the flag comprises:
searching in an area within a picture in which a current block is located for a reference template matching a current template of the current block, wherein the area comprises a range determined according to a difference between a value of the prefix and a next value of a next prefix, wherein the value of the prefix indicates possible values of the suffix;
determining, based at least on a reference block at a position of the reference template, whether or not the value of the suffix is represented in the bitstream.

11. The method of any one of claims 8-10, wherein, when the flag is present in the bitstream and the value of the flag is the second value, the encoding the magnitude based on the determining comprises:
encoding the second one or more symbols, including the at least one context-coded symbol and at least one bypass-coded symbol.

12. The method of claim 8, wherein the determining is further based on a presence or absence of the flag in the bitstream, and the encoding the magnitude based on the determining comprises:
when the flag is present in the bitstream and the value of the flag is a first value, encoding the magnitude without representing a value of the suffix in the encoded magnitude; and
when the flag is present in the bitstream and the value of the flag is a second value, or when the flag is absent in the bit stream, encoding the second one or more symbols including the at least one context-coded symbol.

13. A decoder comprising:
one or more processors and memory storing instructions that, when executed by the one or more processors, cause the decoder to perform the method of any one of claims 1-7.

14. An encoder comprising:
one or more processors and memory storing instructions that, when executed by the one or more processors, cause the encoder to perform the method of any one of claims 8-12.

15. A non-transitory computer-readable medium comprising instructions that, when executed by one or more processors of an apparatus, cause the apparatus to perform the method of any one of claims 1-12.
